Europäisches Patentamt

European Patent Office

Office européen des brevets

(19)

(11)    EP 0 820 005 B1

(12)    EUROPEAN PATENT SPECIFICATION

(45) Date of publication and mention
of the grant of the patent:
**07.11.2001   Bulletin 2001/45**

(51) Int Cl.[7]: **G06F 7/52**

(21) Application number: **97118606.9**

(22) Date of filing: **20.08.1991**

(54) **Method and apparatus for computing floating point data**

Verfahren und Gerät zur Berechnung von Gleitkommadaten

Procédé et appareil pour la calculation avec des données en virgule flottante

(84) Designated Contracting States:
**DE FR GB NL**

(30) Priority: **24.08.1990   JP   22276390**
**30.10.1990   JP   29383690**

(43) Date of publication of application:
**21.01.1998   Bulletin 1998/04**

(62) Document number(s) of the earlier application(s) in
accordance with Art. 76 EPC:
**91113901.2 / 0 472 148**

(73) Proprietor: **MATSUSHITA ELECTRIC INDUSTRIAL
CO., LTD.**
**Kadoma-shi, Osaka-fu (JP)**

(72) Inventors:
• **Suzuki, Masato**
**Toyonaka-shi, Osaka-fu (JP)**
• **Yasutome, Mikako**
**Moriguchi-shi, Osaka-fu (JP)**

• **Tsuruta, Hideyo**
**Katano-shi Osaka-fu (JP)**

(74) Representative: **Eisenführ, Speiser & Partner**
**Martinistrasse 24**
**28195 Bremen (DE)**

(56) References cited:
**US-A- 4 590 584**

• **WASER S: "Entwicklung von
Gleitkomma-Prozessoren" ELEKTRONIK, 30
APRIL 1980, WEST GERMANY, vol. 29, no. 9,
ISSN 0013-5658, pages 50-54, XP002046756**
• **SCHIRM L IV: "A family of high speed, floating
point arithmetic chips" ICASSP 81.
PROCEEDINGS OF THE 1981 IEEE
INTERNATIONAL CONFERENCE ON
ACOUSTICS, SPEECH AND SIGNAL
PROCESSING, ATLANTA, GA, USA, 30
MARCH-1 APRIL 1981, 1981, NEW YORK, NY,
USA, IEEE, USA, pages 374-377 vol.1,
XP002046757**

**Description**

BACKGROUND OF THE INVENTION

The present invention generally relates to a method and an apparatus for computing floating point data which are used in the central processing units and so on of the digital computers, and more particularly, are adapted to effect the four fundamental rules of arithemetics computation of the floating point data, further, the four fundamental rules of arithmetics computation of the floating point data, rounding and normalizing computation in accordance with ANSI/IEEE Standard for Binary Floating Point Arithmetic P754.

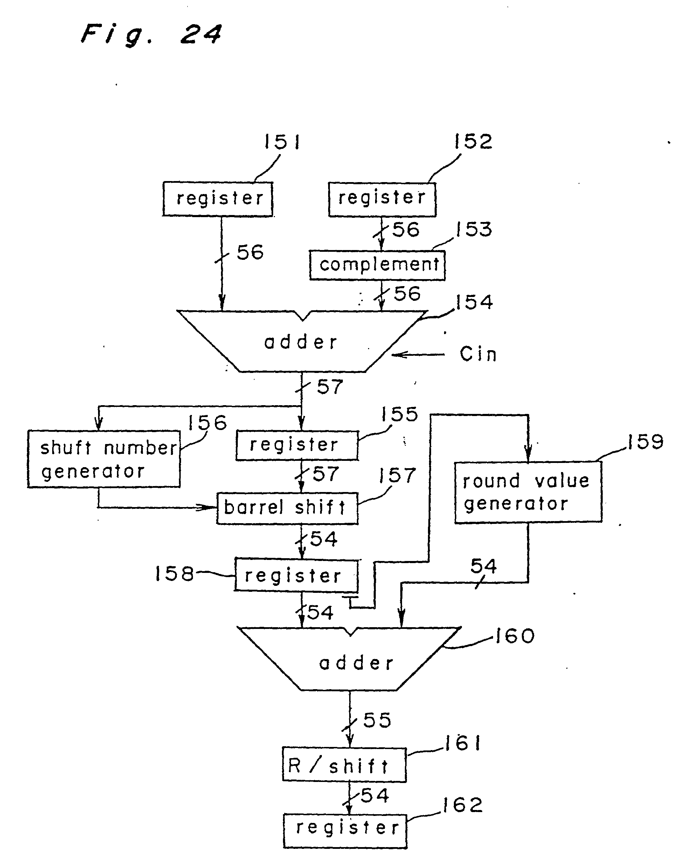

The conventional adding apparatus of the floating point data is shown in the block diagram of Fig. 24. The adding operation shows the addition which is effected with respect to the mantissa data at the subtraction time of different signs or at the addition time of the same signs. The subtraction shows the subtraction which is effected with respect to the mantissa data at the addition of the different signs or the subtraction of the same signs. The addition or subtraction is decided prior to the operation by the type of the signs of the input data and the instructions. Referring now to the same drawing, reference numeral 151 is a register wherein a mantissa which is not smaller in index from two floating-point data is accommodated, reference numeral 152 is a resister wherein a mantissa which is smaller in exponent from two floating-point data is aligned in unit to the exponent not smaller and is accommodated, reference numeral 153 is a complementer which takes 1's complement of the output of the register 152 at the subtraction time, reference numeral 154 is an adder which executes the addition with the carry input (Cin) into the least significant bit being 0 at the addition time with the outputs of the register 151 and the complementer 153 being inputs, executes the subtraction with the carry input (Cin) being 1 at the subtraction time, reference numeral 155 being a register for accommodating the output of the adder 154, reference neutral 156 is a shift number generating circuit for generating shift numbers for the normalization of the output of the adder 154, reference numeral 157 is a barrel shifter which is adapted to shift by bit number the shift number generating circuit 156 shows with respect to the output of the register 155 for the normalization, reference numeral 158 is a register for accommodating the output of the barrel shifter 157, reference numeral 159 is a round value generating circuit which is adapted to decide the existence of the round addition in accordance with the value retained in the register 158, the round mode and the round precision, to generate the round addition value with the least significant bit (L) corresponding to the round precision being 1, the other bits being 0 when rounding up by the rounding, to generate the round addion value with all the bits being 0 when rounding down by the rounding, reference numeral 160 is an adder for adding the output of the register 158 and the output of the round value generating circuit 159, reference numeral 161 is a R1 shifter for shifting by 1 bit the output of the adder 160 in the least significant bit direction (hereinafter referred to as right), reference numeral 162 is a register for accommodating the mantissa of the addition, subtraction result to be obtained by the output of the R1 shifter 161.

The conventional addition, subtraction apparatus of the floating point data constructed as constructed hereinabove will be described hereinafter in its operation.

First, a case where the augend, the minuend and the addend, the subtrahend are the basic single precision format by ANSI/IEEE Standard for Binary Floating-Point Arithmetic P754 (hereinafter referred to as single precision), and the sumor difference is also rounded in single precision.

(1) Before Processing Step Start

A mantissa which is not smaller in exponent out of the augend, the minuend and the addend, the subtrahend is accommodated in the register 151. A mantissa which is smaller in exponent out of the augend, the minuend and the addend, the subtrahend is aligned in unit to the exponent that is not smaller is accommodated in the register 152. The bits which have been taken down at the alignment are accommodated, in the register 152, collectively as a round bit (R) having the weight of $2^{-24}$ in the bit lower by one unit of the least significant bit (L) and a sticky bit (S) which is the logical or of the bits of the bit or lower having the weight of $2^{-25}$.

(2) Step 1

The complememter 153 and the adder 154 add, subtract two mantissas retained in the register 151 and the register 152 so as to accommodate the result in the register 155. At the adding time, the complementer 153 outputs, into the adder 154, the output of the register 152 as it is so as to make zero the Cin of the adder 154. At the subtracting time, the complementer 153 takes 1's complement of the output of the register 152 so as to output it into the adder 154 and make one the Cin.

(3) Step 2

The shift number generating circuit 156 generates the shift number for normalization of the output of the adder 154. The barrel shifter 157 effects the shifting of the output of the register 155 in accordance with the output of the shift number generating circuit 156 so as to effect the normalization shifting operation with respect to the computation result of the step 1. At this time, the barrel shifter 157 generates the shift results down to the least significant bit (L), the round bit (R) having the weight of the $2^{-24}$ lower by one unit of the least significant bit, a sticky bit (S) which is the logical or of the bits of the bit or lower having the weight of $2^{-25}$ and accommodates them in the register 158.

### (4) Step 3

The round value generating circuit 159 generates the round addition value with the least significant bit (L) retained in the register 158, the round bit (R), the sticky bit (S), the round mode and the round precision and the sign of the operation result. The round addition value to be generated has a value with the bit having the weight of $2^{-23}$ being 1, the other bits being 0 when the round addition signal is 1, a round value with the all the bits being made 0 when the round addition signal is 0, in accordance with the input, output relation chart shown in Fig. 11. RM, RP, RN, RZ show in order the directed rounding toward minus, the directed rounding toward plus, the rounding to nearest even in the round mode stipulated in the ANSI/IEEE Standard for Binary Floating-Point Arithmetic P754. The adder 160 adds the output of the register 158 and the output of the round value generating circuit 159. The R1 shifter 161 shifts, by one bit to right, the output of the adder 160 when the overflow has been generated in the adder 160, in the other case, accommodates the output of the adder 160 as it is in the register 162 so as to complete the processing.

A case where the augend, the minuend and the addend, the subtrahend are the basic double precision format by ANSI/IEEE Standard for Binary Floating-Point Arithmetic P754 (hereinafter referred to simply as double precision), and the sum or difference is also rounded in double precision.

### (1) Before Processing Step Start

A mantissa which is not smaller in exponent of the augend, the minuend and the addend, the subtrahend is accommodated in the register 151. A mantissa which is smaller in index out of the augend, the minuend and the addend, the subtrahend and is aligned in unit to the exponent that is not smaller, is accommodated in the register 152. The bits which have been taken down at the alignment are accommodated in the register 152 collectively as a round bit (R) having the weight of $2^{-53}$ of the bit lower by one unit of the least significant bit (L) and a sticky bit (S) which is the logical or of the bits of the bit or lower of having the weight of $2^{-54}$.

### (2) Step 1

The complementer 153 and the adder 154 add, subtract two mantissas retained in the register 151 and the register 152 so as to accommodate the result in the register 155. At the adding time, the complementer 153 outputs into the adder 154 the output of the register 152 as it is so as to make the Cin of the adder 154 zero. At the subtracting time, the complementer 153 takes 1's complement of the output of the register 152 so as to output it into the adder 154 and make one turning the Cin.

### (3) Step 2

The shift number generating circuit 156 generates the shift number for normalization of the output of the adder 154. The barrel shift 157 effects the shifting of the output of the register 155 in accordance with the output of the shift number generating circuit 156 so as to effect the normalization shifting operation with respect to the operation result of the step 1. At this time, the barrel shifter 157 generates the shift results down to the least significant bit (L), the round bit (R) having the weight of the $2^{-53}$ lower by one unit of the least significant bit, a sticky bit (S) which is the logical or of the bits of the bit or lower having the weight of $2^{-54}$ and accommodates them in the register 158.

### (4) Step 3

The round value generating circuit 159 generates the round addition value with the least significant bit (L) retained in the register 158, the round bit (R), the sticky bit (S), the round mode, the round precision and the sign of the operation result. The round addition value to be generated has a value with a bit having the weight of $2^{-52}$ being 1, the other bit being 0 when the round addition signal is 1, a round value with all the bits being 0 when the round addition signal is 0, in accordance with the input, output relation chart shown in Fig. 11. The adder 160 adds the output of the register 158 and the output of the round value generating circuit 159. The R1 shifter 161 shifts by one bit to right the output of the adder 160 when the overflow has been generated in the adder, in the other case, accommodates the output of the adder 160 as it is in the register 162 so as to complete the processing.

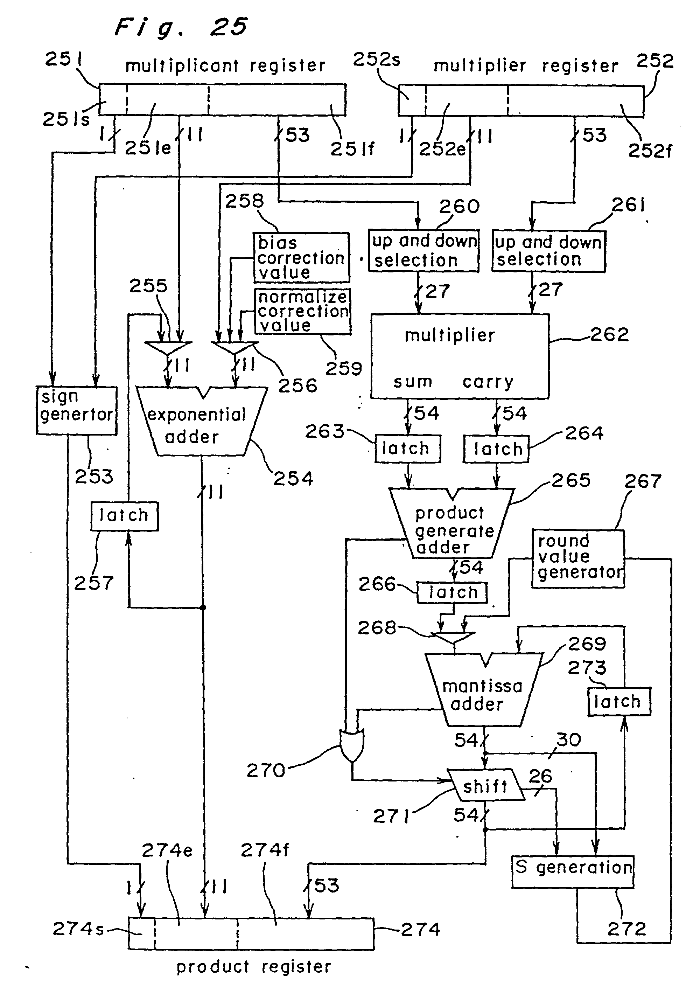

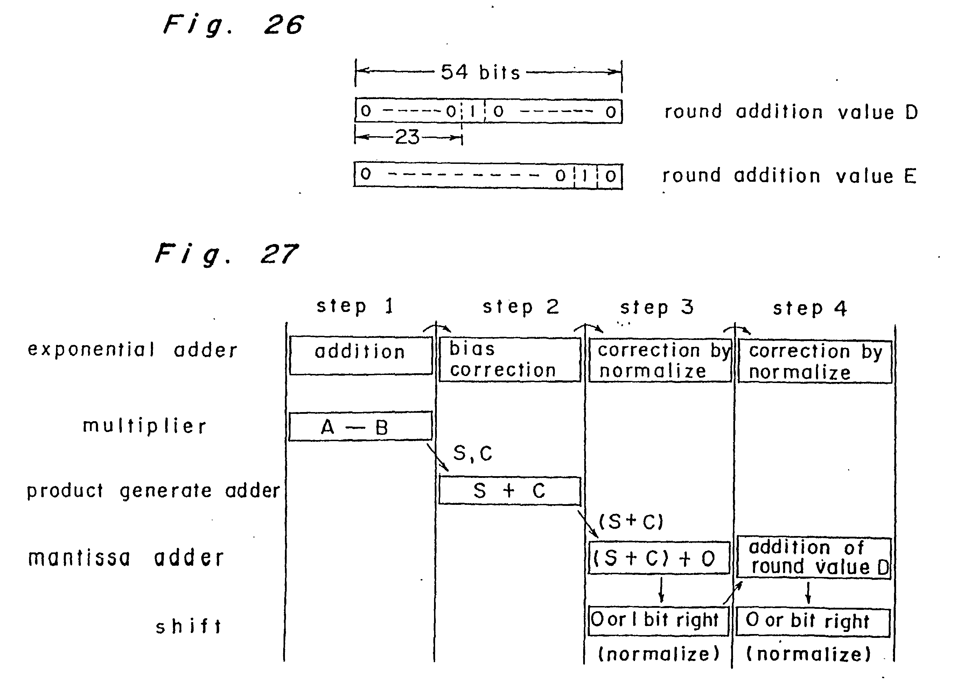

The conventional multiplication apparatus for the floating point data is shown in the block diagram of Fig. 25. In Fig. 25, reference numeral 251 is a multiplicand register for retaining the multiplicand, consisting of a sign portion 251s of one bit, an exponent portion 251e of 11 bits, a mantissa portion 251f of 53 bits. Reference numeral 252 is a multiplier register for retaining the multipliers, consisting of a sign portion 251s of 1 bit, an exponent portion 252e of 11 bit, a mantissa portion 252f of 53 bits. The most significant bits of the multiplicand register mantissa portion 251f or the multiplier register mantissa portion 252f is so-called "hidden bit" each having the weight of $2^0$, is 1 in the normalized number. Except for this bit, the multiplicand register 251 and the multiplier register 252 both conform in the double precision format. Reference numeral 253 is a sign generating circuit for reading the signs of the multiplicand and multiplier from the multiplicand register sign portion 251s and the multiplier register sign portion 252s so as to generate the sign of the product, reference numeral 254 is an exponent adder of 11 bits for reading the exponents of the multiplicand and the multiplier from the multiplicand register exponent portion 251e and the multiplier register exponent portion 252e so as to compute the exponent of the product, reference numerals 255, 256 are selectors of 11 bits for respectively selecting two inputs of the exponent adder 254, reference numeral 257 is a latch of 11 bits for retaining the output of the exponent adder 254 so as to input it into the exponent adder 254 again through the selector 255, reference numeral 258 is a bias correction value generating circuit for generating the bias (deviation) of 11 bits in a step of computing the exponent of the product, reference numeral 259 is a normalized correction value generating circuit for generating the constant of increasing by 1 the exponent through the normalization of 1 bit shift of the mantissa of the product, reference numeral 260 is a multiplicand upper, lower selecting circuit for reading the the multiplicand register mantissa portion 251f, selecting the upper 27 bits or the lower 27 bits (the most significant bit at this time is 0) so as to output it, reference numeral 261 is a multiplier upper, lower selecting circuit for reading the multiplier resister mantissa portion 252f and selecting the upper 27 bits or the lower 27 bits (the most significant bit at this time is zero) so as to output it, reference numeral 262 is a multiplying unit for multiplying the output of the multiplicand upper, lower selecting circuit 260 of 27 bits by the output of the multiplier upper, lower selecting circuit 261 of 27 bits so as to respectively output the sum of 54 bits and the carry of 54 bit, reference numerals 263, 264 are latches of 54 bits for retaining the sum output and the carry output of the multiplying unit 262, reference numeral 265 is a product generating adder of 54 bits for adding the sum output and carry output of the multiplying unit 262 retained in the latch 263 and the latch 264, reference numeral 266 is a latch of 54 bits for retaining the output of the product generating adder 265, reference numeral 267 is a round adding value generating circuit for generating the constant in the adding operation for rounding the mantissa of the product into the single precision or the double precision, reference numeral 268 is a selector of 54 bits for selecting the output of the round addition value generating circuit 267 and the value of the latch 266, reference numeral 269 is a mantissa adder of 54 bits for adding the output of the selector 268 and the value to be retained in the latch 273 to be described later, reference numeral 270 is a logical or gate for computing the logical or of the overflow from the most significant bit of the product generating adder 265 and the overflow from the most significant bit of the mantissa adder 269, reference numeral 271 is a shifter of 54 bits for shifting by 0 bit, 1 bit or 26 bits the output of the mantissa adder 269 in the least significant bit direction, reference numeral 272 is a sticky bit generating circuit for inputting the lower 30 bits of the output of the mantissa adder 269 and the shift overflow from the least significant bit of the 26 bits in the shifter 271 so as to generate the sticky bit in accordance with the single precision or double precision in the round precision, reference numeral 273 is a latch of 54 bits for retaining the output of the shifter 271, reference numeral 274 is a product register for retaining the product, consisting of a sign portion 274s of 1 bit, an exponent portion 274e of 11 bits, a mantissa portion 274f of 53 bits. The most significant bit of the product register mantissa portion 274f is also so-called "hidden bit" having the weight of $2^0$, is 1 in the normalized number. Except for this bit, the product register 274 conforms to the double precision format. Fig. 26 is a performance illustrating chart showing the constant the round addition value generating circuit 267 shown in Fig. 25 generates, a round addition value D is generated with only the 24th bit from the most significant bit being 1, the others being 0, a round addition value E is generated with only the 2nd bit from the least significant bit being 1, the others being 0.

The conventional multiplying apparatus of the floating point data constructed as described hereinabove will be described hereinafter in its operation.

First, a case where the multiplicand and the multiplier are the single precision and the product is also rounded in the single precision will be described hereinafter with the use of the operation flow chart of the single precision multiplication shown in Fig. 27. Fig. 27 shows the contents of the operation of each of the processing steps of the exponent adder 254, the multiplying unit 262, the product generating adder 265, the mantissa adder 269, the shifter 271.

(1) Before Processing Step Start

The multiplicand and the multiplier of the single precision are expanded into the double precision and are accommodated respectively into the multiplicand register 251 and the multiplier register 252. At this time, the multiplicand register exponent portion 251e and the multiplier register exponent portion 252e are both converted into the biased expression of the double precision (real exponent value = exponent value - $1023_{(10)}$), with 0 being filled in the lower 29 bits of the multiplicand register mantissa portion 251f and the multiplier register mantissa portion 252f. The latch 273 is cleared into 0. Here the $_{(10)}$ shows the decimal number expression in numerical value.

(2) Step 1

By the selector 255 and the selector 256, the exponents of the multiplicand and the multiplier are inputted from the multiplicand register exponent portion 251e and the multiplier register exponent portion 252e into the exponent adder 254 and are added so as to accommodate the addition result into the latch 257. The multiplicand upper, lower selecting circuit 260 reads, outputs the upper 27 bits of the multiplicand register mantissa portion 251f (all the effective bits of the mantissa portion of the multiplicand are included in it), the multiplier upper, lower selecting circuit 261 reads, outputs the upper 27 bits of the multiplier register mantissa portion 252f (all the effective bits of the mantissa portion of the multiplier are included in it). The multiplier 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264. At the same time, in the sign generating circuit 253, the signs of the multiplicand and the multiplier are read from the multiplicand register sign portion 251s and the multiplier register sign portion 252s so as to take the exclusive or of both, and to generate the sign of the product so as to accommodate it into the product register sign portion 724s.

(3) Step 2

As the value the latch 257 retains is the sum of the biased exponents of the multiplicand and the multiplier, the biasing is doubly applied. Therefore, -1023 (actually 2's complement expression is used) from the bias correction value generating circuit 258 is outputted. By the selector 255 and the selector 256, the value of the latch 257 and the output of the bias correction value generating circuit 258 in the exponent adder 254 are added and are accommodated again into the latch 257. The product generating adder 265 adds the sum output and the carry output of the multiplying unit 262 retained in the latch 263 and the latch 264 are added so as to accommodate the addition result into the latch 266.

(4) Step 3

The mantissa adder 269 adds the value retained in the latch 266 and the value 0 of the latch 273 by the selector 268. When the overflow from the product generating adder 265 exists at the step 2, namely, when the product of the mantissa is 2 or more, the shifter 271 shifts (at this time, 1 is buried at the most significant bit), in the 1 bit least significant bit direction, the output from the mantissa adder 269 for normalization so as to accommodate the result into the latch 273. By the selector 255 and the selector 256, the exponent adder 254 adds the value of the latch 257 and the constant 1 the normalized correction value generating circuit 259 outputs so as to accommodate it again into the latch 257. When the overflow from the product generating adder 265 at the step 2 does not exist, namely, when the product of the mantissa portion is 1 or more, less than 2, the shifter 271 accommodate it as it is into the latch 273 without shifting of the output from the mantissa adder 269, because the normalization is not required to effect. By the selector 255 and the selector 256, the exponent adder 254 outputs the value of the latch 257 as it is and accommodates it again into the latch 257. The sticky bit generating circuit 272 takes the logical or of the lower 30 bits of the output of the mantissa adder 269 so as to make 1 the sticky bit output if the bit of the value 1 exists in the 30 bits, makes zero the sticky bit output if the full bit of the 30 bits is 0 at value.

(5) Step 4

Round addition value generating circuit 267 decides the requirement of the round addition by the rounding mode, the value of the 25th bit from the most significant bit which is a round bit of the value retained in the latch 273, the sign of the product the sign generating circuit 253 outputs (necessary when the round mode is a round toward plus mode and a round toward minus mode) and the value of the sticky bit the stickyy bit generating circuit 272 outputs, outputs the round addition value D shown in Fig. 26 when the round addition is necessary, and outputs 0 when the round addition is not necessary. By the selector 268, the mantissa adder 269 adds the round addition value the round addition value generating circuit 267 outputs, and a value retained in the latch 273 retains. At this time, when the overflow is caused in the mantissa adder 269, namely, the mantissa is 2 or more by rounding up, the shifter 271 shifts by 1 bit in the least significant bit direction the output from the mantissa adder 269 again for normalization (at this time, 1 is buried at the most significant bit). By the the selector 255 and the selector 256, the exponent adder 254 adds the value of the latch 257 and the constant 1 the normalized correction value generating circuit 259. When the overflowing is not caused in the mantissa adder 269, namely, the mantissa value is 1 or more, less than 2, the shifter 271 outputs the output, as it is, from the mantissa adder 269 without shifting as it is not necessary to effect the normalization. By the selector 255 and the selector 256, the exponent adder 254 also outputs the value, as it is, of the latch 257. In any case, the output of the exponent adder 254 is accommodated into the product register exponent portion 274e, the lower 29 bits of the 53 bits except for the least significant bit of the output of the shifter 271 are masked into 0, are accommodated in the product register mantissa portion 274f so as to complete the processing.

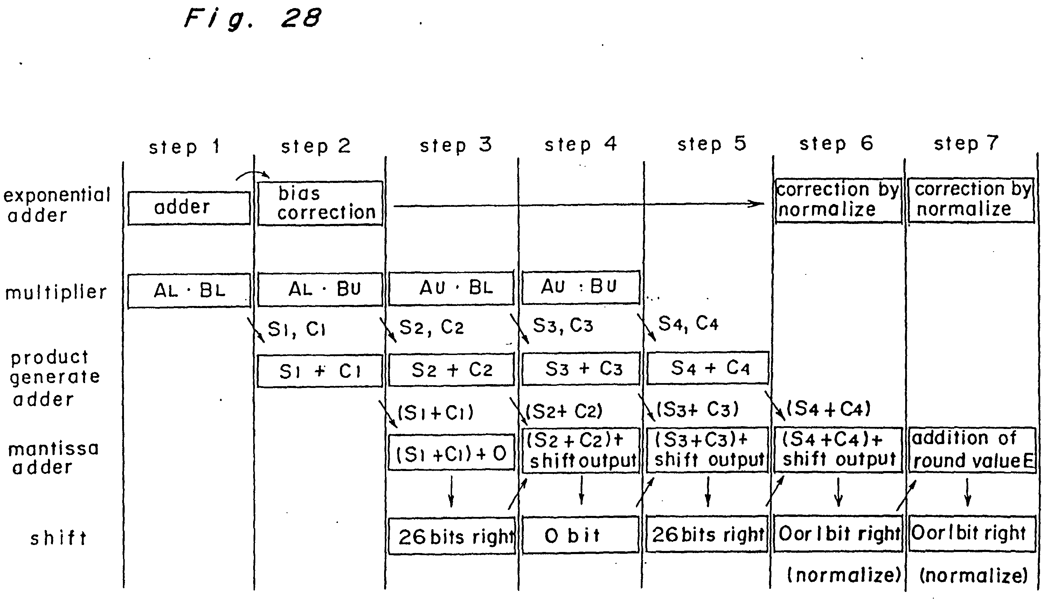

Then, a case where the multiplicand and the multiplier are the double precision and the product is also rounded in the double precision will be described with the use of the operation flow chart of the double precision multiplication shown in Fig. 28. Fig. 28 also shows the contents of the operations of each processing step of the exponent adder 254, the multipling unit 262, the product generating adder 265, the mantissa adder 269, the shifter 271.

## (1) Before Processing Step Start

The multiplicand and the multiplier in double precision are respectively accommodated in the multiplicand register 251 and the multiplier register 252. At this time, the multiplicand register exponent portion 251e and the multiplier register exponent portion 252e are both converted into the biased expression of the double precision (real exponent value = exponent value $-1023_{(10)}$). The latch 273 is cleared into 0.

## (2) Step 1

By the selector 255 and the selector 256, the exponents of the multiplicand and the multiplier are inputted from the multiplicand register exponent portion 251e and the multiplier register exponent portion 252e into the exponent adder 254 and are added so as to accommodate the addition result into the latch 257. The multiplicand upper, lower selecting circuit 260 reads, outputs the lower 27 bits (the most significant bit is 0) of the multiplicand register mantissa portion 251f, the multiplier upper, lower selecting circuit 261 reads, outputs the lower 27 bits (the most significant bit is 0) of the multiplier register mantissa portion 252f. The multipling unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264. At the same time, in the sign generating circuit 253, the signs of the multiplicand and the multiplier are read from the multiplicand register sign portion 251s and the multiplier register sign portion 252s to take the exclusive or of both, and to generate the sign of the product so as to accommodate it into the product register sign portion 724s.

## (3) Step 2

As the value the latch 257 retains is the sum of the biased exponents of the multiplicand and the multiplier, the biasing is doubly applied. Therefore, -1023 (actually 2's complement expression is used) from the bias correction value generating circuit 258 is outputted. By the selector 255 and the selector 256, the value of the latch 257 and the output of the bias correction value generating circuit 258 in the exponent adder 254 are added and are accommodated again into the latch 257. The product generating adder 265 adds the sum output and the carry output of the multiplying unit 262 retained in the latch 263 and the latch 264 so as to accommodate the addition results into the latch 266. The value accommodated in the latch 266 is the least significant partial product. At the same time, the multiplicand upper, lower selecting circuit 260 reads, outputs the lower 27 bits (the most significant bit is 0) of the multiplicand register mantissa portion 251f. The multiplier upper, lower selecting circuit 261 reads, outputs the upper 27 bits of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264.

## (4) Step 3

The mantissa adder 269 adds the value retained in the latch 266 and the value 0 of the latch 273 by the selector 268. The shifter 271 shifts by 26 bits in the least significant bit direction the data of 55 bits which consists of 54 bits of the addition result in the mantissa adder 269 and 1 bit being added onto the most significant bit side, where the logical or of the overflow from the product generating adder 265 at the step 2, and the overflow from the mantissa adder 269 at the step 3 was taken in the "or" gate 270, so as to accommodate the result into the altch 273. The product generating adder 265 adds the sum output and the carry output of the multiplying unit 262 retained in the latch 263 and the latch 264 so as to accommodate the addition result. The value accommodated in the latch 266 is a first intermediate partial product. At the same time, the multiplicand upper, lower selecting circuit 260 reads, outputs the upper 27 bits of the multiplicand register mantissa portion 252f, and the multiplier upper, lower selecting circuit 261 reads, outputs the lower 27 bits (the most significant bit is 0) of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264.

## (5) Step 4

The mantissa adder 269 adds the value retained in the latch 266 and the output of the shifter 271 retained in the latch 273 by the selector 268. The shifter 271 outputs, without shifting, 54 bits of the addition result, as it is, in the mantissa adder 269 so as to accommodate it in the latch 273. The product generating adder 265 adds the sum output of the multiplying unit 262 retained in the latch 263 and the latch 264, and the carry output so as to accommodate the addition result. The value of accommodated in the latch 266 is a second intermediate partial product. At the same time, the multiplicand upper, lower selecting circuit 260 reads, outputs the upper 27 bits of the multiplicand register mantissa portion 251f, the multiplier upper, lower selecting circuit 261 reads, outputs the upper 27 bits of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively in the latch 263 and the latch 264.

(6) Step 5

The mantissa adder 269 adds the value retained in the latch 266 and the output of the shifter 27I retained in the latch 273 by the selector 268. The shifter 271 shifts by 26 bits in the least significant bit direction the data of 55 bits, which consists of 54 bits of the addition result in the mantissa adder 269 and 1 bit being added onto the most significant bit side, where the logical or of the overflow from the product generating adder 265 at the step 4 and the overflow from the mantissa adder 269 at the step 5 is taken in the "or" gate 270, so as to accommodate the result into the altch 273. The product generating adder 265 adds the the sum output and carry output of the multiplying unit 262 retained in the latch 263 and the latch 264 so as to accommodate the addition result. The value accommodated in the latch 266 is the most significant partial product.

(7) Step 6

The mantissa adder 269 adds the value retained in the latch 266 and the output of the shift 271 retained in the latch 273 by the selector 268. When the logical or of the overflow from the product generating adder 265 at the step 5 and the overflow from the mantissa adder 269 at the step 6 being taken at the logical or gate 270 are 1, namely, the product of the mantissa portion is 2 or more, the shifter 271 shifts the output from the mantissa adder 269 (at this time, 1 is buried in the most significant bit) by 1 bit in the least significant bit direction so as to accommodate the result in the latch 273. The exponent adder 254 adds the value of the latch 257 and the constant 1 the normalized correction value generating circuit 259 outputs by the selector 255 and the elector 256 so as to accommodate it again into the latch 257. When the value with the logical or being taken in the logical or gate 270 is 0, namely, the product of the mantissa portion is 1 or more, less than 2, the output from the mantissa adder 269 is accommodated as it is into the latch 273 without shifting as the normalization is not necessary to be effected. The exponent adder 254 outputs the value of the latch 257 as it is by the selector 255 and the selector 256 so as to accommodate it again into the latch 257. The sticky bit generating circuit 272 takes the logical or of 52 bits with the shift overflow from the least significant bit of 26 bits in the shifter 271 at the step 3 and the shift overflow from the least significant bit of 26 bits in the shifter 271 at the step 5 being combined in it. The sticky bit output is made 1 if a bit of 1 in value exists in the 52 bits, and the sticky bit output is made 0 if all the bits of 52 bits are 0 in value.

(8) Step 7

The round addition value generating circuit 267 decides the requirement by the rounding mode, the value of the least significant bit which is the round bit of the value retained in the latch 273, the sign of the product the sign generating circuit 253 outputs (necessary when the round mode is a round toward plus mode and a round toward minus mode) and the value of the sticky bit the sticky bit generating circuit 272 outputs, outputs the round addition value E shown in Fig. 26 when the round adition is necesary, and ouputs 0 when the round addition is not necessary. By the selector 268, the mantissa 269 adds the round addition value the round addition value generating circuit 267 outputs by the selector 268, and the value the latch 273 retains. At this time, when the overflow is caused in the mantissa adder 269, namely, the mantissa is 2 or more by the rounding up, the shifter 271 shifts by 1 bit in the least significant bit direction the output from the mantissa adder 269 again for normalization (at this time, 1 is buried at the most significant bit). By the selector 255 and the selector 256, the exponent adder 254 adds the value of the latch 257 and the constant 1 the normalized correction value generating circuit 259. When the overflowing is not caused in the mantissa adder 269, namely, the mantissa is 1 or more, less than 2, the shifter 1 outputs the value, as it is, the output from the mantissa adder 269 without shifting, as it is not necessary to effect the normalization. By the selector 255 and the selector 256, the exponent adder 254 also outputs the value, as it is, of the latch 257. In any case, the output of the exponent adder 254 is accommodated into the product register exponent portion 274e, the 53 bits, except for the least significant bit of the output of the shifter 271, is accommodated in the product register mantissa portion 274f so as to complete the processing.

Also, in the division conventional apparatus of the floating point data, at first, the value of the exponent portion of the divisor is subtracted from the value of the exponent portion of the dividend so as to obtain the exponent portion of a quotient. As the subtraction values are the difference between the biased exponents, the bias is offset. Therefore, the bias value is added to the subtraction value so as to generate the exponent portion of the quotient correctly biased.

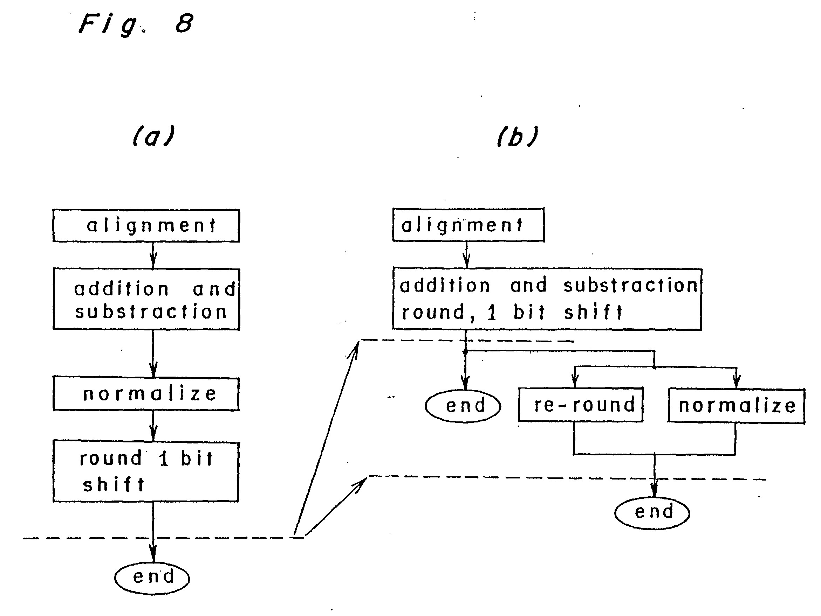

But in the conventional addition and subtraction apparatus of the floating point data, the position of the least significant bit (L) for adding the round addition value is fixed for the first time after the normalization shift by the barrel shifter 157, not fixed with respect to the input, output in the adder 154, thus normally resulting in the flowing of the processing of addition or subtraction, normalization, rounding. Therefore, the addition and subtraction of two mantissas and the addition of the round addition value are required to be respectively effected independently. At least four steps of processing steps in number including the alignment are required as shown in Fig. 8 (a). Also, as the addition, subtraction of the former are effected by the adder 154, and the addition of the latter is effected by the adder 160, two adders are required. A problem point of increasing the number of the hardwares is provided.

In the conventional multiplication apparatus of the floating point data, the addition of the sum and the carry from the multiplying unit 262, the addition for accumulating the partial products, and the addition of the round addition values are respectively effected independently, four steps are required in the number of the processing steps in the case of the single precision multiplication, and seven steps in the case of the double precision multiplication. Also, the addition of one former is effected with the product generating adder 265, and the addition of the two latters are effected by the mantissa adder 269, thus requiring two adders, with a problem that the hardwares are increased in number.

Also, in the conventional division apparatus of the floating point data, first, the subtraction value for simply subtracting the exponent portion of the dividend and the exponent portion of the divisor is offset in bias, later the step of correcting the bias becomes necessary, with a problem that the hardware for the bias correction increases.

The disclosure Elektronik, Vol.29, No 9, April 1980, pages 50-54 describes multiplication of two floating point data having exponents biased by 128. In this document, of the most significant bit of one of the exponents is inverted to input the value exponent-128 to one of the inputs of the exponent adder. The result of addition is a correctly biased by 128 exponent.

## SUMMARY OF THE INVENTION

In accomplishing the above described object, a first invention as defined in independent claim 1 concerns a multiplying method of the floating point data which is adapted to effect an operation of obtaining a larger value by 1 to a value with an exponent portion of the multiplicand of the floating point format having the biased exponent portion and the exponent portion of the multiplier of the same floating point format being added, inverting the most significant bit of the above described computation result after the above described computation.

floating point data which is adapted to obtain the product divided between the sum and the carry by multiplying the

A second aspect of the invention as specified in independent 3 concerns a multiplying apparatus of the floating point data comprising an exponent adding means for obtaining the value where 1 is added to the sum of the exponent portions of the multiplicand and the multiplier of the floating point data having the biased exponent portion, the most significant bit correcting means for inverting the most significant bit of the output of the above described exponent adding means.

A further object of the present invention is to provide a method and an apparatus for dividing the floating point data which does not require the steps of correcting the bias of the exponent portion, is less in hardware as compared with the dividing apparatus of the conventional floating point data.

In accomplishing these and other objects, a third aspect of the invention as specified in independent claim 2 concerns a method of dividing the floating point data for effecting the computation of obtaining the value which is smaller by 1 than the value subtracted the exponent portion of the divisor of the floating point data with biased exponent from the exponent portion of the dividend of the same floating point data so as to invert the most significant bit of the above described computation results after the above described computing operation.

A fourth aspect of the invention as specified in independent claim 5 concerns a division apparatus of the floating point data comprising an exponent subtracting means for obtaining a value smaller by 1 than the value where the exponent portion of the divisor of the floating point data with biased exponent is reduced from the exponent portion of the dividend of the same floating point data, a most significant bit correcting means for inverting the most significant bit of the output of the above described exponent subtraction means.

Further embodiments of the invention are specified in the appended dependent claims.

## BRIEF DESCRIPTION OF THE DRAWING

These and other objects and features of the present invention will become apparent from the following description taken in conjunction with the preferred embodiment thereof with reference to the accompanying drawings, in which;

Fig. 1 is a block diagram of an addition subtraction apparatus of floating point data;
Fig. 2 is a block diagram of an addition subtraction apparatus of floating point data;
Fig. 3 is a control relation chart of a round correction repeating control circuit 109 at rounding to latest even mode of the addition, subtraction apparatus of the floating point data;
Fig. 4, Fig. 5, Fig. 6 are control relation charts of the round correction repeating control circuit 109 in the directed rounding toward plus mode or the directed rounding toward minus mode of the addition, subtraction apparatus of the floating point data;
Fig. 7 is a control relation chart of the carry control apparatus 115 of the addition, subtraction of the floating point data;
Fig. 8 is a processing flow chart of the conventional addition, subtraction apparatus of the floating point data and the addition, subtraction apparatus of the floating point data;

Fig. 9 is an input, output relation chart of the round value generating circuit 106 of the addition, subtracting apparatus of the floating point data;

Fig. 10 is the sign and operation relation chart of operation of the adder and the method of deciding the sign of the computing result of the addition, subtraction apparatus of the floating point data;

Fig. 11 is an illustrating chart showing the existence, absence of the round addition of the conventional addition, subtraction apparatus of the floating point data and the addition, subtraction apparatus of the floating point data;

Fig. 12 is a principle chart of the carry generation at the round addition time at the rounding to nearest mode, the positive directed rounding toward plus mode and directed rounding toward minus mode of the addition, subtraction apparatus of the floating point data;

Fig. 13 is an embodiment view of the addition, subtraction which becomes the principle of the addition, subtraction apparatus of the floating point data;

Fig. 14 is a block diagram of the multiplying apparatus of the floating point data incorporating a first embodiment of the present invention;

Fig. 15 is an inner block diagram of the multiplicand upper, lower selecting circuit 212 and the multiplier upper, lower selecting circuit 213 in the embodiment;

Fig. 16 is an operation illustrating view of the round addition value generating circuit 217 in the embodiment;

Fig. 17 is a control relation chart of the mantissa correction control circuit 224 in the embodiment;

Fig. 18 is an operation flow chart of the single precision multiplication in the same embodiment;

Fig. 19 is an embodiment view of the addition and shift at the single precision multiplication time in the embodiment;

Fig. 20 is an operation flow chart of the double precision multiplication in the same embodiment;

Fig. 21 is an embodiment view of the addition and the shift at the double precision multiplication time in the embodiment;

Fig. 22 is a block diagram of the division apparatus of the floating point data incorporating a second embodiment of the present invention;

Fig. 23 is an operation flow chart of the division in the same embodiment;

Fig. 24 is a block diagram of the addition, subtraction apparatus of the conventional floating point data;

Fig. 25 is a block diagram of the conventional multiplying apparatus of the floating point data;

Fig. 26 is an operation illustrating view of the round addition value generating circuit 267 in the conventional multiplying apparatus;

Fig. 27 is an operation flow chart of the single precision multiplication in the conventional multiplying apparatus, and

Fig. 28 is an operation flow chart of the double precision multiplication in the conventional multiplying apparatus.

## DETAILED DESCRIPTION OF THE INVENTION

Before the description of the present invention proceeds, it is to be noted that like parts are designated by like reference numerals throughout the accompanying drawings.

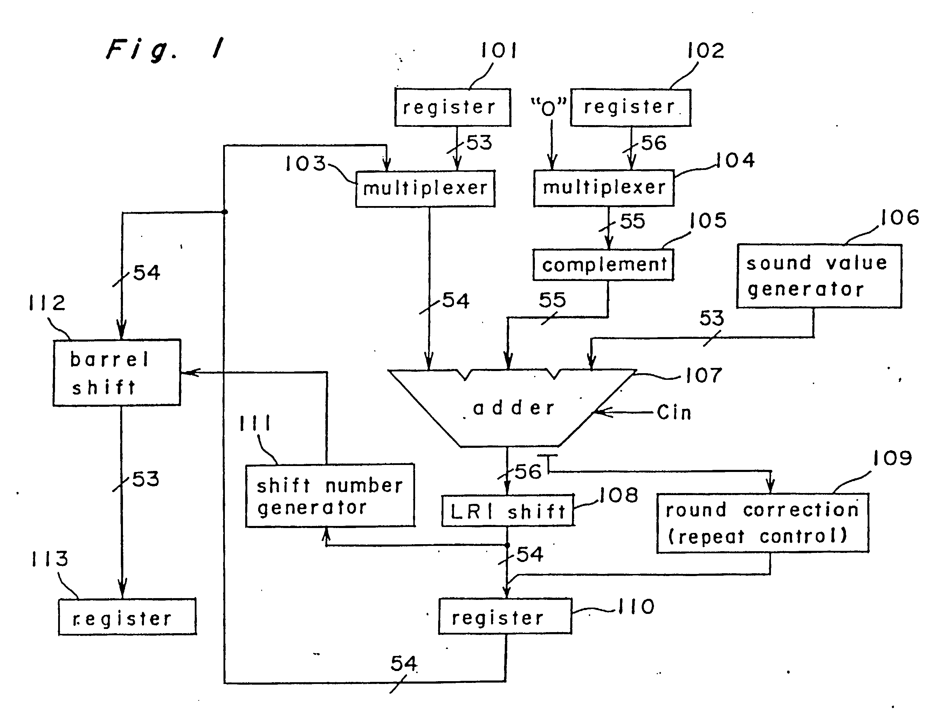

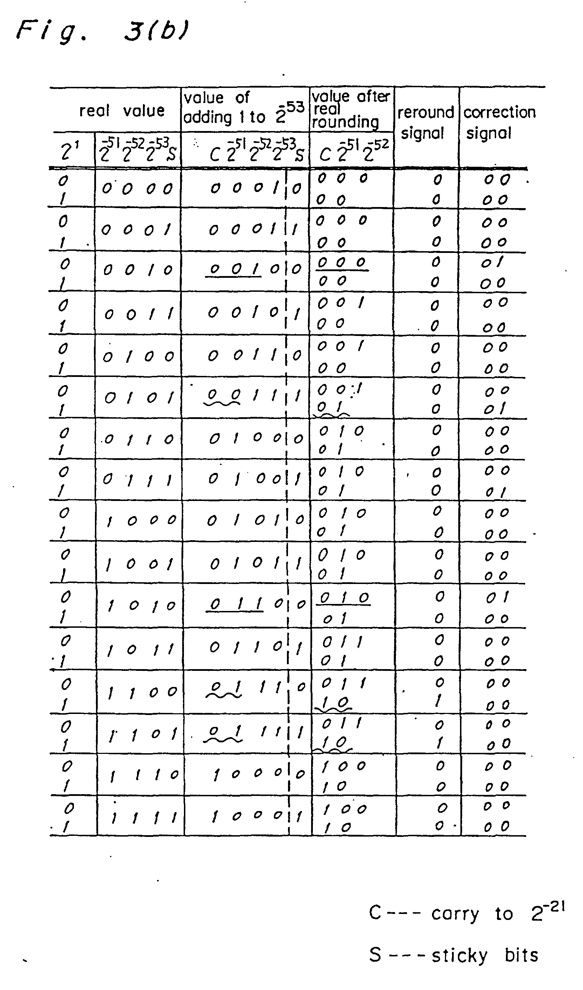

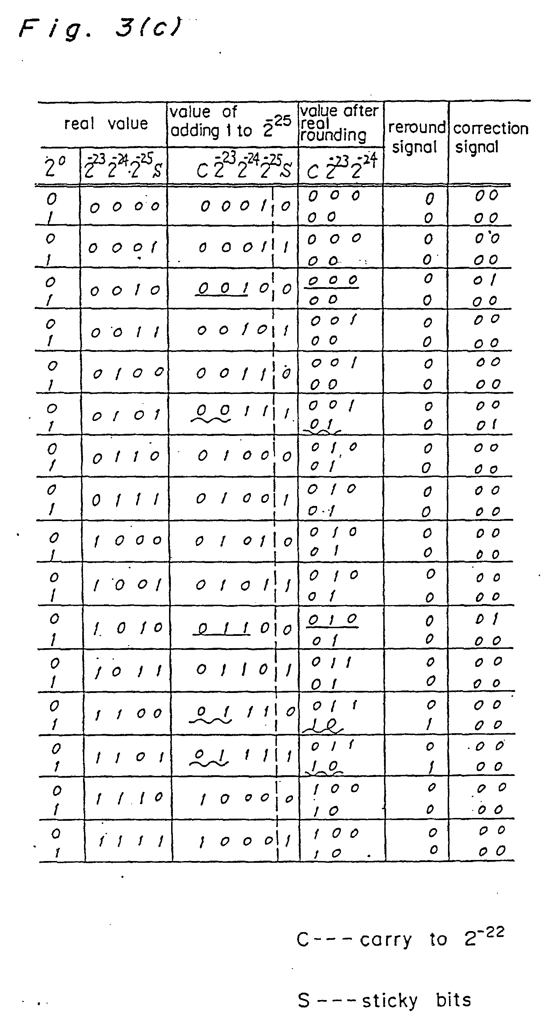

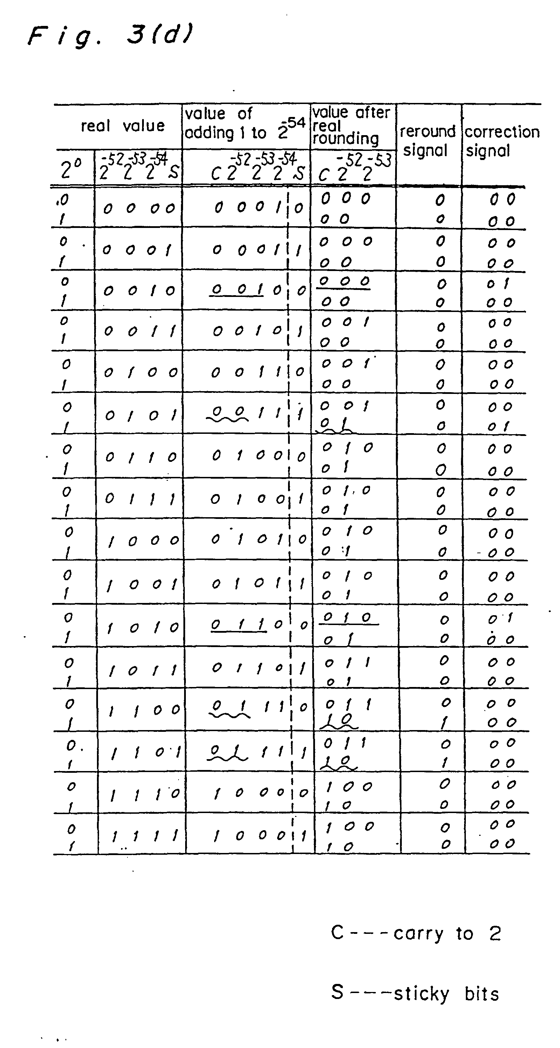

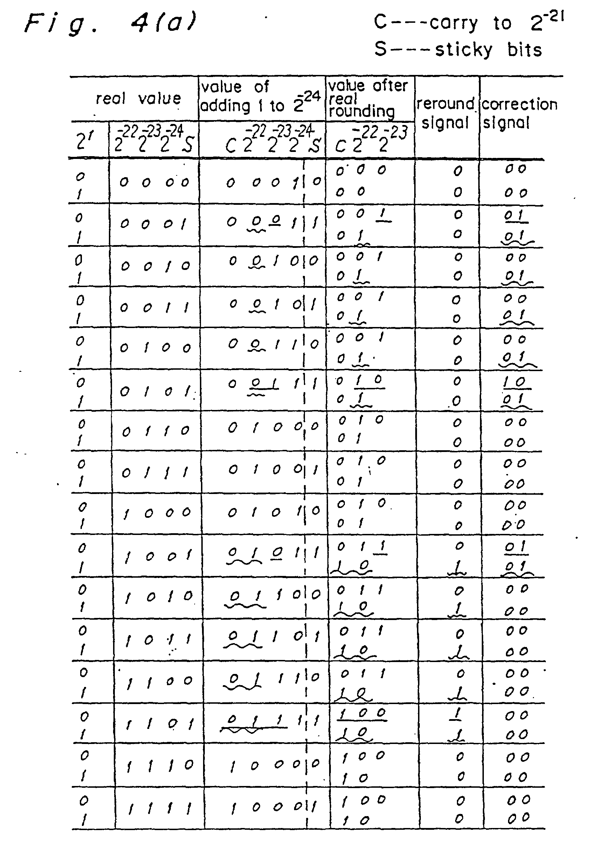

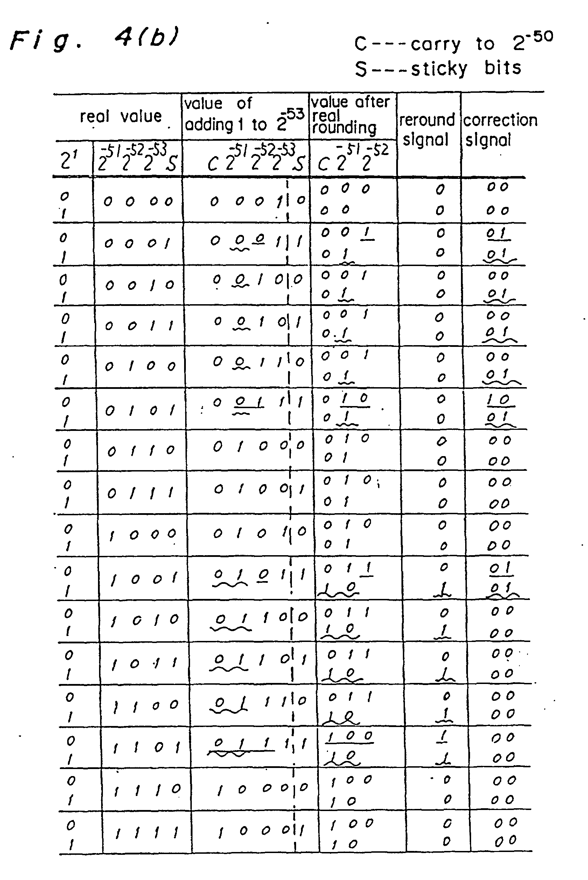

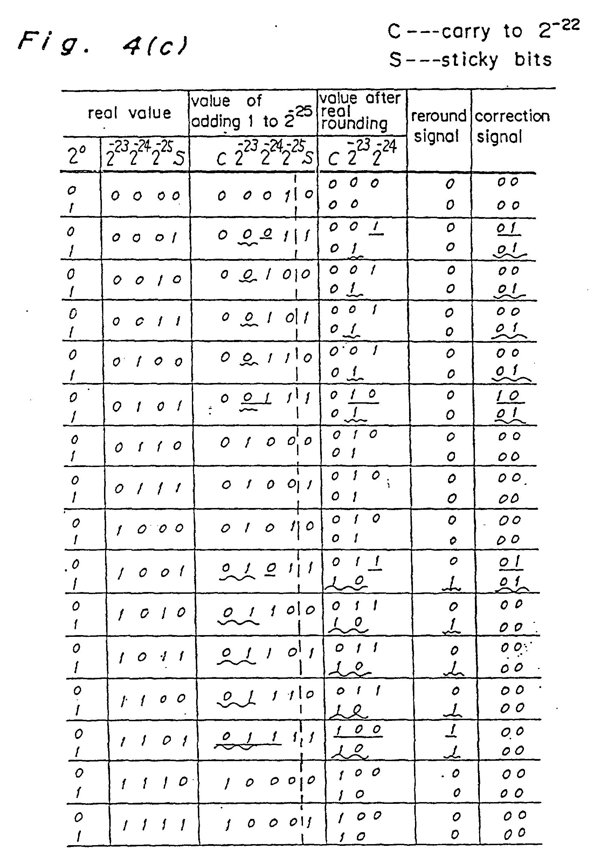

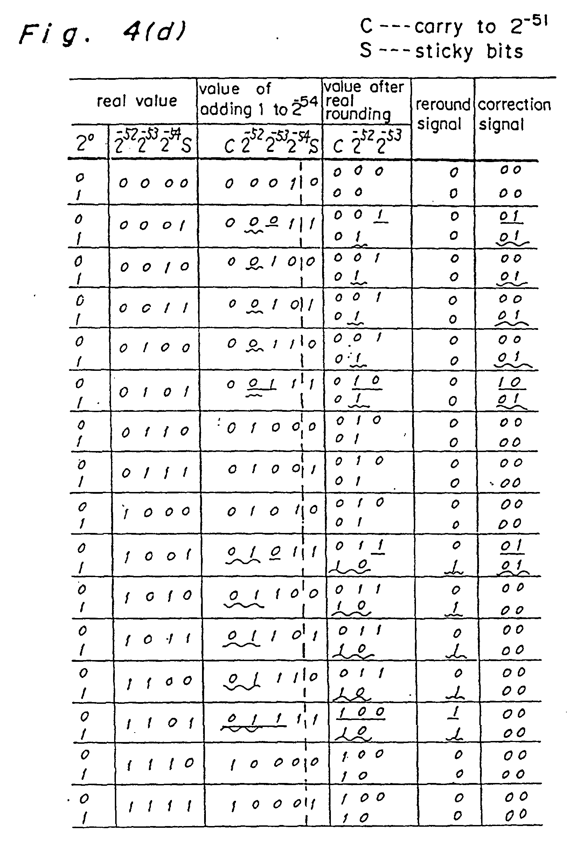

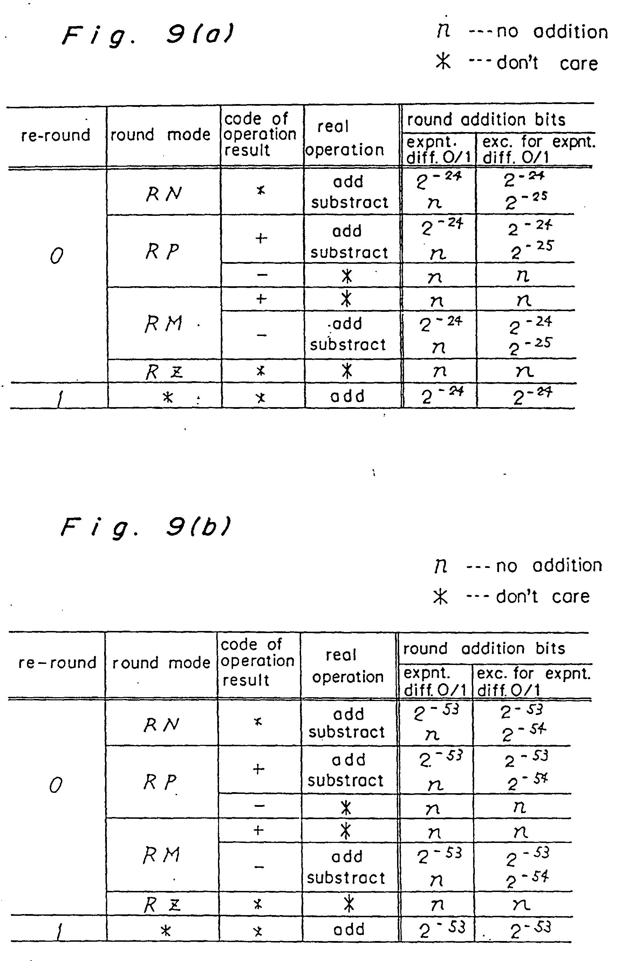

Fig. 1 shows a block diagram of the addition, subtraction apparatus of the floating point data. In Fig. 1, reference numeral 101 is a resister for accommodating a mantissa which is not smaller in exponent out of two floating point data, reference numeral 102 is a register for accommodating the mantissa, smaller in the exponent, aligned to exponent not smaller from two floating point data, reference numeral 103 is a multiplexor for selecting the register 110 to be described later when the round correction repeating control circuit 109 to be described later has instructed the insertion of the new processing step and the register 101 at the normal computing time except for above, reference numeral 104 is a multiplexor for selecting the constant 0 when the round correction repeating control circuit 109 to be described later has instructed the insertion of the new processing step and the register 102 at the normal computing time except for above,, reference numeral 105 is a complementer for taking 1's complement of the output of the multiplexor 104 at the subtracting time, reference numeral 106 is a round value generating circuit for deciding the position of the round addition in accordance with the exponent difference of the two floating point data, the operation type and the round mode so as to generate the data with the round added bit being 1 and the other bits being 0, reference numeral 107 is an adder which is adapted to simultaneously execute the temporary round and operation by the addition of the output of the multiplexor 103, the output of the complementer 105 and the output of the round value generating circuit 106 with the carry input (Cin) being 0 at the addition time, the carry input (Cin) being 1 at the subtraction operation time, reference numeral 108 is a LR1 shifter which shifts by 1 bit the output of the adder , 107 in the least significant bit direction (hereinafter referred to as right) when the bit having the weight of $2^1$ of the output of the adder 107 is 1, shifts by 1 bit the output of the adder 107 in the most significant bit direction (hereinafter referred to as left) when the bit having the weight of $2^1$ and the bit having the weight of $2^0$ are both 0, and at the time except for them, outputs the output, as it is, of the adder 107, reference numeral 109 is a round correction repeating control circuit which judges whether or not the round effected by the adder 107 is correct and instructs the accommodation of the corrected value in the register 110 to be described later and the completion of the processing, when the correct round result may be obtained only by the correction of the least significant bit or the least significant bit and one upper bit, and instructs the insertion of the processing when the readdition of the round value is required to be effected so as to obtain the correct round results, reference numeral 110 is a register for accommodating the output of the LR1 shifter 108, reference numeral 111 is a shift number generating circuit for generating the shift number for normalizing the value retained in the register 110, reference numeral 112 is a barrel shifter which is adapted to effect an shifting operation by bit number the shift number generating circuit 111 shows with respect to the output of the register 110 for the normalization, reference numeral 113 is a register for accommodating the output of the barrel shifter 112. Fig. 3 is a control relation chart of the round correction repetitive control circuit 109 shown in Fig. 1 when the round mode is the rounding to nearest even mode. When the addition of the two floating point data of the same sign or the subtraction of two floating point data of the different sign (hereinafter referred to as mantissa addition) are effected, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of outputs of the adder 107 and the sticky bit S which is the logical or of the bits of the bits having the weight of $2^{-25}$, or lower as shown in Fig. 3 (a), the requirement of the bit correction of the output of the adder 107 and the requirement of the readdition of the round addition value are determined from bits having the weights of $2^1$, $2^{-51}$. $2^{-52}$, $2^{-53}$ of the output of the adder 107 and the sticky bit S which is the ligical or of the bits, having the weight of $2^{-54}$, or lower as shown in Fig. 3 (b) when the mantissa addition is carried out and the round precision are the double precision, the requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical or of bits, having the weight of $2^{-26}$, or lower as shown in Fig. 3, (c) when the subtraction of two floating point data of the same sign or the addition of two floating point data of the different sign (hereinafter referred to as mantissa subtraction) are carried out, with the rounding precision being the single precision, the requirement of the bit correction of the output of the adder 107 and the requirement of the readdition of the round addition value are determined from bits having the weights of $2^0$, $2^{-52}$, $2^{-53}$, $2^{-54}$ of the adder 107 and the sticky bit S which is the logical or of the bits, having the weight of $2^{-55}$, or lower as shown in Fig. 3 (d) when the mantissa subtraction is executed, with the round precision being the double precision. Fig. 4 is a control relation chart of a round correction repetition control circuit 109 shown in Fig. 1 when the round mode is the directed rounding toward plus mode, with the sign of the computation result being positive. When the two the mantissa addition is executed, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of output of the adder 107 and the sticky bit S which is the logical or of the bit of the bits, having the weight $2^{-25}$, or lower as shown in Fig. 4 (a), the requirement of the bit correction of the output of the adder 107 and the requirement of the readdition of the round addition value are determined from bits having the weights of $2^1$, $2^{-51}$, $2^{-52}$, $2^{-53}$ of the output of the adder 107 and the sticky bit S which is the logical or of the bits, having the weight of $2^{-54}$, or lower as shown in Fig. 4 (b) when the mantissa addition is carried out and the round precision is the double precision, the requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical or of the bits, having the weight of $2^{-26}$, or lower as shown in Fig. 4, (c) when the mantissa subtraction) is executed, with the round precision being the single precision, the requirement of the bit correction of the output of the adder 107 and the requirement of the readdition of the round addition value are determined from bits having the weights of $2^0$, $2^{-52}$, $2^{-53}$, $2^{-54}$ of the output of the adder 107 and the sticky bit S which is the logical or of the bits, having the weight of $2^{-55}$, or lower as shown in Fig. 4 (d) when the mantissa subtraction is executed, with the round precision being the double precision. Fig. 9 is an input, output relation chart of a round value generating circuit 106 shown in Fig. 1, and determines the round addition value in accordance with the round mode, the sign of the computation result, the type of the operation, whether or not the step is round readdition. The round value generating circuit 106 generates the round addition value with the value of the weight bit the round addition bit shows being 1, with the others being 0 in accordance with Fig. 9 (a) when the round precision is the single precision, and Fig. 9 (b) when the round precision is the double precision.

The addition, subtraction apparatus of the floating point data in the present embodiment constructed as described hereinabove will be described in its principle. Here a case where the round precision is the single precision is shown by way of example, with the double precision being based on the same thinking way.

Assume that the mantissa portions of the augend, minuend and the addend, subtrahend are f1, f2 and the exponent portions of the augend, minuend and the addend, subtrahend are e1, e2 (wherein e1 ≤ e2), and the mantissa portion A of the sum at the mantissa addition time is expressed by

$$A = f1 + 2^{-(e1-e2)}f2$$

When the range of the value of the normalized mantissa

$$2^0 \leq f1 \leq 2^1 - 2^{-23} \qquad 2^0 \leq f2 \leq 2^1 - 2^{-23}$$

is considered,

$$2^0 \leq A \leq 2^1 - 2^{-23} + 2^1 - 2^{-23} = 2^2 - 2^{-22}$$

$$2^0 \leq A < 2^1 + 2^0 + 2^{-1} + .... + 2^{-22}$$

$$1.\, 0_{(2)} < A < 11.\, 1111 \,....\, 11_{(2)}$$

The shift number necessary for the normalization after the mantissa addition becomes 1 bit to right even at the greatest. $_{(2)}$ shows the binary digit expression in numerical value. Also, the mantissa portion A of the difference at the mantissa subtraction time is shown by

$$A = f1 - 2^{-(e1-e2)}f2$$

Here by the value of e1 - e2,

(1) time of e1 - e2 = 0

$$0 \leq A \leq 2^1 - 2^{-23} = 2^0 + 2^{-1} + .... + 2^{-22} + 2^{-23}$$

$$0 \leq A \leq 1.1111 \,....\, 11_{(2)}$$

The shift number necessary for the normalization after the mantissa subtraction becomes 0 bit at the minimum and 23 bits to left at the maximum.

(2) time of e1 - e2 = 1

$$2^0 - 2^{-1} \times (2^1 - 2^{-23}) \leq A \leq 2^1 - 2^{-23} - 2^{-1} \times 2^0.$$

$$0.000...001_{(2)} \leq A \leq 1.01111...111_{(2)}$$

The shift number necessary for the normalization after the mantissa retraction becomes 0 bit at the minimum and 24 bits to left at maximum.

(3) time of e1 - e2 = 2

$$2^0 - 2^{-2} \times (2^1 - 2^{-23}) \leq A \leq 2^1 - 2^{-23} - 2^{-2} \times 2^0$$

$$0.100....001_{(2)} \leq A \leq 1.10111....111_{(2)}$$

The shift number necessary for normalization after the mantissa subtraction becomes 1 bit to left at maximum.

(4) time of e1 - e2 = 3

$$2^0 - 2^{-3} \times (2^1 - 2^{-23}) \leq A \leq 2^1 - 2^{-23} - 2^{-3} \times 2^0$$

$$0.110.....001_{(2)} \leq A \leq 1.11011....111_{(2)}$$

The shift number necessary for normalization after the mantissa subtraction becomes 1 bit to left at maximum. Likewise, as at the time of e1 - e2≥4, the shift number necessary for normalization after the mantissa subtraction becomes 1 bit to left at maximum, at the e1 - e2≥2 the shift number necessary for normalization after the mantissa subtraction becomes 1 bit to left even at maximum.

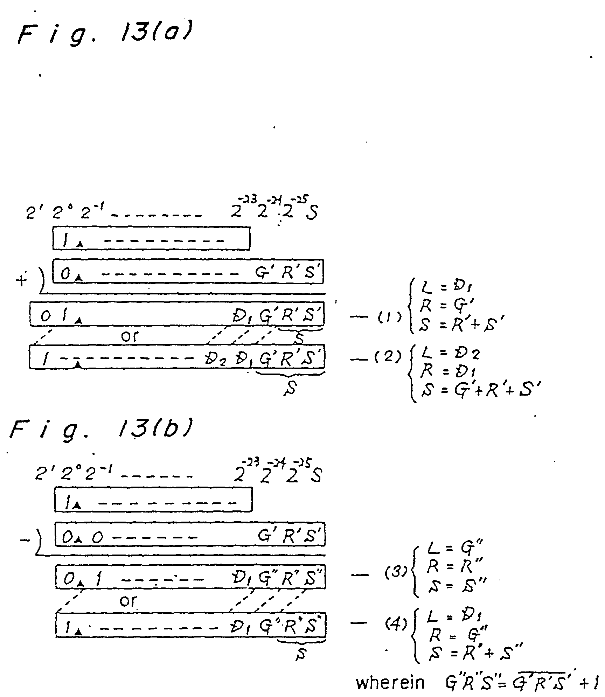

By the above described fact, at the time of mantissa addition or at the time of mantissa subtraction except for exponent differences 0, 1, the shift of 2 bits or more after the mantissa computation is not necessary. At the former time, the result in the bit having the weight of $2^{-22}$ or the bit having the weight of $2^{-23}$ before the normalization becomes the least significant bit (L). At the latter tiem, the result in the bit having the weight of $2^{-23}$ or the bit having the weight of $2^{-24}$ becomes the least significant bit (L). Accordingly, simultaneously with the addition, subtraction at the time of the mantissa addition or at the time of the mantissa subtraction except for the exponent difference 0, 1, the rounding is effected at the positions of these bits, and thereafter 1 bit normalized shift operation has only to be effected to right or to left. Only at the time of the mantissa subtraction of 0 or 1 in the exponent difference, the shift of 2 bit or more after the computation are necessary. At the time of the exponent difference 0, the alignment shift operation is not effected before the computation, so that the effective value is not provided lower than the least significant bit and the rounding is not necessary. At the time of the exponent difference 1, the alignment shift number before the computation is 1 bit, so that the effective value is provided only at 1 bit lower (round bit R) of the least significant bit. If the bit having the weight $2^0$ is 1, the shift for normalization is unnecessary, but the rounding only is required. If the bit having the weight of $2^0$ is 0, the round bit is moved into the least significant bit or the upper than it by the shift for the normalization, so that the rounding is not necessary after the normalization. Therefore, when the exponent difference is at 0 or 1, the mantissa subtraction, the shift for normalization or rounding has only to be effected at most after the computation. The position of the least significant bit (L) at the mantissa addition time is shown in Fig. 13 (a), the position of the least significant bit (L) at the mantissa subtraction time except for the exponent difference 0, 1 is shown in Fig. 13 (b).

A principle for realizing the rounding to nearest to even is shown hereinafter. In order to make the value be rounded to the nearest value, the existence of the addition to the least significant bit is determined by whether the bit to be added, namely, the bit (round bit R) smaller by 1 of the least significant bit (L) is 1 or 0. When the round bit is 0, the data before being rounded and the data after being rounded are the same. When the round bit is 1, 1 is to be added to the least significant bit. The round addition is automatically realized by the addition of 1 to the round bit, because the carry from the round bit works as the value added to the least significant bit. As the bits smaller than the round bit are not judged in this method, the rounding operation may be effected to the larger one by the rounding addition even when the round bit is 1 and the bits smaller than it are 0, namely the value is tie. But the ANSI/IEEE Standard for Binary Floating-Point Arithmetic P754 stipulates, the tie value to be rounded to the even number. As shown in the column of RN of Fig. 11, even if the round bit is 1 when the sticky bit showing the portion smaller than the round bit is 0, which is a tie value, the value is rounded so that least significant bit may be normally even in number. More concretely, when the least significant bit is 1, the rounding addition is effected. When the least significant bit is 0, the round addition is not effected.

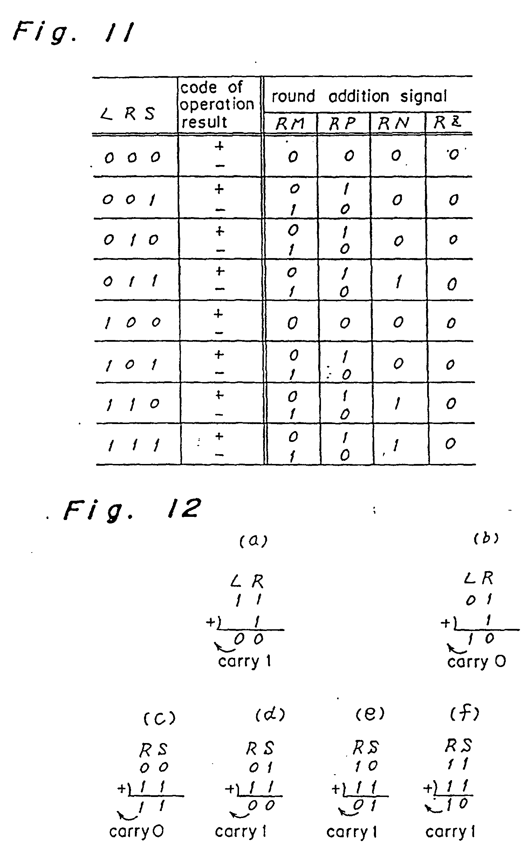

Here, the noteworthy fact is the carry propagation to the least significant bit when the rounding addition has been effected to the round bit. When the round bit is 1, the round bit becomes 0 by the rounding addition and the carry generated by the rounding addition is added to the least significant bit. When the least significant bit is 1, the carry is propagated to the upper bit as shown in Fig. 12 (a). When the least significant bit is 0, the carry is not propagated, thus resulting in 1 in the least significant bit as shown in Fig. 12 (b). When the round bit and the sticky bit are both 0 after the addition has been effected unconditionally upon the round bit the tie value which is 1 in the round bit and 0 in the sticky bit may be exactly rounded to the even number by the correction of the least significant bit to 0. Namely, if the position of the round bit is determined before the operation, the rounding and the computation may be executed at the same time.

1 is temporarily added to the bit having the weight $2^{-24}$ at the mantissa addition time and 1 is temporarily added to the bit having the weight of the $2^{-25}$ at the subtraction time except for 0, 1 in the exponent difference and the operation is effected. Thereafter, the real round bit is determined by the bits having the weight of $2^1$ and $2^0$ of the operation result so as to realize the round by the correction of the round results temporarily effected. By the bits having the weights of $2^{-22}$, $2^{-23}$, $2^{-24}$ of the result temporarily round added, and 1 bit which is the logical or of bits smaller than them at the mantissa addition time, the bits having the weights of $2^{-23}$, $2^{-24}$, $2^{-25}$ of the result temporarily round added, and 1 bit which is the logical or of bits smaller than them at the mantissa subtraction, the following are judged,

    a the case the correct result is obtained
    b the case the correct result is obtained by the correction of the bit having the weight of $2^{-22}$ or $2^{-23}$
    c the case the correct result is not obtained only in the correction of the bit having the weight of $2^{-22}$ or $2^{-23}$ In the case of the b, the bit is corrected. In the case of the c, the same rounding is added again, the correct computing result is obtained.

The adding, subtraction apparatus of the floating point data in the present embodiment composed as described hereinabove will be described hereinafter in its operation. The description is divided in the sequence of the rounding to nearest even mode, the directed rounding toward plus mode and the directed rounding toward minus mode, the directed rounding toward zero mode. Further, the round precision is divided in the single precision and the double precision in each of the modes.

1. Rounding to Nearest Even Mode

1-1 when the augend, minuend and the addend, subtrahend are the single precision format, and the sum or the difference is rounded into single precision

(1) Before Processing Step Start

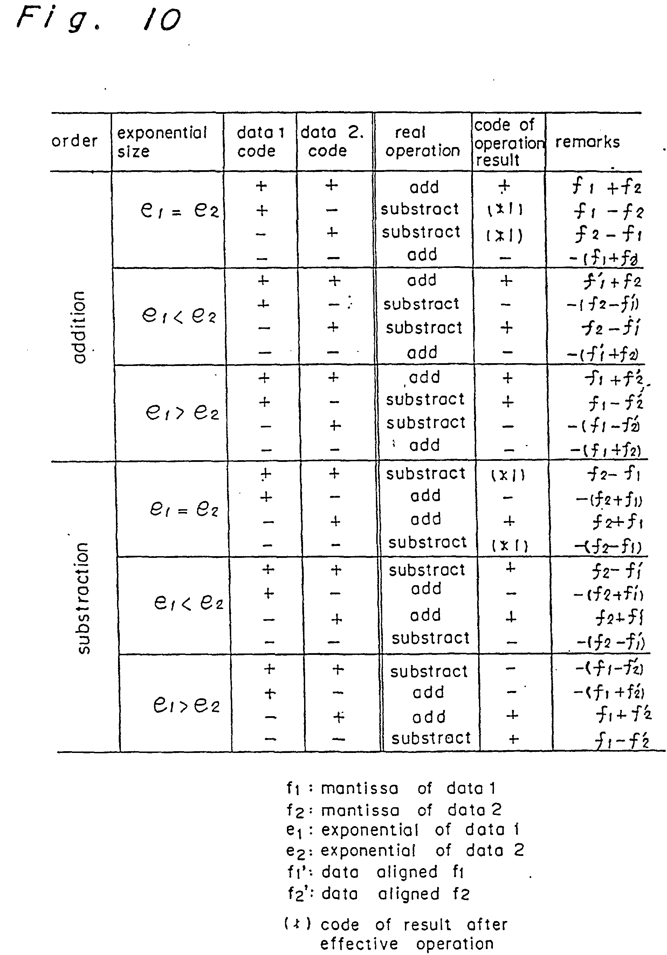

In accordance with the exponents and the signs of two floating point data and whether the instruction is the addition or the subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the exponent which is not small, is accommodated in the register 102. The bits which are spilt at the alignment are accommodated in the register 102 together as the round bit (R) having the weight of the $2^{-24}$ at a bit which is lower by 1 bit of the least significant bit (L) and the sticky bit (S) which is the logical or of the bits, having the weight of $2^{-25}$, or lower.

(2) Step 1

. Mantissa addition time

The output of the register 101 is selected by the multiplexor 103, and the output of the register 102 is selected by the multiplexor 104. In the round value generating circuit 106, the data with the bit having the weight of $2^{-24}$ being 1, the other bits being made 0 are generated. The complementer 105 outputs the multiplexor 104 output as it is, and the adder 107 executes (register 1) + (register 2) + (round addition value) with the Cin being made 0. When the bit having the weight

of $2^1$ of the output of the adder 107 is 1, the LR1 shifter 108 effects 1 bit shift to the right. In accordance with the instruction of the round correction repetitive control circuit 109, by the bits having the weight of $2^{-25}$ of the output of the adder 107 and the S bit, the output of the LR1 shifter 108 is accommodated in the register 110 with the bit having the weight of the $2^{-23}$ inverted when the correction signal shown in Fig. 3 (a) is 01, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 to input them into the adder 107, and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with the instruction of the round correction repetitive control circuit 109 by the bits having the weights of the $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 3(c) is 01 without correction when the correction signal is 00. When the correction signal is 00, the output of the LR1 shifter 108 is accommodated as it is into the register 110. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108, effects 1 bit shift to the left. In the round correction competitive control circuit 109, the insertion of the step insertion for rounding is instructed when the three bits having the weights of the $2^0$, $2^{-23}$, $3^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1 , the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

1-2 When the augend, minuend and the addend, subtrahend are the double precision format, and the sum or the difference is rounded into double precision

(1) Before Processing Step Start

In accordance with the exponents and other signs of the two floating point data and whether the instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the , exponent which is not small, is accommodated in the register 102. The bits which are spilt at the alignment are accommodated in the register 102 together as the round bit (R) having the weight of the $2^{-53}$ at a bit which is lower by 1 bit of the least significant bit (L) and the sticky bit (S) which is the logical or of the bits, having the weight of $2^{-54}$, or lower.

(2) Step 1

. Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 the outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-54}$ of the output of the adder 107 is generated. In accordance with the instruction of the round correction repetitive control circuit 109 by the bits having the weights of $2^1$, $2^{-51}$, $2^{-52}$, $2^{-53}$ of the outputs of the adder 107 and the S bit, the output of the LR1 shifter 108 is accommodated in the register 100 with the bit having the weight of the $2^{-52}$ inverted when the correction signal shown in Fig. 3(b) is 01, without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-54}$ being 1, the other bits being made 0 are generated. The complementer 105 inverts the output of the multiplexor 104 to input them into adder 107, and executes the (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-55}$ of the output of the adder 107, or lower, is generated. In accordance with the instruction of the round correction repetitive control circuit 109, by the bits having the weights of $2^0$, $2^{-52}$, $2^{-53}$, $2^{-54}$ of the outputs of the adder 107 and the S bit, the output of the LR1 shifter 108 is accommodated in the register 110 with the bit having the weight of the $2^{-52}$ inverted when the correction signal shown in Fig. 3 (d) is 01 without correction when the correction signal is 00. When the rerounding signal of the round correction repetitive control circuit 109 is 1, the insertion of the new step for executing the readdition of the round value is instructed. But when the reroundig signal is 0, this step completes the computing operation with the rounding operation being effected in accordance with the round precision.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107 and executes the (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the three bits having the weights of the $2^0$, $2^{-52}$, $2^{-53}$ of the output of the adder 107 , are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-53}$ generated by the round value generating circuit 106 of the step 1, being 1, the other bits being 0 are added by the adder 107 is 1. When the bit having the weight of $2^1$ of the output of the adder 107, the LR1 shifter 108 effects 1 bit shift to right. When the bit having the weight of $2^1$ is 0, the value as it is is accommodated in the register 110 so as to complete the processing.

. Mantissa subtraction time except for exponente difference 0, 1

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-54}$ generated by the round value generating circuit 106 of the step 1 being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2 Directed Rounding Toward Plus Mode And Directed Rounding Toward Minus Mode

2-1 when the augend, minuend and the addend, subtrahend are the single precision format, and the sum and the difference is rounded into single precision

(1) Before Processing Step Start

In accordance with the exponentsand the signs of two floating point data and whether the instruction is addition or subtraction, the type of the operation of the mantissa addition or the mantissa subtraction and the signs of the computation result are determined as shown in the sign and operation relation chart of Fig. 10. When the sign of the computation result is negative in the directed rounding toward plus mode mode or the sign of the computation result is positive in the directed rounding toward minus mode, the operation is effected in accordance with the operation of the directed rounding toward zero mode to be described later. When the sign of the computation result is positive in the directed rounding toward plus mode when the sign of the computation result is negative in the directed rounding toward minus mode, the operation is effected as follows. The mantissa which is not smaller in exponent from the augend, minuend and the addend, subtrahend is accommodated in the register 101. The mantissa which is smaller in exponent from the augend, minuend and the addend, subtrahend, is aligned to the exponent that is not smaller, is accommodated in the register 102. The bits which are spilt at the alignment are together accommodated in the register 102 as the round bit (R) having the weight of $2^{-24}$ at a bit which is lower by 1 bit of the least significant bit (L), and as the sticky bit (S) which is the logical or of the bits, having the weight of $2^{-25}$, or lowe.

(2) Step 1

. Mantissa addition time

The output of the register 101 is selected by the multiplexor 103, and the output of the register 102 is selected by the multiplexor 104. In the round value generating circuit 106, the data with the bit having the weight of $2^{-24}$ being 1, the others bit being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-25}$ of the output of the adder 107, or lower, is generated. In accordance with the instruction of correction repetitive control circuit 109 by the bits having the weights of the $2^1$, $2^{-22}$, $2^{-23}$, $2^{-24}$ of the output of the adder 107 and the S bit, the output of the LR1 shifter 108 is accommodated in the register 110 with the the bit having the weight of the $2^{-23}$ inverted when the correction signal shown in Fig. 4(a) is 01 with the bits having the weight $2^{-22}$, $2^{-23}$ of the output of the LR1 shifter 108 is inverted when correction signal is 10, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with instruction of the round correction repetitive control circuit 109, by the bits having the weights of $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 4 (c) is 01, the bits having the weights of $2^{-22}$ and $2^{-23}$ of the output of the LR1 shifter 108 inverted when the correction signal is 10 and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step insertion for rounding is instructed when the two bits having the weights of the $2^0$, $2^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time with the exponent difference 0, 1

When the insertion ofthe step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2-2 when the augend, minuend and the addend, subtrahend are the double precision format, and the sum or the difference is rounded into double precision

(1) Before Processing Step Start

In accordance with the exponents and the signs of two floating point data and whether the instruction is addition or subtraction, the type of the operation of the mantissa addition or the mantissa subtraction, and the sign of the computation result are determined as shown in the sign and operation relation chart of Fig. 10. When the sign of the computation result is negative in the directed rounding toward plus mode or the sign of the computation result is positive in the directed rounding toward minus mode the operation is effected in accordance with the operation of the directed rounding toward zero mode to be described later. When the sign of the computation result is positive in the directed rounding toward plus mode when the sign of the computation results is negative in the directed rounding toward minus mode the operation is effected as follows. The mantissa which is not smaller in exponent from the augend, minuend and the addend, subtrahend is accommodated in the register 101. The mantissa which is smaller in exponent from the augend, minuend and the addend, subtrahend, and is aligned to the exponent that is not smaller, is accommodated in the register 102. The bits which are spilit at the alignment setting time are together accommodated in the register 102 as the round bit (R) having the weight of $2^{-53}$ at a bit which is lower by 1 bit of the least significant bit (L), and as the sticky bit (S) which is the logical or of the bits, having the weight of $2^{-54}$, or lower.

(2) Step 1

. Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108effects 1 bit shift to the right 1. 1 bit (S) which is the logical or of bits having the weight of $2^{-54}$ of the output of the adder 107, or lower is generated. In accordance with the instruction of the round correction repetitive control circuit 109 by the bits having the weights of the $2^1$, $2^{-51}$, $2^{-52}$, $2^{-53}$ of the output of the adder 107 and the S bit, the output of the LR1 shifter 108 is accomodated in the register 110 with the bit having the weight of the $2^{-52}$ inverted when the correction signal shown in Fig. 4 (b) is 01, with the bits having the weight $2^{-51}$, $2^{-52}$ of the output of the LR1 shifter 108 invrted when the correction signal is 01 and without correction when the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

. Mantissa subtraction time except for the difference 0, 1

The output of the register 101 is selected by the multiplexor 103, and the output of the register 102 is selected by the multiplexor 104. In the round value generating circuit 106, the data with the bit having the weight of $2^{-54}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits having the weight of $2^{-55}$ of the output of the adder 107, or lower, is generated. In accordance with instruction of the round correction repetitive control circuit 109 by the bits having the weights of the $2^0$, $2^{-52}$, $2^{-53}$, $2^{-54}$ of the output of the adder 107 and the S bit, the output of the LR1 shifter 108 is accommodated in the register 110 with the bit having the weight of the $2^{-52}$ inverted when the correction signal shown in Fig. 4 (d) , is 01, with the bits having the weights of $2^{-51}$ and $2^{-52}$ of the output of the LR1 shifter 108 inverted when the correction signal is 01, and without correction when the the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the two bits having the weights of the $2^0$, $2^{-53}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-53}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-54}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.
When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

3 Zero Direction Round Mode

(The following processing is common when the augend, minuend and the addend, subtrahend are the single precision format, and the sum or the difference is rounded into single precision and when the augend, minuend and the addend, subtrahend are the double precision format, and the sum or the difference is rounded into double precision)

(1) Before Processing Step Start

In accordance with the exponents and the signs of two floating point data and the whether instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend, is aligned to the exponent which is not smaller, is accommodated in the register 102.

(2) Step 1

. Mantissa addition time

The output of the register 101 is selected by the multiplexor 103, and the output of the register 102 is selected by the multiplexor 104. In the round value generating circuit 106, the data with all the bits being made 0 are generated. The complementer 105 outputs the multiplexor 104 output as it is so as to input them to the adder 107, and the adder 107 executes (register 1) + (register 2) with the Cin being made 0. When the bit having the weight of $2^1$ of the output of the adder 107 is 1, the LR1 shifter 108,effects 1 bit shift to the right so as to complete the computing operation.

. Mantissa subtraction time except for exponent differences 0, 1

The output of the register 101 is selected by the multiplexor 103, and the output of the register 102 is selected by the multiplexor 104. In the round value generating circuit 106, all the bits being made 0 are generated. The complementer 105 inverts the output of the multiplexor 104 to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left so as to complete the computing operation.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the shift number generating circuit 111, the shift number necessary for normalizing the output of the LR1 shifter 108 is generated. The insertion of the step for normalization is instructed when the shift number is not 0. When the insertion of the step for normalization is not caused, the computation is completed by this step.

(3) Insertion Step (only when the insertion of the step is instructed)

. Only at mantissa subtraction time with the exponent difference 0, 1

The barrel shifter 112 inputs the register 110 to shift to the left by the shift number generated by the shift number generating circuit 111 for accommodating it so as to complete the processing.

According to the present embodiment, at the mantissa addition time or the mantissa subtraction time except for the exponent differences 0, 1, the sum of the three of two floating point data mantissas and the round addition value or the sum of the two former difference and the latter are effected at the same time by the adder 107. The processing may be completed in most case by the normalizing of the result by the LR1 shifter 108. Even when the correction of the output of the LR1 shift 108 by the instruction of the round correction competitive control circuit 109 is necessary, the completing operation may be effected without increase in the processing step number. The completing operation may be effected by the insertion, by 1 step, of the processing only when the addition of the round addition value by the adder 107 is required again. The probability necessary in the insertion of 1 step is extremely small, and it is two thirty-seconds at the roundinging to nearest even mode three thirty-seconds at the time of the directed rounding toward plus mode or the directed rounding toward minus mode, and 0 at the time of the directed rounding toward zero mode (when the bit pattern of the mantissa is assumed to be uniformly distributed). As the result, in most cases, (thirty thirty-seconds at the time of the rounding to nearest even mode twenty nine thirty-seconds at the time of the directed rounding toward plus mode or the directed rounding toward minus mode, 1 at the time of the directed rounding zero mode), the processing step number necessary for the addition, subtraction becomes as small as 2. Even at the time of the mantissa subtraction time of the exponent differences 0, 1, by the subtraction of the mantissas of two floating point data and the addition of the round addition values are effected at the same time by the adder 107. And by the normalization of the result by the LR1 shifter 108. The processing may be completed in most of the cases, only when the shift of 2 bits or more for normalization by the barrel shifter 112 or the processing can be completed by the insertion of 1 step, the addition of the round addition value is necessary by the adder 107, the number of the processing steps necessary in most of the cases becomes as small as 2. These processing flows are shown in Fig. 8 (b). Even in the either case, as the addition, subtraction of the mantissas and the addition of the round addition value are executed by the single adder 107, the necessary hardwares are less as compared with the conventional addition, subtraction apparatus of the floating point data.

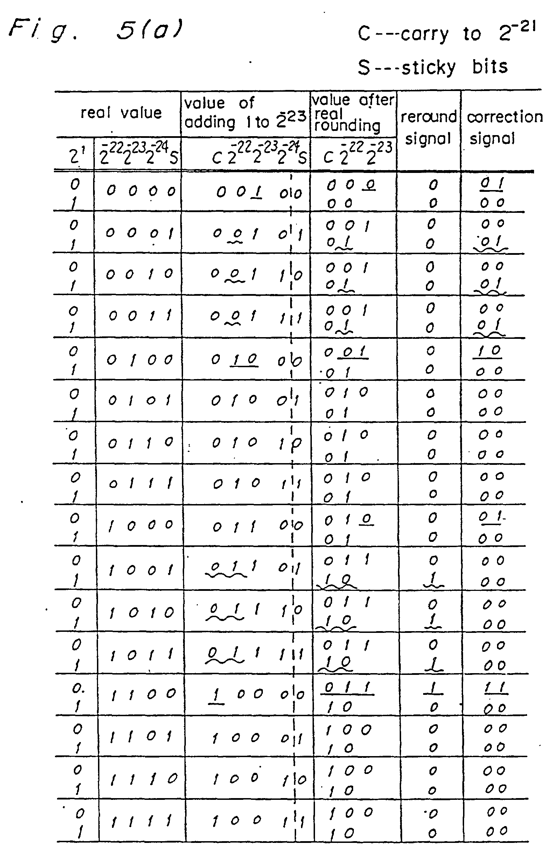

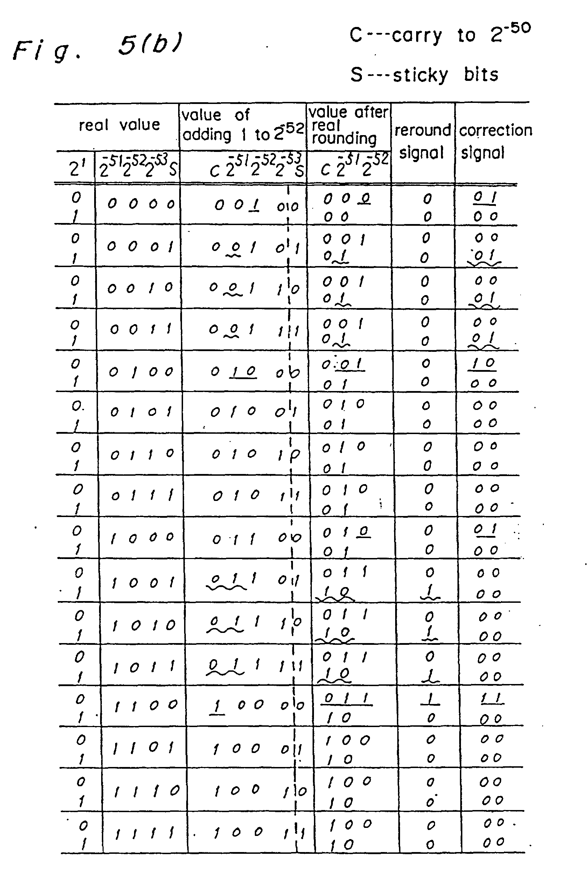

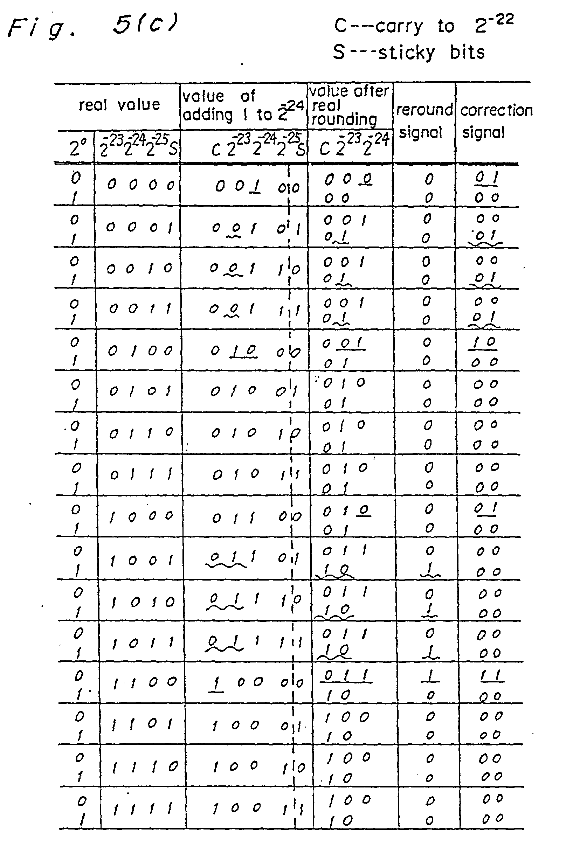

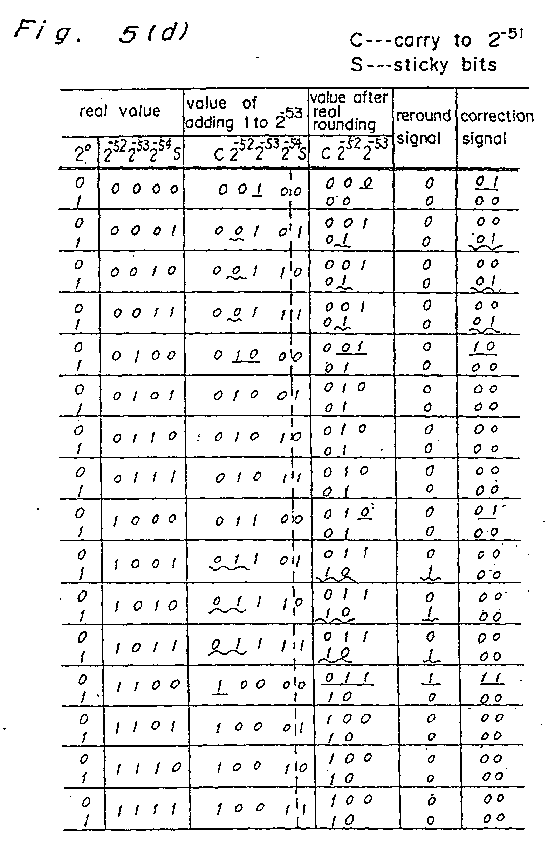

Although in the present embodiment at the directed rounding toward plus mode or at the directed rounding toward minus mode, in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the output of the LR1 shifter 108 is accommodated in the register 110 with the bits having the wights of $2^{-23}$, $2^{-23}$, $2^{-52}$, $2^{-52}$ inverted when the correcting signal is 01, and with the bits having the weights of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of the Fig. 4 (a), (b), (c), (d) by the round correction repetitive control circuit 109, and the insertion of the new step for again adding the round addition value generated by the round value generating circuit 106 is instructed, when the rerounding signal of the round correction repetitive control circuit 109 is 1, the data can be generated with the bits ahving the weights of $2^{-23}$, $2^{-24}$, $2^{-52}$, $2^{-53}$ in the round value generating circuit 106 being 1, the other bits being 0, the output of the LR1 shifter 108 is accommodated in the register 110 with the bits having the weight of $2^{-23}$, $2^{-23}$, $2^{-52}$, $2^{-52}$ inverted when the correction signal is 01, and with the bits having the weight of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of Fig. 5 (a), (c), (b), (d) by the round correction repetitive control circuit 109, the insertion of the new step for adding again the round addition value generated by the round value generating circuit 106 can be instructed, when the reround signal of the round correction repetitive control circuit 109 is 1 and the correction signal is 00, and the insertion of the new step for subtracting from the value for retaining in the register 110 the round addition value generated by the round value generating circuit 106 can be instructed when the reround signal is 1 and the correction signal is 11. In this manner, the probability necessary in the insertion of 1 step is reduced as low as two thirty-seconds, thus improving the computing speed.

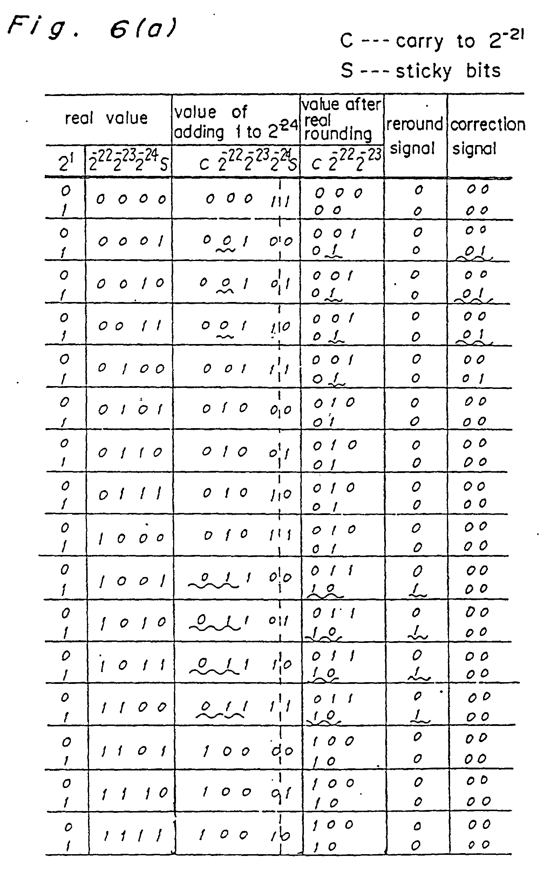

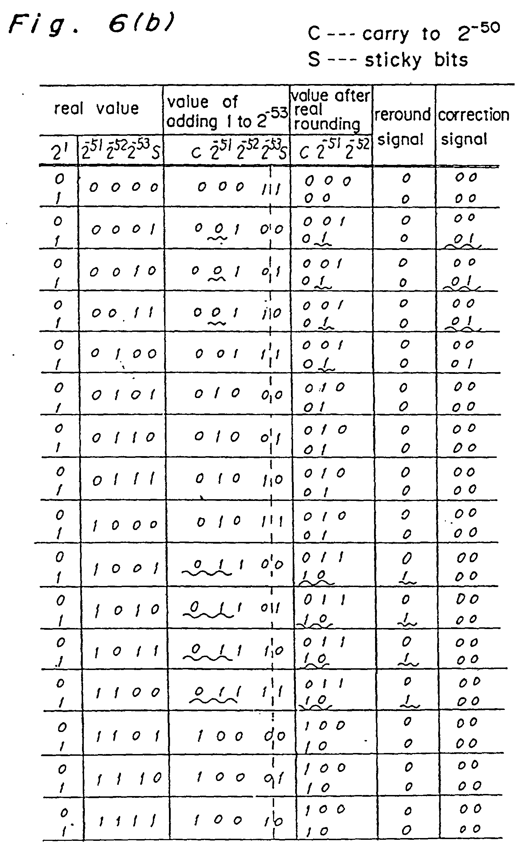

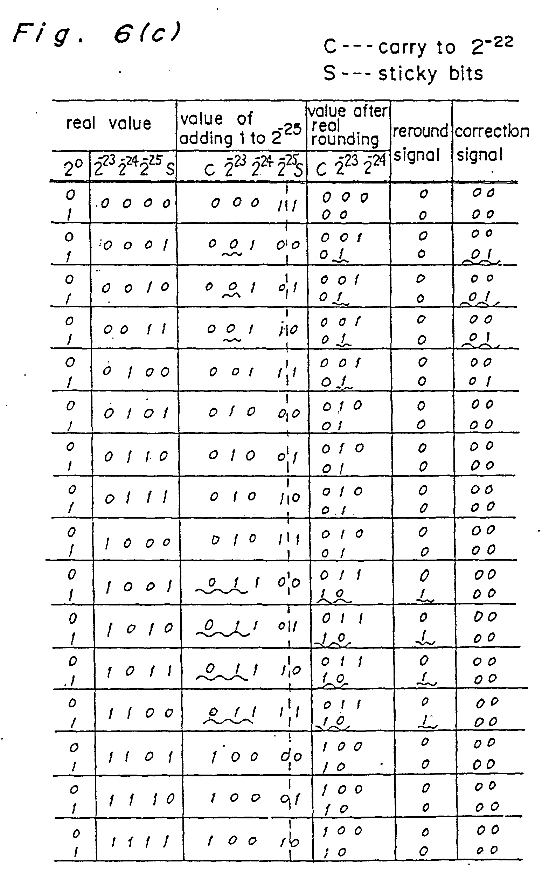

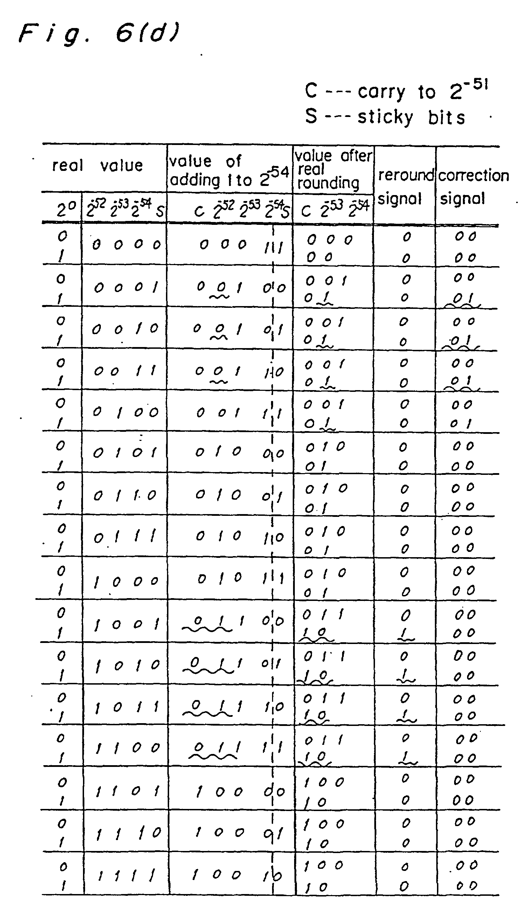

Although in the present embodiment at the directed rounding toward plus mode or at the directed rounding toward minus mode in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the round correction repetitive control circuit 109 instructs the insertion of the step of the correction of the bits or the readdition of the round addition value in accordance with the correcting signal and the reround signal shown in the control relation charts of the Fig. 4 (a), (c), (b), (d). The data can be generated in the round value generaing circuit 106 with bits having $2^{-24}$ and its all the lower weights, $2^{-25}$ and its all the lower weights, $2^{-53}$ and its all the lower weights, $2^{-54}$ and its all the lower weights being 1, the other bits being 0. The round correction repetitive control circuit 109 can instruct the insertion of the step of the correction of the bits or the readdition of the round addition value in accordance with the correction signal and the reround signal shown in the control relation charts of the Fig. 6 (a), (c), (b), (d). In this manner, the probability necessary in the insertion of the 1 step is made as low as two thirty-seconds, thus improving the computing speed. In the the directed rounding toward plus mode or in the directed rounding toward minus mode, it is noticeable that the addition of 1 for rounding into the least significant bit (L) becomes necessary when the round bit (R) or the sticky bit (S) is 1. By the use of the carry generated by the addition of the data with the round bit and its all the lower bits being made 1 in bit position, the round addition into the least significant bit may be effected. A case where the round addition is not caused with the round bit and the sticky bit being both zero is shown in Fig. 12 (c). A case where the addition of 1 for rounding is caused except for above is shown in Fig. 12 (d), (e), (f).

In the present embodiment, both the precision of the format and the round precision of the augend, minuend and the addend, subtrahend are provided by way of single precision or double precision. Even in a case where the precision of the format and the round precision of the augend, minuend and the addend, subtrahend are different, the round addition value to be generated by the round value generating circuit 106 is the data with the round bit corresponding to the round precision being 1, the input bit number of the adder 107 is set to the maximum bit number of the data handling so that the round corresponding to the round precision may be realized without dependence upon the precision of the format of the augend, minuend and the addend, subtrahend.

Although in the present embodiment, in accordance with the respective cases of the mantissa addition with the single precision rounding, the mantissa subtraction of 0 or 1 in exponent difference with single precision rounding, the mantissa addition with double precision sounding, the mantissa subtraction of 0 or 1 in exponent difference with double precision rounding, the round correction repetitive control circuit 109 inspects the bits having the weights of $2^1$, $2^{-22}$, $2^{-23}$, $2^{-24}$, the bits having the weights of $2^0$, $2^{-23}$, $2^{-24}$, $2^{-25}$, the bits having the weights of $2^1$, $2^{-51}$, $2^{-52}$, $2^{-53}$, the bits having the weights of $2^0$, $2^{-52}$, $2^{-53}$, $2^{-54}$ of the output of the adder 107 and S bit so as to instruction the correction of the bits having the weights of $2^{-22}$ and $2^{-23}$, $2^{-22}$ and $2^{-23}$, $2^{-51}$ and $2^{-52}$, $2^{-51}$ and $2^{-52}$, the inspected bit and the corrected bit can be increased in the most significant bit direction. The probability necessary in the insertion of 1 step is halved for each 1 bit addition of the inspected bit and the corrected bit, thus improving the computing speed.

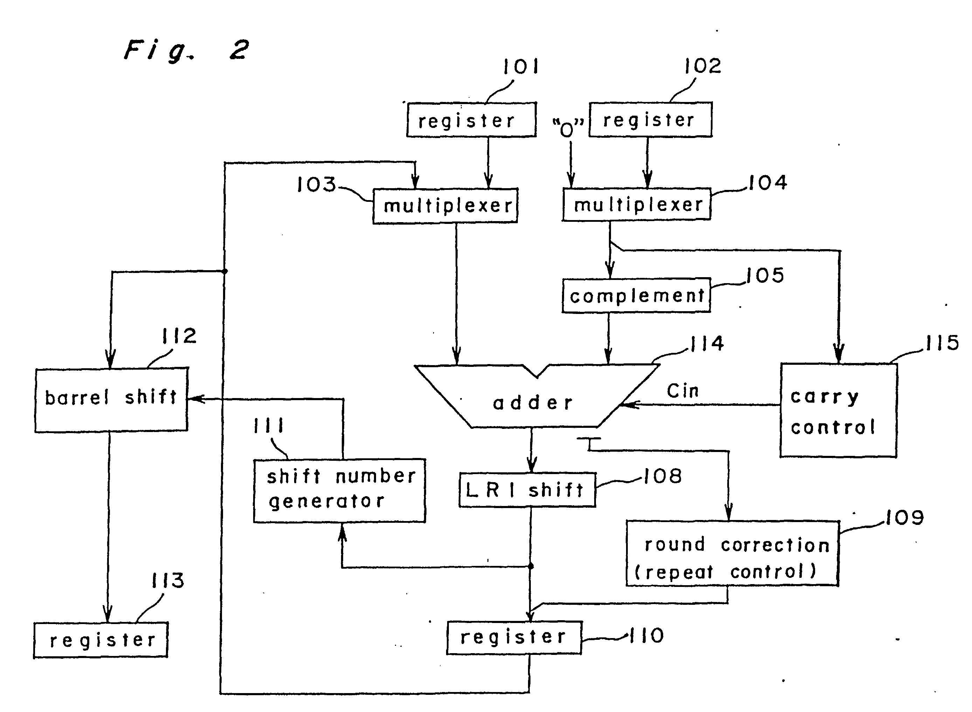

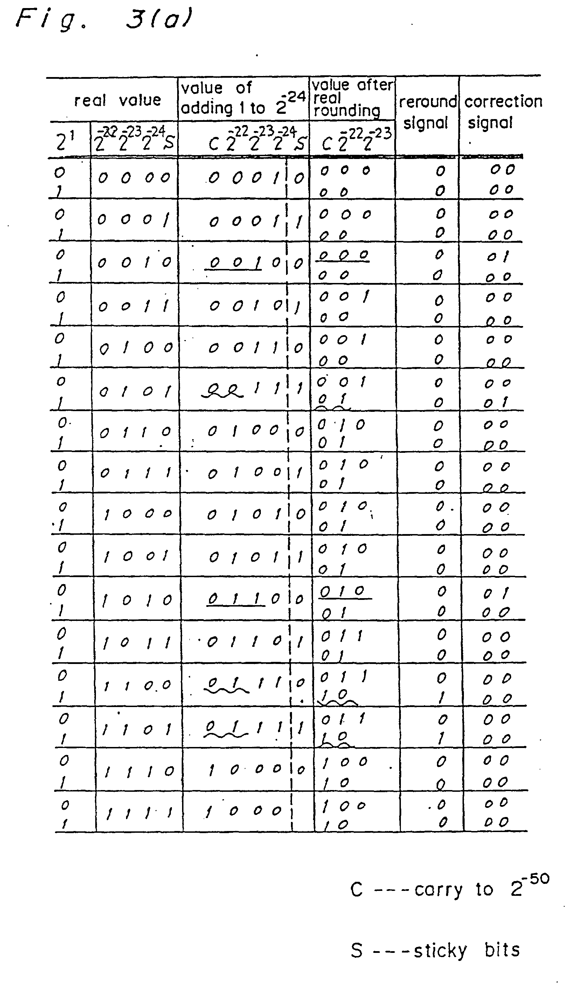

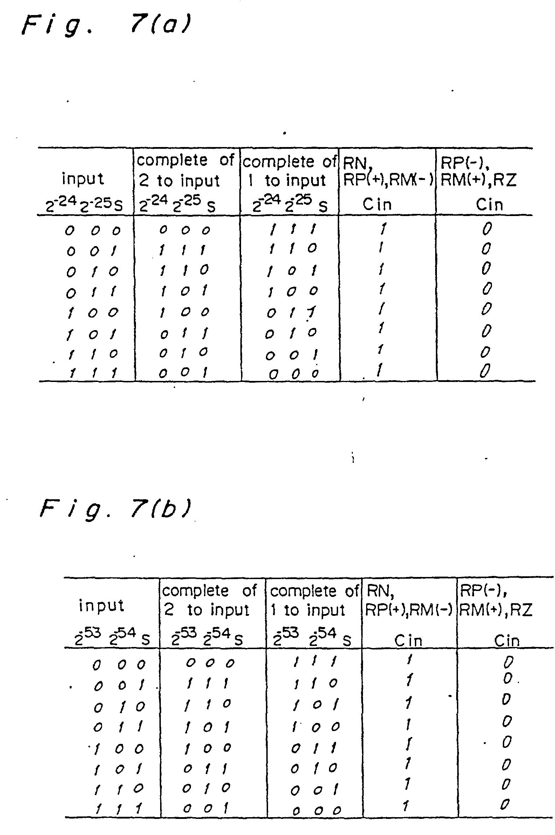

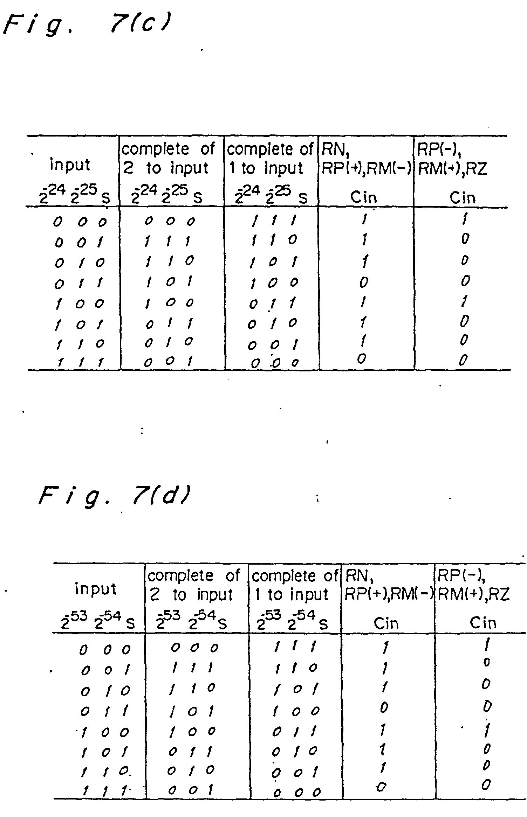

Fig. 2 shows a block diagram of the addition, subtraction apparatus of the floating point data in the second embodiment. It is to be noted that like parts in Fig. 2 are designated by like reference numerals in Fig. 1. In Fig. 2, reference numeral 114 is an adder of two inputs with the bit having the weight of $2^{-24}$ with the single precision as carry input (Cin), and the bit having the weight of $2^{-53}$ with the double precision as carry input (Cin), reference numeral 115 is a carry control apparatus for designing the carry input (Cin) of the adder 114. Fig. 7 is a control relation chart of the carry control apparatus 115, where the carry input (Cin) shown in Fig. 7 (a) when the mantissa addition is executed and the round precision is the single precision, in Fig. 7 (b) when the mantissa addition is executed, and the round precision is the double precision, in Fig. 7 (c) when the mantissa subtraction is executed, and the round precision is the single precision, in Fig. 2 (d) when the mantissa subtraction is executed and the round precision is the double precision is input into the adder 114.

The addition, subtraction apparatus of the floating point data in the present embodiment constructed as hereinabove will be described hereinafter in its operation. Instead of effecting the addition, subtraction of the mantissa of two floating point data and the addition of the round addition value generated by the round value generating circuit 106, by the adder 107 of three inputs in the first embodiment shown in Fig. 1, the present embodiment is adapted to operate the carry input (Cin) of the adder 114 of two inputs by the carry control apparatus 115 so as to effect the addition, subtraction of the mantissa and the addition of the round addition values. Only the operation of the addition, subtraction of the mantissas and the addition of the round addition value will be described hereinafter, with the other operations being the same as in the first embodiment.

. Mantissa addition time

At the rounding to nearest even mode, or when the sign of the computing result is positive in the directed rounding toward minus mode, or the sign of the computation result is negative in the directed rounding toward minus mode, the carry input (Cin) is made irrelevant, into 1, to the input data as shown in the columns of RN,RP (+),RM(-) of Fig. 7 (a), (b) so that $2^{-24}$, $2^{-53}$ are added as addition values in accordance with the round precision being the single precision or the double precision.

When the sign of the computation result is negative in the directed rounding toward plus mode or the sign of the computation result is positive in the directed rounding toward minus mode or at the directed rounding toward zero mode, the round addition values are not required to be added. Thus, the carry input (Cin) is made irrelevant, into 0, to the input data as shown in the columns of RP(-),RM(+), RZ of Fig. 7 (a), (b).

. Mantissa subtraction time except for exponent difference 0, 1

At the rounding to nearest even mode or when the sign of the computation result is positive in the directed rounding toward plus mode, or when the sign of the computation result is negative in the directed rounding toward minus mode, $2^{-25}$, $2^{-54}$ are required to be added as the round addition values in accordance with the round precision being the single precision or the double precision and 1 for the 2's complement is required to be added to the position of the sticky bit (S). So as to realize these additions, when at least one of the bit of $2^{-25}$ of the data (aligned and complemented by 1) to be added, and the sticky bit (S) is 1, or when at least one of the bit of $2^{-54}$ and the sticky bit (S) is 1, the carry input (Cin) into $2^{-24}$, $2^{-53}$ is made 1. When both the bit of $2^{-25}$ of the data to be added and the sticky bit (S) are 0, or when both the bit of $2^{-54}$ and the sticky bit (S) are 0, the carry input (Cin) into $2^{-24}$, $2^{-53}$ is made 0. Accordingly, the carry input (Cin) depended upon the input data as shown in the columns of RN, RP(+),RM(-) of Fig. 7 (c), (d) is generated.

When the sign of the computation result is negative in the directed rounding toward plus mode or the signs of the computation result is positive in the directed rounding toward minus mode or at the directed rounding toward zero mode, in accordance with the roung precision being the single precision or the double precision, 1 for 2's complement is required to be added to the position of the sticky bit (S). So as to realize this addition, when at least one of the bit of $2^{-25}$ of the data (aligned and complemented by 1) to be added and the sticky bit (S) is 1, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$, $2^{-53}$ is made 1 for realization thereof. Accordingly, the carry input (Cin) depended upon the input data as shown in the columns of RP(-),RM(+),RZ of Fig. 7 (c), (d) is generated.

. Mantissa subtraction time with the exponent difference 0, 1

The round is not executed simultaneously with the subtraction of the mantissas. But in accordance with the single precision or the double precision in the round precision, 1 for 2's complement is required to be added to the position of the sticky bit (S). So as to realize this addition, when at least one of the bit of $2^{-25}$ of the data (aligned and complemented by 1) to be added and the sticky bit (S) is 0, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$, $2^{-53}$ is made 1. Accordingly, the carry input (Cin) depended upon the input data as shown in the columns of RP(-),RM(+),RZ of Fig. 7 (c), (d) are generated.

Even in the above described either case, the rounding to be effected with the step being inserted may be realized with the carry input (Cin) being 1 so as to effect the addition with $2^{-24}$, $2^{-53}$ as the round addition values in accordance with the single precision or the double precision in the round precision.

Even by the present embodiment, at the mantissa addition time or the mantissa subtraction time except for the exponent differences 0, 1, the sum of the three of two floating point data mantissas and the round addition value or the sum of two former difference and the latter are effected at the same time by the adder 114. As the result, in most of the cases (thirty thirty-seconds at the rounding to nearest even mode, twenty nine thirty-seconds at the directed rounding toward plus mode or the directed rounding toward minus mode, 1 at directed rounding toward zero mode), the processing step number necessary for the addition, subtraction becomes as small as 2. Even at the time of the mantissa subtraction time of the exponent differences 0, 1, the subtraction of the mantissas of two floating point data and the addition of the round addition value are effected at the same time by the adder 114, so that the number of the processing steps necessary in most of the cases becomes as small as 2. Even in the either case, as the addition, subtraction of the mantissas and the addition of the round addition values are executed by the single adder 114, the necessary hardwares are less as compared with the conventional addition, subtraction apparatus of the floating point data. The adder 114, which is composed of two inputs, becomes much less in hardware than in the fist embodiment.

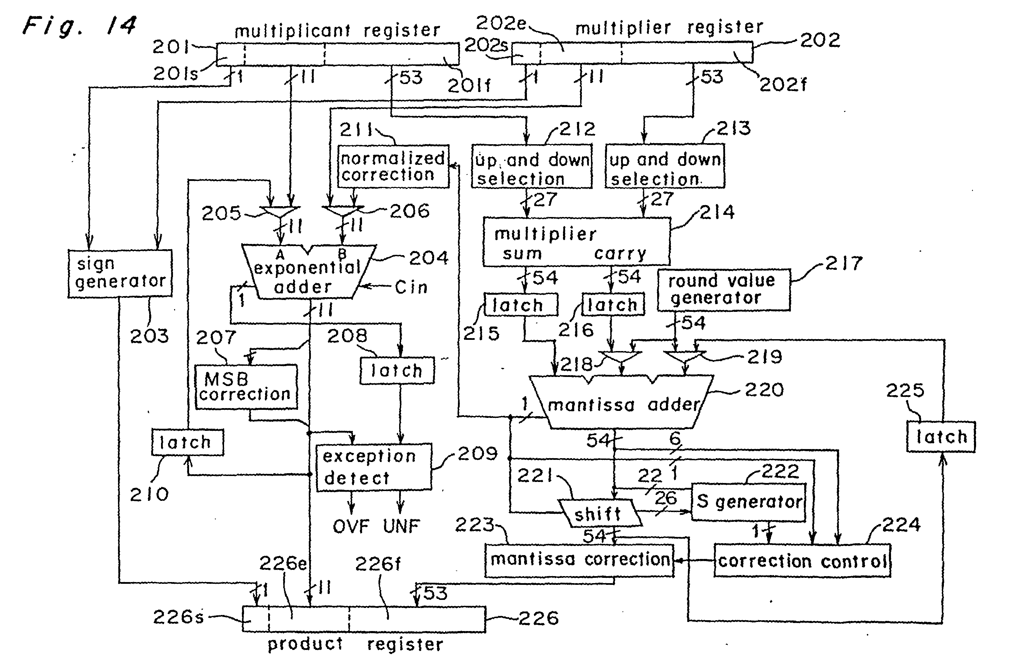

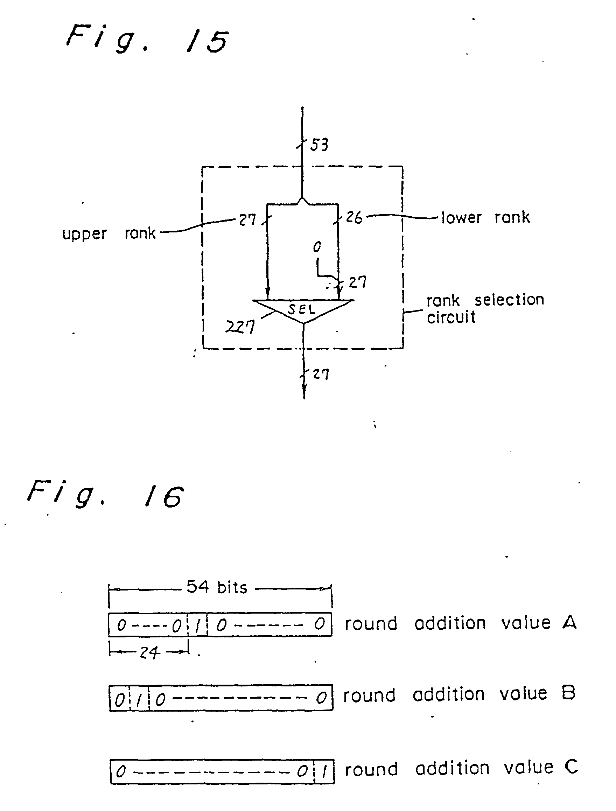

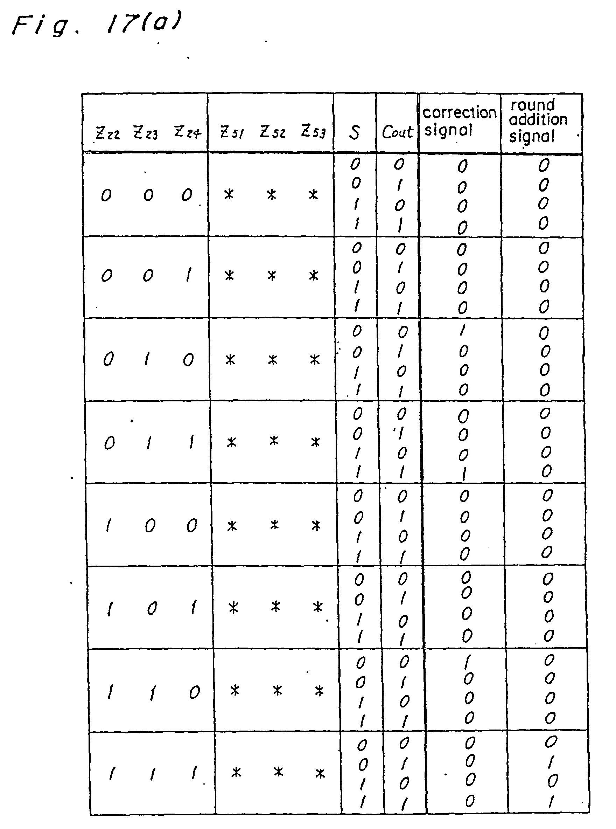

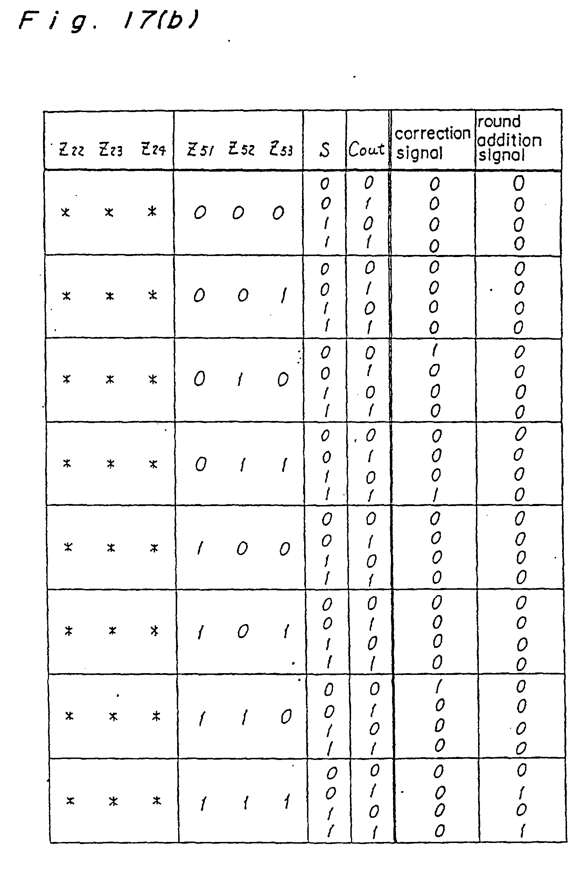

Fig. 14 shows a block diagram of a multiplying apparatus of floating point data incorporating a first embodiment of the present invention. In referring now to Fig. 14, reference numeral 201 is a multiplicand register for retaining the multiplicand, consisting of a sign portion 201s of 1 bit, an exponent portion 201e of 11 bits and a mantissa portion 201f of 53 bits. Reference numeral 202 is a multiplier register for retaining the multiplier, consisting of a sign portion 202s of 1 bit, an exponent portion 202e of 11 bits and a mantissa portion 202f of 53 bits. The most significant bit of the multiplicand register mantissa portion 201f and the multiplier register mantissa portion 202f is so-called "hidden bit" each having the weight of $2^0$ when it is 1 at the normalized number, with the multiplicand register 201 and the multiplier register 202 being both in conformity with the double precision format except for this bit. Reference numeral 203 is a sign generating circuit for reading the signs of the multiplicand and the multiplier from the multiplicand register sign portion 201s and the multiplier register sign portion 202s so as to generate the sign of the product, reference numeral 204 is an exponent adder of 11 bits for reading the exponents of the multiplicand and the multiplier from the multiplicand register exponent portion 201e and the multiplier register exponent portion 202e so as to compute the exponent of the product, effects the addition of the A input, the B input and the carry input of 1 bit Cin. Reference numeral 205 and reference numeral 206 are respectively selectors of 11 bits for selecting the two inputs of the exponent adder 204, reference numeral 207 is the most significant bit correcting circuit of inverting the most significant bit of the ouput of the exponent adder 204, referece numral 208 is a latch of 1 bit for retaining the overflow from the most significant bit at the addition in the exponent adder 204, reference numeral 209 is an exception detecting circuit for detecting the overflow and the underflow of the product with respect to the computation precision detected from the output of the exponent adder 204 and the value of the latch 208, reference numeral 210 is a latch of 11 bits for retaining the output of the exponent adder 204 inverted in the most significant bit by the most significant bit correcting circuit 207 so as to input them into the exponent adder 204 again through the selector 205, reference numeral 211 is a normalized correction value generating circuit for generating the constant for increasing the exponent by 1 through the normalization of the 1 bit shift of the mantissa of the product, reference numeral 212 is a multiplicand upper, lower selecting circuit for reading the multiplicand register mantissa portion 201f so as to select, output the upper 27 bits or the lower 27 bits (the most significant bit at this time is assumed to be 0), reference numeral 213 a multiplier upper, lower selecting circuit for reading the multiplier register mantissa portion 202f so as to select, output the upper 27 bits or the lower 27 bits (the most significant bit at this time is 0), reference numeral 214 is a multiplying unit for multiplying the output of the the multiplicand upper, lower selecting circuit 212 of 27 bits by the output of the multiplier upper, lower selecting circuit 213 of 27 bits so as to respectively output the sum and the carry of the 54 bits, reference numerals 215, 216 are respectively a latch of 54 bits for retaining the sum output and the carry output of the multiplying unit 214, reference numeral 217 is a round addition value generating circuit for generating the constant when the addition is effected so as to round the mantissa of the product in single precision or double precision, reference numeral 218 is a selector of 54 bits for selecting the value of the latch 216 and the output of the round addition value generating circuit 217, reference numeral 219 is a selector of 54 bits for selecting the output of the round addition value generating circuit 217 and the value to be retained in the latch 225 to be described later, reference numeral 220 is a mantissa adder of 54 bits for adding the value retained at the latch 215 and the output of the selector 218, and the output of the selector 219, reference numeral 221 is a shifter of 54 bits for shifting by 0 bit or 1 bit or 26 bits the output of the mantissa adder 220 in the least significant bit direction, reference numeral 222 is a sticky bit generating circuit for inputting 22 bits which is 26th bit through 47th bit from the most significant bit of the output of the mantissa adder 220 and the shift overflow from the least significant bit of 26 bits in the shifter 221 so as to generate the sticky bit in accordance with the round precision whether the single precision or the double precision, reference numeral 223 is a mantissa correcting circuit for inverting, outputting if necessary the 24th bit from the most significant bit of the output of the shifter 221 when the round precision is the single precision, and the 53rd when the round precision is the double precision, reference numeral 224 is a mantissa correction control circuit with 6 bits of the 23rd bit through the 25th bit, from the most significant bit, of the 3rd bit through the least significant bit, from the least significant bit, of the output of the mantissa adder 220, a 1 bit of the overflow from the most significant bit at the addition in the mantissa adder 220, the sticky bit 1 bit the sticky bit generating circuit 222 outputs so as to control the inversion of the bit to be effected by the mantissa correction circuit 223 and the addition of the round addition values in the mantissa adder 220 in accordance with the round precision, whether the single precision or the double precision reference numeral 225 is a latch of 54 bits for retaining the output of the shifter 221, reference numeral 226 is a product register for retaining the product, consisting of a sign portion 226s of 1 bit, an exponent portion 226e of 11 bits and a mantissa portion 226f of 53 bits. The most significant bit of the product register mantissa portion 226 is a so-called "hidden bit" having the weight of $2^0$, is 1 at the time of the normalized number, and the product register 226 except for this bit is in conformity with the double precision format. Fig. 15 is a inner block diagram of the multiplicand upper, lower selecting circuit 212 and the the multiplier upper, lower selecting circuit 213 shown in Fig. 14. Reference numeral 227 is a selector for selecting the upper 27 bits or 27 bits with 0 being expanded at the most significant bit to the lower 26 bits of the input of 53 bits. Fig. 16 is an operation illustrating chart showing the constants the round addition value generating circuit 217 generates shown in Fig. 14, wherein a round addition value A with the 25th bit only from the most significant bit being 1, the others being 0, a round addition value B with only 2nd bit from the most significant bit being 1, the others being 0, a round addition value C with only the least significant bit being 1, the others being 0 are generated. Fig. 17 is a control relation chart of the mantissa correction control circuit 224 shown in Fig. 14, where when the round precision is the single precision, as shown in Fig. 17 (a), the requirement of the bit inversion of the mantissa and the requirement of the readdition of the round addition value are determined from the bits of the 23rd bit through the 25th bit ($Z_{22}$, $Z_{23}$, $Z_{24}$) from the most significant bit of the output of the mantissa adder 220, the sticky bit (S) the sticks bit generating circuit 222 outputs and the overflow (Cout) in the mantissa adder 220. Also, when the round precision is the double precision, as shown in Fig. 17 (b), the requirement of the bit inversion of the mantissa and the requirement of the readdition of the round addition value are determined from the bits of the 3rd bit through the least significant bit ($Z_{51}$, $Z_{52}$, $Z_{53}$) from the least significant bit of the output of the mantissa adder 220, the sticky bit (S) the sticky bit generating circuit 222 outputs and the overflow (Cout) in the mantissa adder 220.

The multiplying apparatus of the floating point data in the present embodiment composed as described hereinabove will be described hereinafter in its operation. Here the round modes is provided by way of the rounding to nearest even mode.

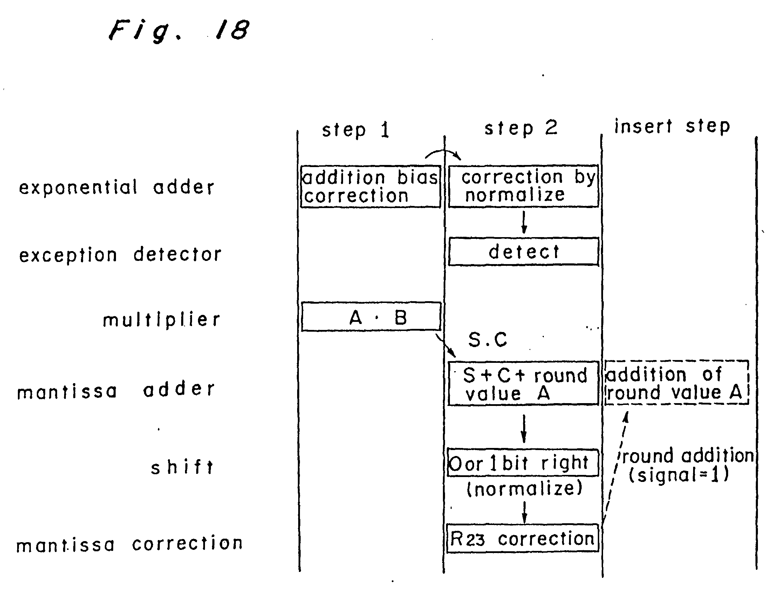

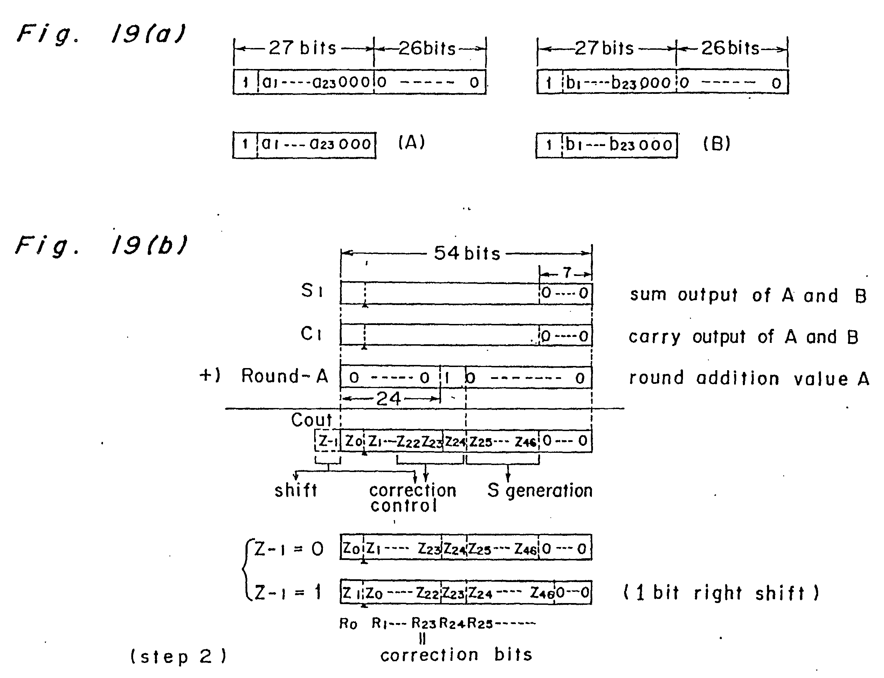

A case where the multiplicand and the multiplier are the single precision format, and the product is rounded into the single precision will be described with an operation flow chart of the single precision multiplication shown in Fig. 18 and the embodiment diagram of the addition and shift in the single precision multiplication shown in Fig. 19. Fig. 18 shows operations for each of the processing steps of the exponent adder 204, the exception detecting circuit 209, the multiplying unit 214, the mantissa adder 220, the shifter 221, the mantissa correction circuit 223. Fig. 19 shows the embodiment of the detailed operation in the mantissa adder 220 and the shifter 221 from among them. (1) Before Processing Step Start

The multiplicand and the multiplier at the single precision are expanded into the double precision and are respectively accommodated in the multiplicand register 201 and the multiplier register 202. At this time, the multiplicand register exponent portion 201e and the multiplier register exponent portion 202e are both converted into the biased expression of the above precision (real exponent value = value of exponent portion - $1023_{(10)}$), with 0 being filled in the lower 29 bits of the multiplicand register mantissa portion 201f and the multiplier register mantissa portion 202f. (2) Step 1

The exponent of the multiplicand retained in the multiplicand register exponent portion 201e by the selector 205 is inputted into the A input of the exponent adder 204, the exponent of the mulptiplier retained in the multiplier register exponent portion 202e by the selector 206 is input into the B input of the exponent adder 204 so as to effect the addition in the exponent adder 204 with the carry input Cin being provided as 1. The most significant bit of the addition result is inverted by the most significant bit correcting circuit 207. The addition result with the most significant bit being inverted is accommodated in the latch 210. The fact that the value to be retained in the latch 210 is the exponent of the product correctly biased can be proved as follows.

(Proof start)

In ANSI/IEEE Standard for Binary Floating-Point Arithmetic P754, the bias value of the double precision is assumed as follows ($^-$X is the inversion of X.).

$$\text{bias} = 011\ 1111\ 1111\ _{(2)}$$

It may be transformed

$$em = (e1\text{-bias}) + (e2 - \text{bias}) + \text{bias}$$

$$= e1 + e2 - \text{bias}$$

$$= e1 + e2 + {}^-\text{bias} + 1$$

$$= (e1 + e2 + 1) + {}^-\text{bias}$$

$$= (e1 + e2 + 1) + 100\ 0000\ 0000_{(2)}$$

wherein

e1:    biased exponent portion of the multiplicand (11 bits)

e2:    biased exponent portion of multiplier (11 bits)

em:    biased exponent portion of product (11 bits)

The addition of 1 of the third term can be realized with the carry input Cin being made 1. The addition of 100 0000 0000$_{(2)}$ of the forth term can be realized by the inversion of the most significant bit.

(Proof end)

The latch 208 retains the overflow in the exponent adder 204 at this time. The multiplicand upper, lower selecting circuit 212 reads, outputs the upper 27 bits of the multiplicand register mantissa portion 201f (the value A shown in Fig. 19 (a), with all the effective bits of the mantissa portion of the multiplicand being included in it, the lower 3 bits being 0). The multiplier upper, lower selecting circuit 213 reads, outputs the upper 27 bits of the multiplier register mantissa portion 202f (the value B shown in Fig. 19 (a), with all the effective bits of the mantissa portion of the multiplier being included in it, the lower 3 bits being 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216. At the same time, in the sign generating circuit 203, the signs of the multiplicand and the multiplier are read from the multiplicand register sign portion 201s and the multiplier register sign portion 202s so as to take the exclusive or of both and generate the sign of the product for accommodating it in the product register sign portion 226s.

(3) Step 2

The mantissa adder 220 adds the sum output (lower 7 bits are 0) of the multiplying unit 214 retained in the latch 215, the carry output (lower 7 bits are 0) of the multiplying unit 214 retained in the latch 216 by the selector 218, and the round addition value A the round addition value generating circuit 217 generates by the selector 219. By the presence, absence of the unit overflow ($Z_{-1}$) from the mantissa adder 220 at this time, one of the following is executed.

. When the overflow exists from the mantissa adder 220, namely, when the product of the mantissa portion is 2 or more

The shifter 221 shifts by 1 bit (at this time, 1 is filled in the most significant bit), in the least significant bit direction, the output from the mantissa adder 220 for normalization. The exponent adder 204 adds the value of the latch 210, the constant 1 the normalized correction value generating circuit 211 outputs by the selector 205 and the selector 206 so as to accommodate the result into the product register exponent portion 226e.

. When the overflow from the mantissa adder 220 does not exit, namely, when the product of the mantissa portion is 1 or more and less than 2

The shifter 221 outputs as it is without shifting the output from the mantissa adder 220 as the normalization is not necessary. The exponent adder 204 outputs the value of latch 210 as it is by the selector 205 and the selector 206 so as to accommodate it into the product register exponent portion 226e.

The value of the latch 208 is not allowed to change. The exception detecting circuit 209 detects in accordance with the following logic the overflow (OVF) and the underflow (UNF) of the product at the single precision by the output (which is assumed to be E) of the exponent adder 204.

    if E≥128$_{(10)}$ then OVF = 1 else OVF = 0

    if E≤996$_{(10)}$ then UNF = 1 else UNF = 0

The sticky bit generating circuit 222 takes the logical or of 22 bits of the 26th bit through the 47th bit ($Z_{25}$, ..., $Z_{46}$) from the most significant bit of the output of the mantissa adder 220 so as to make the sticky bit output (S) 1 if a bit of 1 in value exists no more than 1 in 22 bits, and to make the sticky bit output (S) 0 if all the bits of 22 bits are 0 in value. The mantissa correction control circuit 224 controls the mantissa correcting circuit 223 in accordance with the bits of 23rd bit through the 25th bit ($Z_{22}$, $Z_{23}$, $Z_{24}$) from the most significant bit of the output of the mantissa adder 220, the sticky bit (S) the sticky bit generating circuit 222 outputs and the overflow (Cout= $Z_{-1}$) in the mantissa adder. The mantissa correcting circuit 223 inverts the 24th bit ($R_{23}$) from the most significant of the output of the shifter 221 if the column of the correction signal of Fig. 17 (a) is 1. If the column is 0, the circuit effects to output it without being inverted. At the same time, if the column of the round adding signal of Fig. 17 (a) is 0, the output is accommodated in the product register mantissa portion 226f, with the lower 29 bits of 53 bits of the output of the mantissa correcting circuit 223 except for the most significant bit being masked in 0, so as to complete the processing. If the column of the round addition signal is 1, the output of the mantissa correction circuit 223 is accommodated in the latch 225, and thereafter, the following insertion step is executed.

(3) Insertion Step (only when the column of the round addition signal is 1)

The mantissa adder 220 adds the round addition value A the round addition value generating circuit 217 generates by the selector 218 and the value the latch 225 retains by the selector 219. At this time, the overflow from the mantissa adder 220 is not caused. The shifter 221 outputs the output of the mantissa adder 220 as it is without being shifted, and the mantissa correction circuit 223 also outputs the output of shifter 221 as it is without being bit inverted. Thereafter, the output is accommodated in the product register mantissa portion 226f, with the lower 29 bits of the 53 bits of the output of the mantissa correcting circuit 223 except for the most significant bit, being masked in 0 so as to complete the processing.

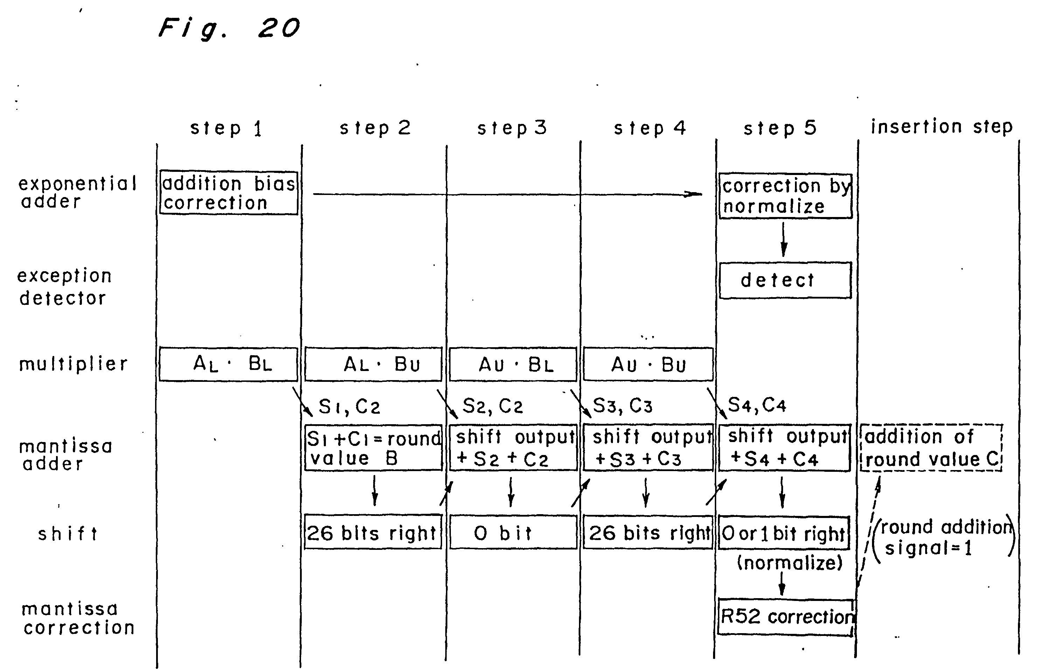

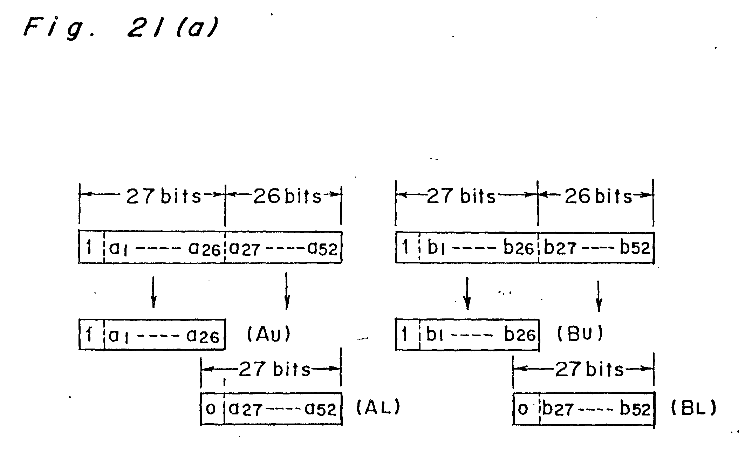

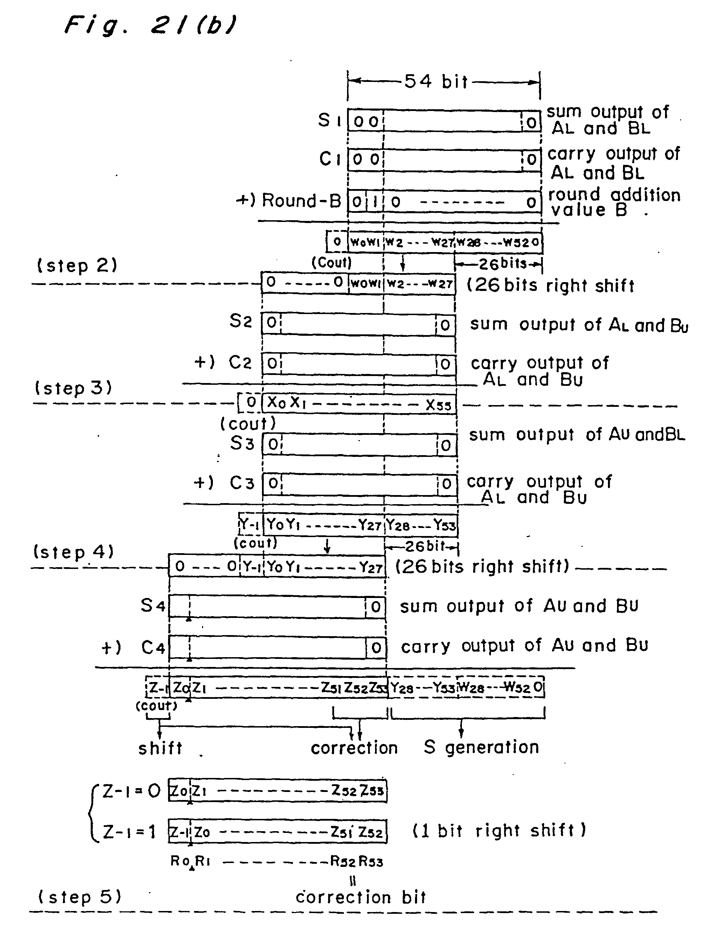

Then, a case, where the multiplicand and the multiplier are the double precision format, and the product is rounded into the double precision, will be described with an operation flow chart of the double precision multiplication shown in Fig. 20 and the embodiment diagram of the addition and shift in the double precision multiplication shown in Fig. 21. Fig. 20 shows operations for each of the processing steps of the exponent adder 204, the exception detecting circuit 209, the multiplying unit 214, the mantissa adder 220, the shifter 221, the mantissa correction circuit 223. Fig. 21 shows the embodiment of the detailed operation in the mantissa adder 220 and the shifter 221 from among them.

(1) Before Processing Step Start

The multiplicand and the multiplier at the double precision are respectively accommodated in the multiplicand register 201 and the multiplier register 202. At this time, the multiplicand register exponent portion 201e and the multiplier register exponent portion 202e are both converted into the biased expression (real exponent value = value of exponent portion - $1023_{(10)}$) of the double precision.

(2) Step 1

The exponent of the multiplicand retained in the multiplicard register exponent portion 201e by the selector 205 is inputted into the A input of the exponent adder 204, the exponent of the mulptiplier retained in the multiplier register exponent 202e by the selector 206 is input into the B input of the exponent adder 204 so as to effect the addition in the exponent adder 204 with the carry input Cin being provided as 1. The most significant bit of the addition result is inverted by the most significant bit correcting circuit 207. The addition result with the most significant bit being inverted is accommodated in the latch 210. The fact that the value to be retained in the latch 210 is the exponent of the product correctly biased is proved in the description of the single precision multiplication. The latch 208 retains the overflow in the exponent adder 204 at this time. The multiplicand upper, lower selecting circuit 212 reads, outputs the lower 27 bits of the multiplicand register mantissa portion 201f (the value AL shown in Fig. 21 (a), the most significant bit being 0). The multiplier upper, lower selecting circuit 213 reads, outputs the lower 27 bits of the multiplier register mantissa portion 202f (the value BL shown in Fig. 21 (a), the most significant bit being 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216. At the same time, in the sign generating circuit 203, the signs of the multiplicand and the multiplier are read from the multiplicand register sign portion 201s and the multiplier register sign portion 202s so as to take the exclusive or of both and generate the sign of the product for accommodating it in the product register sign portion 226s.

(3) Step 2

The mantissa adder 220 adds the sum output (upper 2 bits and the least significant bit are 0) of the multiplying unit 214 retained in the latch 215, the carry output (upper 2 bits and the least significant bit are 0) of the multiplying unit 214 retained in the latch 216 by the selector 218, and the round addition value B the round addition value generating circuit 217 generates by the selector 219. The overflow from the mantissa adder 220 at this time is not caused. The shifter 221 shifts the output of the mantissa adder 220 ($W_0$, ..., $W_{52}$, 0) by 26 bits in the least significant bit direction (at this time 0 is filled in the upper) so that the result (0, ..., 0, $W_0$, ..., $W_{27}$) are accommodated in the latch 225. The value accommodated in the latch 225 is the least significant partial product. At the same time, the multiplicand upper, lower selecting circuit 212 reads, outputs the lower 27 bits of the multiplicand register mantissa portion 201f (the value AL shown in Fig. 21 (a), the most significant bit is 0), the multiplier upper, lower selecting circuit 213 reads, outputs the upper 27 bits of the multiplier register mantissa portion 202f (the value BU shown in Fig. 21 (a)). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(4) Step 3

The mantissa adder 220 adds the sum output (the most significant bit and the least significant bit are 0) of the multiplying unit 214 retained in the latch 215, the carry output (the most significant bit and the least significant bit are 0) of the multiplying unit 214 retained in the latch 216 by the selector 218, and the output of the shifter 221 (upper 26 bits are 0) retained at the latch 225 by the selector 219. The overflow from the mantissa adder 220 is not caused at this time. The shifter 221 outputs the output of the mantissa adder 220 ($X_0$, ..., $X_{53}$), as it is without shifting so as to accommodate it in the latch 225. The value accommodated in the latch 225 is accumulated as far as the first intermediate partial product. At the same time, the multiplicand upper, lower selecting circuit 212 reads, outputs the upper 27 bits of the multiplicand register mantissa portion 201f (the value AU shown in Fig. 21 (a)), the multiplier upper, lower selecting circuit 213 reads, outputs the lower 27 bits of the multiplier register mantissa portion 202f (the value BL shown in Fig. 21 (a), the most significant bit is 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(5) Step 4

The mantissa adder 220 adds the sum output (the most significant bit and the least significant bit are 0) of the multiplying unit 214 retained in the latch 215, the carry output (the most significant bit and the least significant bit are 0) of the multiplying unit 214 retained in the latch 216 by the selector 218, and the output of the shifter 221 retained at the latch 225 by the selector 219. The shifter 221 shifts the data of 55 bits ($Y_{-1}$, $Y_0$, ..., $Y_{53}$) consisted of the output of 54 bits ($Y_0$, ..., $Y_{53}$) with the overflow of 1 bit ($Y_{-1}$) from the mantissa adder 220 being added onto the most significant bit side by 26 bits in the least significant bit direction (at this time, 0 is buried in the upper). The output of the mantissa adder 220, so that the result (0, ..., 0, $Y_{-1}$, $Y_0$, ..., $Y_{27}$) are accommodated in the latch 225. The values accommodated in the latch 225 is accumulated so far as the second intermediate partial product. At the same time, the multiplicand upper, lower selecting circuit 212 reads, outputs the upper 27 bits of the multiplicand register mantissa portion 201f (the value AU shown in Fig. 21 (a)), the multiplier upper, lower selecting circuit 213 reads, outputs the upper 27 bits of the multiplier register mantissa portion 202f (the value BU shown in Fig. 21 (a)). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(6) Step 5

The mantissa adder 220 adds the sum output (the least significant bit is 0) of the multiplying unit 214 retained in the latch 215, the carry output (the least significant bit is 0) of the multiplying unit 214 retained in the latch 216 by the selector 218, the output of the shifter 221 (the upper 25 bits are 0) retained at the latch 225 by the selector 219. By the presence, absence of the overflow ($Z_{-1}$) from the mantissa adder 220 at this time, one of the following is executed.

. When the overflow exists from the mantissa adder 220, namely, when the product of the mantissa portion is 2 or more

The shifter 221 shifts by 1 bit (at this time, 1 is filled in the most significant bit), in the least significant bit direction, the output from the mantissa adder 220 for normalization. The exponent adder 204 adds the value of the latch 210, the constant 1 the normalized correction value generating circuit 211 outputs by the selector 205 and the selector 206 so as to accommodate the result into the product register exponent portion 226e.

. When the overflow from the mantissa adder 220 does not exit, namely, when the product of the mantissa portion is 1 or more and less then 2

The shifter 221 outputs as it is without shifting the output from the mantissa adder 220 as the normalization is not necessary. The exponent adder 204 outputs the value of latch 210 as it is by the selector 205 and the selector 206 so as to accommodate it into the product register exponent portion 226e.

The value of the latch 208 is not allowed to change. The exception detecting circuit 209 detects in accordance with the following logic fomula the overflow (OVF) and the underflow (UNF) of the product at the double precision by the output (which is assumed to be $E_0$, ..., $E_{10}$) of the exponent adder 204 and the value of the latch 8 (which is assumed to be Ce).

$$OVF = Ce \cdot {}^-E_0 + E_0 \cdot E_1 . ... . E_{10}$$

$$UNF = {}^-Ce \cdot E_0 + {}^-(E_0 + E_1 + ... + E_{10})$$

wherein $^-X$ shows the inversion of X.

The sticky bit generating circuit 222 takes the logical or of 52 bits with the shift overflow ($W_{28}$, ..., $W_{52}$, 0) from the least significant bit of 26 bits in the shifter 221 at the step 2, and the shift overflow ($Y_{28}$, ..., $Y_{53}$) from the least significant bit of 26 bits in the shifter 221 at the step 4 being combined so as to make the sticky bit output (S) 1 if a bit of 1 in value exists no more than 1 in 52 bits, and to make the sticky bit output (S) 0 if all the bits of 52 bits are 0 in value. The mantissa correction control circuit 224 controls the mantissa correcting circuit 223 in accordance with the bits of the 3rd bit through the least significant bits ($Z_{51}$, $Z_{52}$, $Z_{53}$) from the least significant bit of the output of the mantissa adder 220, the sticky bit (S) the sticky bit generating circuit 222 outputs and the overflow (Cout= $Z_{-1}$) in the mantissa adder 220. The mantissa correcting circuit 223 inverts the 2nd bit ($R_{52}$) from the least significant of the output of the shifter 221 if the column of the correction signal of Fig. 17 (b) is 1. If the column is 0, the circuit effects to output it without being inverted. At the same time, if the column of the round adding signal of Fig. 17 (b) is 0, 53 bits of the output of the mantissa correcting circuit 223 except for the least significant bit is accommodated in the product register mantissa portion 226f so as to complete the processing. If the column of the round addition signal is 1, the output of the mantissa correction circuit 223 is accommodated in the latch 225, and thereafter, the following insertion step is executed.

(6) Insertion Step ( only when the column of the round addition signal is 1)

The mantissa adder 220 adds the round addition value C the round addition value generating circuit 217 generates by the selector 218 and the value the latch 225 retains by the selector 219. At this time, the overflwo from the mantissa adder 220 is not caused. The shifter 221 outputs the output of the mantissa adder 220 as it is without being shifted, and the mantissa correction circuit 223 also outputs the ouput of shifter 22 as it is without being bit inverted. Thereafter, the 53 bits of the output of the mantissa correcting circuit 223 except for the least significant bit is accommodated in the product register mantissa portion 226f so as to complete the processing.

According to the present embodiment as described hereinabove, the subtraction of the bias value is realized by the addition with the carry input Cin being made 1 in the exponent adder 204 being made 1, and the inversion of the most significant bit by the most significant bit correcting circuit 7, and the biased exponent portion of the product of the floating point format applied as in the multiplicand and the multiplier may be obtained with the single processing step, so that a step of correcting the bias of the exponent portion is not required. Also, the most significant bit correcting circuit 207 may be realized briefly by the exclusive or gate of 1 bit and the other special hardwares for bias correction are not required, thus reducing the hardware.

According to the present embodiment, in the mantissa portion, the addition of the round addition values or the addition for accumulating the partial products and the addition of the sum output and the carry output from the multiplying unit 214 are effected at the same time by the mantissa adder 220. After the normalization of the result by the shifter 221, the processing may be completed in most cases. Even when the correction in the mantissa correcting circuit 223 is necessary, the processing may be completed without the increase in the processing step number. Only when the addition of the round addition values by the mantissa adder 220 is made necessary again, the processing may be completed by the insertion of 1 step. The probability necessary in the insertion of the 1 step is as extremely small as two thirty-seconds (when it is assumed that the bit pattern of the mantissa is evenly distributed). As the result, in most case (thirty thirty-seconds in provability), the processing step number necessary in the single precision multiplication becomes as small as 2, the processing step number necessary in the double precision multiplication becomes as small as 5. Since the addition of the sum and the carry, the addition of the round addition value or the addition for accumulating the partial products are effected by the single mantissa adder 220, the necessary hardwares are less as compared with the conventional multiplying apparatus of the floating point data.

Although the present embodiment provides the example of realizing the rounding to nearest even mode, the directed rounding toward plus mode, the directed rounding toward minus mode and the directed rounding toward zero mode may be also coped with easily by change in the control of the round addition value generating circuit 217 and the mantissa correction control circuit 224. The operation on the round at these modes is similar to that of the first embodiment, and the inversion of the bit of the mantissa computation result and the control of the insertion of the processing step are effected in accordance with the control relation charts of Fig. 4, Fig. 5 and Fig. 6.

In the present embodiment, although a case where the multiplicand and the multiplier both are the single precision format, and the product is rounded into the single precision, and a case where the multiplicand and the multiplier both are, the double precision format, and the product is rounded into the double precision have been described, the product rounded into the given precision may be obtained by the corresponding of the generation logic of the sticky bit in the sticky bit generating circuit 222 into all the effective bits lower than the round bit even in any combination of the precision of multiplicand and multiplier or any round precision of the product.

In the present embodiment, although in accordance with the single precision, the double precision in the round precision, the mantissa correction control circuit 224 inspects the bits of 23rd bit through the 25th bit from the most significant bit of the output of the mantissa adder 220 or the bits of the 3rd bit through the least significant bit from the least significant bit and the overflow of 1 bit from the most significant bit at the addition time in the mantissa adder 220 and the sticky bit of 1 bit the sticky bit generating circuit 222 outputs, and the mantissa correction circuit 223 inverts the 24th bit or the 53rd bit from the most significant bit of the output of the shifter 221, the inspected bit and the inverted bit may be increased in the most significant bit direction. The probability necessary in the insertion of 1 step is halved for each increase in one bit of the inspected bit and the inverted bit, thus improving the computation speed.

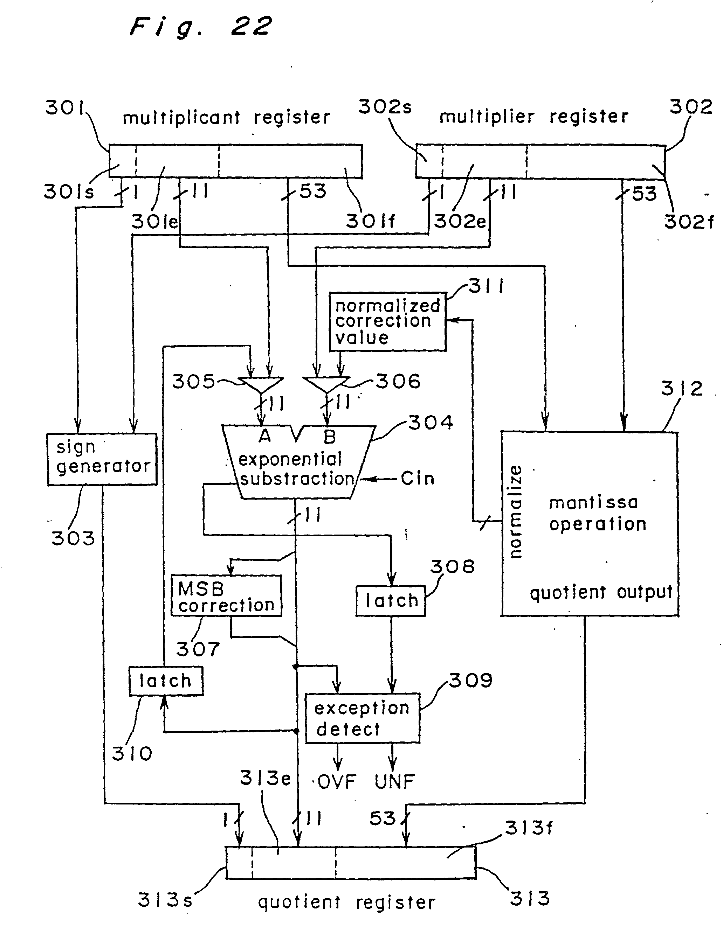

Fig. 22 shows a block diagram of the division apparatus of the floating point data incorporating a second embodiment of the present invention. In Fig. 22, reference numeral 301 is a dividend register for retaining the dividend, consisting of 1 bit of sign portion 301s, an exponent portion 301e of 11 bits, and 53 bits of mantissa portion 301f. Reference numeral 302 is a divisor register for retaining the divisor, consisting of a sign portion 302s of 1 bit, an exponent portion 302e of 11 bits and a mantissa portion 302f of 53 bits. The most significant bit of the dividend register mantissa portion 301f and the divisor mantissa portion 302f is so-called "hidden bit" each having the weight of $2^0$, being 1 at the time of the normalized number, the dividend register 301 and the divisor register 302 are both in conformity with the double precision format except for this bit. Reference numeral 303 is a sign generating circuit for reading the signs of the dividend and the divisor from the dividend register sign portion 301s and the divisor register sign portion 302s so as to generate the sign of the quotient, reference numeral 304 is an exponent subtractor of 11 bits for reading the exponents of the dividend and the divisor from the dividend register exponent portion 301e and the divisor register exponent portion 302e so as to compute the exponent of the quotient, the addition of the A input, the B input with 1's complement being taken, and the Cin as the carry input of 1 bit is effected. Reference numerals 305 and reference numeral 306 are respectively selectors of 11 bits for selecting the two inputs of the exponent subtractor 304, reference numeral 307 is a most significant bit correcting circuit for inverting the most signficant bit of the output of the exponent subtractor 304, reference numeral 308 is a latch of 1 bit for retaining the overflow from the most significant bit at the addition time in the subtractor adder 304, reference numeral 309 is an exception detecting circuit for detecting the overflow and the underflow of the quotient with respect to the computation precision detected from the value of the output of the exponent subtractor 304 and the value of the latch 308, reference numeral 310 is a latch of 11 bits for retaining the output of the exponent subtractor 304 inverted in the most significant bit by the most significant bit correcting circuit 307 so as to input them into the exponent subtractor 304 again through the selector 305, reference numeral 311 is a normalized correction value generating circuit for generating the constant for reducing the exponent by 1 through the normalization of the 1 bit shift of the mantissa of the quotient, reference numeral 312 is a well known art of mantissa computing unit for reading the dividend register mantissa portion 301f and the divisor register mantissa portion 302f so as to obtain the mantissa of the quotient, a signal whether or not it is required to be normalized, reference numeral 313 is a quotient register for retaining the quotient, consisting of a sign portion 313s of 1 bit, an exponent portion 313e of 11 bits and a mantissa portion 313f of 53 bits. The most significant bit of the quotient register mantissa portion 313f is a so-called "hidden bit" having the weight of $2^0$, is 1 at the time of the normalized number, and the quotient register 313 except for this bit is in conformity with the double precision format.

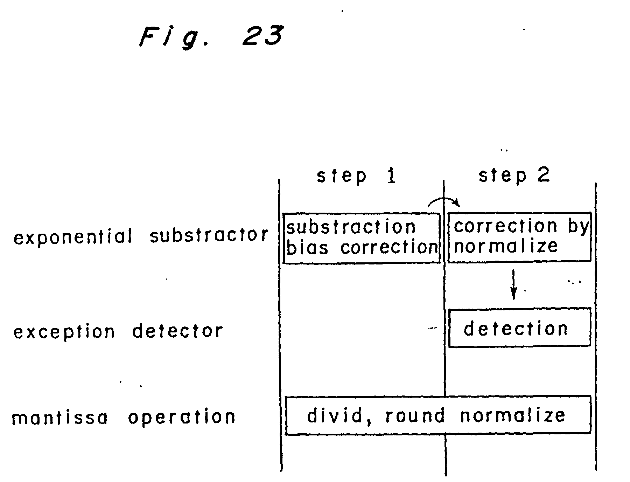

The division apparatus of the floating point data in the present embodiment composed as described hereinabove will be described in its operation hereinafter with the use of the operation flow chart of the division shown in Fig. 23. Fig. 23 shows the operations for each of the processing steps of the exponent subtractor 304, the exception detecting circuit 309, the mantissa computing unit 312.

(1) Before Processing Step Start

When the dividendand the divisor are the single precision format, they are expanded at the double precision format and are respectively accommodated in the dividend register 301 and the divisor register 302. When the dividend and the divisor are the double precision format, they are accommodated as they are into the dividend register 301 and the divisor register 302. In any case, the dividend register exponent portion 301e and the divisor register exponent portion 302e are both converted into the biased expression of the double precision (real exponent value = value of exponent portion - $1023_{(10)}$).

(2) Step 1

The exponent of the dividend retained in the dividend register exponent portion 301e is input into the A input of the exponent subtracter 304 by the selector 305 , the exponent of the divisor retained in the divisor register exponent 302e is input into the B input of the exponent subtracter 304 by the selector 306 so as to effect the addition of A + ⁻B + Cin in the exponent subtracter 304 with the carry input Cin being provided as 0 (⁻B is 1's complement of B. At Cin = 0, this addition is equivalent to A - B - 1). The most significant bit of the addition result is inverted by the most significant bit correcting circuit 307. The addition result with the most significant bit being inverted is accommodated in the latch 310. The fact that the value to be retained in the latch 310 is the exponent of the quotient correctly biased can be proved as follows. (Proof start)

In ANSI/IEEE Standard for Binary Floating-Point Arithmetic P754, the bias value of the double precision is assumed as follows (⁻X is the inversion of X).

$$bias = 011\ 1111\ 1111_{(2)}$$

It may be transformed

$$ed = (e1 - bias) - (e2 - bias) + bias$$

$$= e1 - e2 + bias$$

$$= e1 + {}^-e2 + 1 + bias$$

$$= (e1 + {}^-e2) + (bias + 1)$$

$$= (e1 + {}^-e2) + 100\ 0000\ 0000_{(2)}$$

wherein

e1:    biased exponent portion of the dividend (11 bits)
e2:    biased exponent portion of divisor (11 bits)
ed:    biased exponent portion of quotient (11 bits)

The addition of $100\ 0000\ 0000_{(2)}$ of the third term can be realized with the inversion of the most significant bit.

(Proof end)

The latch 308 retains the overflow in the exponent subtractor 304 at this time. The mantissa computing unit 312 reads the mantissas of the dividend and the divisor from the dividend register mantissa portion 301f and the divisor register mantissa portion 302f so as to start the division. At the same time, in the sign generating circuit 203, the signs of the dividend and the divisor are read from the divided register sign portion 301s and the divisor register sign portion 302s so as to take the exclusive or of both and generate the sign of the quotient for accommodating it in the quotient register sign portion 313s.

(3) Step 2

The mantissa computing unit 312 generates the mantissa portion of the quotient and effects the round. When the mantissa portion of the generated quotient is a denormalized number, namely, the value is 0.5 or more and less than 1, the mantissa computing unit 312 shifts the mantissa portion of the quotient generated by 1 bit in the most significant bit direction so as to normalize it, and the exponent subtracter 304 subtracts the constant 1 the normalized correction value generating circuit 311 outputs from the value of the latch 310 by the selector 305 and the selector 306. When the mantissa portion of the quotient generated is a normalized number, namely, when the value is 1 or more and less than 2, the mantissa computing unit 312 outputs the mantissa portion of the quotient generated as it is, and also, the exponent subtracter 304 also outputs the value of the latch 310, as it is, by the selector 305. Even in any case, the mantissa computing unit 312 accommodates the result with the lower 29 bits of the 53 bits of the result except for the least significant bit being masked in 0 when the round precision and the result of 53 bits except for the least significant bit when the round precision is in the double precision in the quotient register mantissa portion 313f. The exponent subtracter 304 accommodates the result into the quotient exponent portion 313e. The value of the latch 308 is not allowed to change. The exception detecting circuit 309 detects in accordance with the following logic the overflow (OVF) and the underflow (UNF) of the quotient by the output (which is assumed to be E) of the exponent adder 304 when the round precision is the single precision.

if $E \geq 128_{(10)}$ then OVF = 1 else OVF = 0
if $E \leq 996_{(10)}$ then UNF = 1 else UNF = 0

When the round precision is the double precision, in accordance with the following logic formula, the overflow (OVF) and the underflow (UNF) of the quotient are detected by the output (which is assumed to be $E_0$, ..., $E_{10}$) of the exponent subtracter 304 and the value of the latch 308 (which is assumed to be Ce).

$$OVF = Ce \cdot {}^-E_0 + E_0 \cdot E_1 \cdot ... \cdot E_{10}$$

$$UNF = {}^-Ce \cdot E_0 + {}^-(E_0 + E_1 + ... + E_{10})$$

wherein ⁻X shows the inversion of X.

According to the present embodiment as described hereinabove, the addition of the bias value is realized with the subtraction of the (exponent of dividend) - (exponent of divisor) - 1 by the exponent subtracter 304 with the carry input Cin being made 0, and the inversion of the most significant bit with the most significant bit correcting circuit 307, and the biased exponent portion of the quotient of the floating point format applied as in the dividend and the divisor may be obtained with the single processing step, so that a step of correcting the bias of the exponent portion is not required. Also, the most significant bit correcting circuit 307 may be realized briefly by the exclusive or gate of 1 bit and the other special hardwares for bias correction are not required, thus reducing the hardwares.

As described hereinabove, in accordance with with the present invention, the processing step number necessary to obtain the mantissa portion of the sum, difference and the product of the floating point data rounded with the specified round mode and the round precision may be reduced. Also, as compared with the conventional computing apparatus of the floating point data, less hardwares may be realized, with larger effects in the practical use.

According to the present invention, the processing step number necessary to obtain the exponent portion of the product and quotient of the bias corrected floating point data may be reduced. Also, as compared with the conventional computing apparatus of the floating point data, less hardwares may be realized, with larger effects in the practical use.

Although the present invention has been fully described by way of example with reference to the accompanying drawings, it is to be noted here that various changes and modifications will be apparent to those skilled in the art. Therefore, unless otherwise such changes and modifications depart from the scope of the present invention as claimed, they should be construed as included therein.

**Claims**

1. A method for multiplying two floating point data comprising the steps of

   - effecting an operation of obtaining a larger value by 1 to a value corresponding to the sum of the biased exponent portion of the multiplicand and the samely biased exponent portion of the multiplier being added,

   - inverting the most significant bit of the operation result after the operation so as to obtain a samely biased exponent portion of the product of said floating point data as in the multiplicand and the multiplier.

2. A method for dividing two floating point data comprising the steps of

   - effecting an operation of obtaining a value smaller by 1 of a value corresponding to the subtraction of a biased exponent portion of the divisor from a samely biased exponent portion of the dividend,

   - inverting the most significant bit of the operation results after the operation so as to obtain a samely biased exponent portion of the quotient of the floating point type as in the dividend and the divisor.

3. A multiplying apparatus of floating point data comprising

   - an exponent adding means for obtaining the value where I is added to the sum of the respective exponent portions of the multiplicand and the multiplier of the floating type having the biased exponent portion,

   - a most significant bit correcting means for inverting the most significant bit of the output of the exponent adding means, <u>wherein</u> the bias correction is effected after the addition of the exponent values of the two floating point data so as to obtain the exponent portion of the product of the floating point type samely biased as in the multiplicand and the multiplier.

4. A multiplying apparatus of floating point data according to claim 3, further comprising,

   - a normalized exponent correcting means for adding, subtracting the numbers equal to the shift bit numbers for normalizing the product with respect to the output of the exponent adding means with the most significant bit being inverted by the most significant bit correcting means, and

   - an exceptional detecting means for detecting the overflow and the underflow of the product by the carry output showing the carry from the most significant bit of the exponent adding means and the output from the normalized

   - exponent correcting means, wherein the overflow and the underflow of the product after the normalization of the mantissa portion of the product are detected.

5. A dividing apparatus of the floating point data comprising

   - an exponent subtracting means for obtaining a value smaller by 1 than a value with an exponent portion of the divisor of the floating point type from the exponent portion of the dividend of the floating point type having the biased exponent portion,

- a most significant bit correcting means for inverting the most significant bit of the output of the exponent subtracting means, <u>wherein</u> the bias correction is effected after the subtraction of the exponent values of the two floating point data so as to obtain the exponent portion of the quotient of the floating point type samely biased as in the dividend and the divisor.

6. A dividing apparatus of the floating point data according to claim 5, further comprising,

   - a normalized exponent correcting means for adding, subtracting the numbers equal to the shift bit numbers for normalizing the quotient with respect to the output of the exponent subtracting means being inverted in the most significant bit by the most significant bit correcting means, and

   - an exceptional detecting means for detecting the overflow and the underflow of the quotient with the carry output showing the carry from the most significant bit of the exponent subtracting means and the output from the above described normalized exponent correcting means, wherein the overflow and the underflow of the quotient after the normalization of the mantissa portion of the quotient are detected.

## Patentansprüche

1. Verfahren zum Multiplizieren zweier Gleitkommadaten mit den Schritten

   - Bewirken einer Operation zum Erhalten eines um 1 größeren Werts gegenüber einem der Summe des verschobenen Exponentenabschnitts des Multiplikanten und des in gleicher Weise verschobenen Exponentenabschnitts des addierten Multiplikators, entsprechenden Wert,

   - Invertieren des höchstwertigen Bits des Operationsergebnisses nach der Operation, um einen in gleicher Weise verschobenen Exponentenabschnitt des Produkts der Gleitkommadaten wie in dem Mulitplikanten und dem Multiplikator zu erhalten.

2. Verfahren zum Dividieren zweier Gleitkommadaten mit den Schritten:

   - Bewirken einer Operation zum Erhalten eines um 1 kleineren Werts gegenüber einem der Substraktion eines verschobenen Exponentenabschnitts des Divisors von einem in gleicher Weise verschobenen Exponentenabschnitts des Dividenden entsprechenden Wert,

   - Invertieren des höchstwertigen Bits des Operationsergebnisses nach der Operation um einen in gleicher Weise verschobenen Exponentenabschnitt des Quotienten des Gleitkommatyps wie bei dem Dividendem und dem Divisor zu erhalten.

3. Mulipliziervorrichtung für Gleitkommadaten mit

   - einer Exponentenaddiereinrichtung zum Erhalten des Werts, bei dem 1 zu der Summe der jeweiligen Exponentenabschnitte des Multiplikanten und des Multiplikators des Gleitkommatyps mit dem verschobenen Exponentenabschnitt addiert wird,

   - einer Höchstwertbitkorrektureinrichtung zum Invertieren des höchstwertigen Bits der Ausgabe der Exponentenaddiereinrichtung, <u>wobei</u> die Verschiebekorrektur nach der Addition der Exponentenwerte der beiden Gleitkommadaten bewirkt wird, um den Exponentenabschnitt des Produkts des Gleitkommatyps zu erhalten, der in gleicher Weise wie der Multiplikant und der Multiplikator verschoben ist.

4. Multipliziervorrichtung für Gleitkommadaten gemäß Anspruch 3, weiterhin umfassend:

   - eine Normalisierexponentkorrektureinrichtung zum Addieren, Subtrahieren der mit den Verschiebebitnummern übereinstimmenden Nummern zur Normalisierung des Produkts gegenüber der Ausgabe der Exponentenaddiereinrichtung, wobei das höchstwertige Bit durch die Höchstwertbitkorrektureinrichtung invertiert wird, und

   - eine Ausnahmeerfassungseinrichtung zum Erfassen des Überlaufs und des Unterlaufs des Produkts, wobei die Übertragsausgabe den Übertrag von dem höchstwertigen Bit der Exponentenaddiereinrichtung und der Ausgabe der Normalisierexponentenkorrektureinrichtung zeigt, wobei der Überlauf und der Unterlauf des Produkts nach der Normalisierung des Mantissenabschnitts des Produkts erfasst werden.

5. Die Dividiervorrichtung für Gleitkommadaten mit

   - einer Exponentensubstraktionseinrichtung zum Erhalten eines um 1 kleineren Werts gegenüber einem Wert mit einem Exponentenabschnitt des Divisors des Gleitkommatyps aus dem Exponentenabschnitt des Dividenden des Gleitkommatyps mit dem verschobenen Exponentenabschnitt,

- eine Höchstwertbitkorrektureinrichtung zum Invertieren des höchstwertigen Bits der Ausgabe der Exponentensubtraktionseinrichtung, <u>wobei</u> die Verschiebekorrektur bewirkt wird nach der Substraktion der Exponentenwerte der beiden Gleitkommadaten, um den Exponentenabschnitt des Quotienten des Gleitkommatyps mit gleicher Verschiebung wie der Dividend und der Divisor zu erhalten.

**6.** Dividiervorrichtung für Gleitkommadaten nach Anspruch 5, weiterhin umfassend,

- eine Normalisierexponentkorrektureinrichtung zum Addieren, Subtrahieren der mit den Verschiebebitnummern übereinstimmenden Nummern zur Normalisierung des Quotienten bezüglich der Ausgabe der Exponentensubtrahiereinrichtung, die in dem höchstwertigen Bit durch die Höchstwertbitkorrektureinrichtung invertiert wird, und

- eine Ausnahmeerfassungseinrichtung zum Erfassen des Überlaufs und des Unterlaufs des Quotienten, wobei die Übertragsausgabe den Übertrag von dem höchstwertigen Bit der Exponentensubtrahiereinrichtung und der Ausgabe der vorstehend beschriebenen Normalisierexponentenkorrektureinrichtung zeigt, wobei der Überlauf und der Unterlauf des Quotienten nach der Normalisieren des Mantissenabschnitts des Quotienten erfasst werden.

**Revendications**

**1.** Méthode destinée à multiplier deux données en virgule flottante, comprenant les étapes consistant à :

- effectuer une opération d'obtention d'une valeur supérieure de 1 à une valeur correspondant à la somme de la partie d'exposant biaisée du multiplicande et de la partie d'exposant biaisée de la même façon du multiplicateur que l'on ajoute,
- inverser le bit le plus significatif du résultat de l'opération, après l'opération, de façon à obtenir une partie d'exposant du produit desdites données en virgule flottante, biaisée de la même façon que dans le multiplicande et le multiplicateur.

**2.** Méthode pour diviser deux données en virgule flottante comprenant les étapes consistant à :

- effectuer une opération d'obtention d'une valeur inférieure de 1 à une valeur correspondant à la soustraction d'une partie d'exposant biaisée du diviseur d'une partie d'exposant biaisée de la même façon du dividende,
- inverser le bit le plus significatif du résultat de l'opération, après l'opération, de sorte à obtenir une partie d'exposant du quotient du type en virgule flottante, biaisée de la même façon que dans le dividende et le diviseur.

**3.** Appareil de multiplication de données en virgule flottante comprenant

- un moyen d'addition d'exposant pour obtenir la valeur où 1 est ajouté à la somme des parties d'exposant respectives du multiplicande et du multiplicateur du type en virgule flottante ayant la partie d'exposant biaisée,
- un moyen de correction de bit le plus significatif pour inverser le bit le plus significatif de la sortie du moyen d'addition d'exposant, <u>dans lequel</u> la correction de biais est effectuée après l'addition des valeurs d'exposant des deux données en virgule flottante de sorte à obtenir la partie d'exposant du produit du type en virgule flottante, biaisée de la même façon que dans le multiplicande et le multiplicateur.

**4.** Appareil de multiplication de données en virgule flottante selon la revendication 3, comprenant de plus,

- un moyen de correction d'exposant normalisé pour additionner, soustraire les nombres égaux aux nombres à bit décalé pour normaliser le produit par rapport à la sortie du moyen d'addition d'exposant, le bit le plus significatif étant inversé par le moyen de correction de bit le plus significatif, et

- un moyen exceptionnel de détection pour détecter le dépassement et le soupassement de capacité du produit à l'aide de la sortie de report indiquant le report issu du bit le plus significatif du moyen d'addition d'exposant et la sortie du moyen de correction d'exposant normalisé, dans lequel le dépassement et le soupassement de capacité du produit sont détectés après la normalisation de la partie mantisse du produit.

**5.** Appareil de division de données en virgule flottante comprenant,

- un moyen de soustraction d'exposant pour obtenir une valeur inférieure de 1 à une valeur ayant une partie d'exposant du diviseur du type en virgule flottante à partir de la partie d'exposant du dividende du type en virgule flottante ayant la partie d'exposant biaisée,

- un moyen de correction de bit le plus significatif pour inverser le bit le plus significatif de la sortie du moyen de soustraction d'exposant, dans lequel la correction du biais s'effectue après soustraction des valeurs d'exposant des deux données en virgule flottante de sorte à obtenir la partie d'exposant du quotient du type en virgule flottante, biaisée de la même façon que dans le dividende et le diviseur.

6. Appareil de division des données en virgule flottante selon la revendication 5, comprenant de plus,

- un moyen de correction d'exposant normalisé pour ajouter, soustraire les nombres égaux aux nombres à bits décalés afin de normaliser le quotient par rapport à la sortie du moyen de soustraction d'exposant, étant inversée dans le bit le plus significatif par le moyen de correction de bit le plus significatif, et
- un moyen exceptionnel de détection pour détecter le dépassement et le soupassement de capacité du quotient, la sortie de report indiquant le report issu du bit le plus significatif du moyen de soustraction d'exposant et la sortie du moyen de correction d'exposant normalisé décrit ci-dessus, dans lequel le dépassement et le soupassement de capacité du quotient sont détectés après normalisation de la partie mantisse du quotient.

Fig. 1

Fig. 2

EP 0 820 005 B1

# Fig. 3(a)

| real value | | value of adding 1 to $2^{-24}$ | value after real rounding | reround signal | correction signal |
|---|---|---|---|---|---|
| $2^1$ | $2^{-22}\,2^{-23}\,2^{-24}\,S$ | $C\;2^{-22}\,2^{-23}\,2^{-24}\,S$ | $C\;2^{-22}\,2^{-23}$ | | |
| 0 | 0 0 0 0 | 0 0 0 1 \| 0 | 0 0 0 | 0 | 0 0 |
| 1 | | | 0 0 | 0 | 0 0 |
| 0 | 0 0 0 1 | 0 0 0 1 \| 1 | 0 0 0 | 0 | 0 0 |
| 1 | | | 0 0 | 0 | 0 0 |
| 0 | 0 0 1 0 | 0 0 1 0 \| 0 | 0 0 0 | 0 | 0 1 |
| 1 | | | 0 0 | 0 | 0 0 |
| 0 | 0 0 1 1 | 0 0 1 0 \| 1 | 0 0 1 | 0 | 0 0 |
| 1 | | | 0 0 | 0 | 0 0 |
| 0 | 0 1 0 0 | 0 0 1 1 \| 0 | 0 0 1 | 0 | 0 0 |
| 1 | | | 0 0 | 0 | 0 0 |
| 0 | 0 1 0 1 | 0 0 1 1 \| 1 | 0 0 1 | 0 | 0 0 |
| 1 | | | 0 1 | 0 | 0 1 |
| 0 | 0 1 1 0 | 0 1 0 0 \| 0 | 0 1 0 | 0 | 0 0 |
| 1 | | | 0 1 | 0 | 0 0 |
| 0 | 0 1 1 1 | 0 1 0 0 \| 1 | 0 1 0 | 0 | 0 0 |
| 1 | | | 0 1 | 0 | 0 0 |
| 0 | 1 0 0 0 | 0 1 0 1 \| 0 | 0 1 0 | 0 | 0 0 |
| 1 | | | 0 1 | 0 | 0 0 |
| 0 | 1 0 0 1 | 0 1 0 1 \| 1 | 0 1 0 | 0 | 0 0 |
| 1 | | | 0 1 | 0 | 0 0 |
| 0 | 1 0 1 0 | 0 1 1 0 \| 0 | 0 1 0 | 0 | 0 1 |
| 1 | | | 0 1 | 0 | 0 0 |
| 0 | 1 0 1 1 | 0 1 1 0 \| 1 | 0 1 1 | 0 | 0 0 |
| 1 | | | 0 1 | 0 | 0 0 |
| 0 | 1 1 0 0 | 0 1 1 1 \| 0 | 0 1 1 | 0 | 0 0 |
| 1 | | | 1 0 | 1 | 0 0 |
| 0 | 1 1 0 1 | 0 1 1 1 \| 1 | 0 1 1 | 0 | 0 0 |
| 1 | | | 1 0 | 1 | 0 0 |
| 0 | 1 1 1 0 | 1 0 0 0 \| 0 | 1 0 0 | 0 | 0 0 |
| 1 | | | 1 0 | 0 | 0 0 |
| 0 | 1 1 1 1 | 1 0 0 0 \| | 1 0 0 | 0 | 0 0 |
| 1 | | | 1 0 | 0 | 0 0 |

C --- carry to $2^{-50}$

S --- sticky bits

## Fig. 3(b)

| real value | | | | | value of adding 1 to $2^{-53}$ | | | | | value after real rounding | | | reround signal | correction signal |
|---|---|---|---|---|---|---|---|---|---|---|---|---|---|---|
| $2^1$ | $2^{-51}$ | $2^{-52}$ | $2^{-53}$ | S | C | $2^{-51}$ | $2^{-52}$ | $2^{-53}$ | S | C | $2^{-51}$ | $2^{-52}$ | signal | signal |
| 0 | 0 | 0 | 0 | | | 0 | 0 | 0 | 1 \| 0 | 0 | 0 | 0 | 0 | 0 0 |
| 1 | | | | | | | | | | | 0 | 0 | 0 | 0 0 |
| 0 | 0 | 0 | 0 | 1 | | 0 | 0 | 0 | 1 \| 1 | 0 | 0 | 0 | 0 | 0 0 |
| 1 | | | | | | | | | | | 0 | 0 | 0 | 0 0 |
| 0 | 0 | 0 | 1 | 0 | | 0 | 0 | 1 | 0 \| 0 | 0 | 0 | 0 | 0 | 0 1 |
| 1 | | | | | | | | | | | 0 | 0 | 0 | 0 0 |
| 0 | 0 | 0 | 1 | 1 | | 0 | 0 | 1 | 0 \| 1 | 0 | 0 | 1 | 0 | 0 0 |
| 1 | | | | | | | | | | | 0 | 0 | 0 | 0 0 |
| 0 | 0 | 1 | 0 | 0 | | 0 | 0 | 1 | 1 \| 0 | 0 | 0 | 1 | 0 | 0 0 |
| 1 | | | | | | | | | | | 0 | 0 | 0 | 0 0 |
| 0 | 0 | 1 | 0 | 1 | | 0 | 0 | 1 | 1 \| 1 | 0 | 0 | 1 | 0 | 0 0 |
| 1 | | | | | | | | | | | 0 | 1 | 0 | 0 1 |
| 0 | 0 | 1 | 1 | 0 | | 0 | 1 | 0 | 0 \| 0 | 0 | 1 | 0 | 0 | 0 0 |
| 1 | | | | | | | | | | | 0 | 1 | 0 | 0 0 |
| 0 | 0 | 1 | 1 | 1 | | 0 | 1 | 0 | 0 \| 1 | 0 | 1 | 0 | 0 | 0 0 |
| 1 | | | | | | | | | | | 0 | 1 | 0 | 0 1 |
| 0 | 1 | 0 | 0 | 0 | | 0 | 1 | 0 | 1 \| 0 | 0 | 1 | 0 | 0 | 0 0 |
| 1 | | | | | | | | | | | 0 | 1 | 0 | 0 0 |
| 0 | 1 | 0 | 0 | 1 | | 0 | 1 | 0 | 1 \| 1 | 0 | 1 | 0 | 0 | 0 0 |
| 1 | | | | | | | | | | | 0 | 1 | 0 | 0 0 |
| 0 | 1 | 0 | 1 | 0 | | 0 | 1 | 1 | 0 \| 0 | 0 | 1 | 0 | 0 | 0 1 |
| 1 | | | | | | | | | | | 0 | 1 | 0 | 0 0 |
| 0 | 1 | 0 | 1 | 1 | | 0 | 1 | 1 | 0 \| 1 | 0 | 1 | 1 | 0 | 0 0 |
| 1 | | | | | | | | | | | 0 | 1 | 0 | 0 0 |
| 0 | 1 | 1 | 0 | 0 | | 0 | 1 | 1 | 1 \| 0 | 0 | 1 | 1 | 0 | 0 0 |
| 1 | | | | | | | | | | | 1 | 0 | 1 | 0 0 |
| 0 | 1 | 1 | 0 | 1 | | 0 | 1 | 1 | 1 \| 1 | 0 | 1 | 1 | 0 | 0 0 |
| 1 | | | | | | | | | | | 1 | 0 | 1 | 0 0 |
| 0 | 1 | 1 | 1 | 0 | | 1 | 0 | 0 | 0 \| 0 | 1 | 0 | 0 | 0 | 0 0 |
| 1 | | | | | | | | | | | 1 | 0 | 0 | 0 0 |
| 0 | 1 | 1 | 1 | 1 | | 1 | 0 | 0 | 0 \| 1 | 1 | 0 | 0 | 0 | 0 0 |
| 1 | | | | | | | | | | | 1 | 0 | 0 | 0 0 |

C --- carry to $2^{-21}$

S --- sticky bits

# Fig. 3(c)

| real value 2^0 | real value $2^{-23}$ $2^{-24}$ $2^{-25}$ S | value of adding 1 to $2^{-25}$ C $2^{-23}$ $2^{-24}$ $2^{-25}$ S | value after real rounding C $2^{-23}$ $2^{-24}$ | reround signal | correction signal |
|---|---|---|---|---|---|
| 0 | 0 0 0 0 | 0 0 0 1 \| 0 | 0 0 0 | 0 | 0 0 |
| 1 |  |  | 0 0 | 0 | 0 0 |
| 0 | 0 0 0 1 | 0 0 0 1 \| 1 | 0 0 0 | 0 | 0 0 |
| 1 |  |  | 0 0 | 0 | 0 0 |
| 0 | 0 0 1 0 | 0 0 1 0 \| 0 | 0 0 0 | 0 | 0 1 |
| 1 |  |  | 0 0 | 0 | 0 0 |
| 0 | 0 0 1 1 | 0 0 1 0 \| 1 | 0 0 1 | 0 | 0 0 |
| 1 |  |  | 0 0 | 0 | 0 0 |
| 0 | 0 1 0 0 | 0 0 1 1 \| 0 | 0 0 1 | 0 | 0 0 |
| 1 |  |  | 0 0 | 0 | 0 0 |
| 0 | 0 1 0 1 | 0 0 1 1 \| 1 | 0 0 1 | 0 | 0 0 |
| 1 |  |  | 0 1 | 0 | 0 1 |
| 0 | 0 1 1 0 | 0 1 0 0 \| 0 | 0 1 0 | 0 | 0 0 |
| 1 |  |  | 0 1 | 0 | 0 0 |
| 0 | 0 1 1 1 | 0 1 0 0 \| 1 | 0 1 0 | 0 | 0 0 |
| 1 |  |  | 0 1 | 0 | 0 0 |
| 0 | 1 0 0 0 | 0 1 0 1 \| 0 | 0 1 0 | 0 | 0 0 |
| 1 |  |  | 0 1 | 0 | 0 0 |
| 0 | 1 0 0 1 | 0 1 0 1 \| 1 | 0 1 0 | 0 | 0 0 |
| 1 |  |  | 0 1 | 0 | 0 0 |
| 0 | 1 0 1 0 | 0 1 1 0 \| 0 | 0 1 0 | 0 | 0 1 |
| 1 |  |  | 0 1 | 0 | 0 0 |
| 0 | 1 0 1 1 | 0 1 1 0 \| 1 | 0 1 1 | 0 | 0 0 |
| 1 |  |  | 0 1 | 0 | 0 0 |
| 0 | 1 1 0 0 | 0 1 1 1 \| 0 | 0 1 1 | 0 | 0 0 |
| 1 |  |  | 1 0 | 1 | 0 0 |
| 0 | 1 1 0 1 | 0 1 1 1 \| 1 | 0 1 1 | 0 | 0 0 |
| 1 |  |  | 1 0 | 1 | 0 0 |
| 0 | 1 1 1 0 | 1 0 0 0 \| 0 | 1 0 0 | 0 | 0 0 |
| 1 |  |  | 1 0 | 0 | 0 0 |
| 0 | 1 1 1 1 | 1 0 0 0 \| 1 | 1 0 0 | 0 | 0 0 |
| 1 |  |  | 1 0 | 0 | 0 0 |

C — — — carry to $2^{-22}$

S — — — sticky bits

## F i g. 3(d)

| real value | | | | | value of adding 1 to $2^{-54}$ | | | | | value after real rounding | | | reround signal | correction signal |
|---|---|---|---|---|---|---|---|---|---|---|---|---|---|---|
| $2^0$ | $2^{-52}$ | $2^{-53}$ | $2^{-54}$ | $S$ | $C$ | $2^{-52}$ | $2^{-53}$ | $2^{-54}$ | $S$ | $C$ | $2^{-52}$ | $2^{-53}$ | | |
| 0 | 0 | 0 | 0 | 0 | 0 | 0 | 0 | 1 | 0 | 0 | 0 | 0 | 0 | 0 0 |
| 1 | | | | | | | | | | | 0 | 0 | 0 | 0 0 |
| 0 | 0 | 0 | 0 | 1 | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 1 | 0 | 0 | 0 | 1 | 0 | 0 | 0 | 0 | 0 | 0 | 0 1 |
| 1 | | | | | | | | | | | 0 | 0 | 0 | 0 0 |
| 0 | 0 | 0 | 1 | 1 | 0 | 0 | 1 | 0 | 1 | 0 | 0 | 1 | 0 | 0 0 |
| 1 | | | | | | | | | | | 0 | 0 | 0 | 0 0 |
| 0 | 0 | 1 | 0 | 0 | 0 | 0 | 1 | 1 | 0 | 0 | 0 | 1 | 0 | 0 0 |
| 1 | | | | | | | | | | | 0 | 0 | 0 | 0 0 |
| 0 | 0 | 1 | 0 | 1 | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | | 0 | 1 | 0 | 0 0 |
| 0 | 1 | 0 | 0 | 0 | 0 | 1 | 0 | 1 | 0 | 0 | 1 | 0 | 0 | 0 0 |
| 1 | | | | | | | | | | | 0 | 1 | 0 | -0 0 |
| 0 | 1 | 0 | 0 | 1 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 1 | 0 | 0 | 1 | 1 | 0 | 0 | 0 | 1 | 0 | 0 | 0 1 |
| 1 | | | | | | | | | | | 0 | 1 | 0 | 0 0 |
| 0 | 1 | 0 | 1 | 1 | 0 | 1 | 1 | 0 | 1 | 0 | 1 | 1 | 0 | 0 0 |
| 1 | | | | | | | | | | | 0 | 1 | 0 | 0 0 |
| 0 | 1 | 1 | 0 | 0 | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 1 | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | | 1 | 0 | 0 | 0 0 |

C - - - carry to 2

S - - - sticky bits

## Fig. 4(a)

C --- carry to $2^{-21}$
S --- sticky bits

| real value | | | | | value of adding 1 to $2^{-24}$ | | | | | value after real rounding | | | reround signal | correction signal |
|---|---|---|---|---|---|---|---|---|---|---|---|---|---|---|
| $2^1$ | $2^{-22}$ | $2^{-23}$ | $2^{-24}$ | $S$ | $C$ | $2^{-22}$ | $2^{-23}$ | $2^{-24}$ | $S$ | $C$ | $2^{-22}$ | $2^{-23}$ | | |
| 0 | 0 | 0 | 0 | 0 | 0 | 0 | 0 | 1 | 0 | 0 | 0 | 0 | 0 | 0 0 |
| 1 | | | | | | | | | | 0 | 0 | | 0 | 0 0 |
| 0 | 0 | 0 | 0 | 1 | 0 | 0 | 0 | 1 | 1 | 0 | 0 | 1 | 0 | 0 1 |
| 1 | | | | | | | | | | 0 | 1 | | 0 | 0 1 |
| 0 | 0 | 0 | 1 | 0 | 0 | 0 | 1 | 0 | 0 | 0 | 0 | 1 | 0 | 0 0 |
| 1 | | | | | | | | | | 0 | 1 | | 0 | 0 1 |
| 0 | 0 | 0 | 1 | 1 | 0 | 0 | 1 | 0 | 1 | 0 | 0 | 1 | 0 | 0 0 |
| 1 | | | | | | | | | | 0 | 1 | | 0 | 0 1 |
| 0 | 0 | 1 | 0 | 0 | 0 | 0 | 1 | 1 | 0 | 0 | 0 | 1 | 0 | 0 0 |
| 1 | | | | | | | | | | 0 | 1 | | 0 | 0 1 |
| 0 | 0 | 1 | 0 | 1 | 0 | 0 | 1 | 1 | 1 | 0 | 1 | 0 | 0 | 1 0 |
| 1 | | | | | | | | | | 0 | 1 | | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | 0 | 1 | | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | 0 | 1 | | 0 | 0 0 |
| 0 | 1 | 0 | 0 | 0 | 0 | 1 | 0 | 1 | 0 | 0 | 1 | 0 | 0 | 0 0 |
| 1 | | | | | | | | | | 0 | 1 | | 0 | 0 0 |
| 0 | 1 | 0 | 0 | 1 | 0 | 1 | 0 | 1 | 1 | 0 | 1 | 1 | 0 | 0 1 |
| 1 | | | | | | | | | | 1 | 0 | | 1 | 0 1 |
| 0 | 1 | 0 | 1 | 0 | 0 | 1 | 1 | 0 | 0 | 0 | 1 | 1 | 0 | 0 0 |
| 1 | | | | | | | | | | 1 | 0 | | 1 | 0 0 |
| 0 | 1 | 0 | 1 | 1 | 0 | 1 | 1 | 0 | 1 | 0 | 1 | 1 | 0 | 0 0 |
| 1 | | | | | | | | | | 1 | 0 | | 1 | 0 0 |
| 0 | 1 | 1 | 0 | 0 | 0 | 1 | 1 | 1 | 0 | 0 | 1 | 1 | 0 | 0 0 |
| 1 | | | | | | | | | | 1 | 0 | | 1 | 0 0 |
| 0 | 1 | 1 | 0 | 1 | 0 | 1 | 1 | 1 | 1 | 1 | 0 | 0 | 1 | 0 0 |
| 1 | | | | | | | | | | 1 | 0 | | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | 1 | 0 | | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | 1 | 0 | | 0 | 0 0 |

# Fig. 4(b)

C --- carry to $2^{-50}$
S --- sticky bits

| real value | | | | | value of adding 1 to $2^{-53}$ | | | | | value after real rounding | | | reround signal | correction signal |
|---|---|---|---|---|---|---|---|---|---|---|---|---|---|---|
| $2^1$ | $2^{-51}$ | $2^{-52}$ | $2^{-53}$ | S | C | $2^{-51}$ | $2^{-52}$ | $2^{-53}$ | S | C | $2^{-51}$ | $2^{-52}$ | | |
| 0 | 0 | 0 | 0 | 0 | | 0 | 0 | 0 | 1 | 0 | 0 | 0 | 0 | 0 0 |
| 1 | | | | | | | | | 0 | 0 | 0 | | 0 | 0 0 |
| 0 | 0 | 0 | 0 | 1 | | 0 | 0 | 0 | 1 | 1 | 0 | 0 | 1 | 0 | 0 1 |
| 1 | | | | | | | | | | 0 | 1 | | 0 | 0 1 |
| 0 | 0 | 0 | 1 | 0 | | 0 | 0 | 1 | 0 | 0 | 0 | 0 | 1 | 0 | 0 0 |
| 1 | | | | | | | | | | 0 | 1 | | 0 | 0 1 |
| 0 | 0 | 0 | 1 | 1 | | 0 | 0 | 1 | 0 | 1 | 0 | 0 | 1 | 0 | 0 0 |
| 1 | | | | | | | | | | 0 | 1 | | 0 | 0 1 |
| 0 | 0 | 1 | 0 | 0 | | 0 | 0 | 1 | 1 | 0 | 0 | 0 | 1 | 0 | 0 0 |
| 1 | | | | | | | | | | 0 | 1 | | 0 | 0 1 |
| 0 | 0 | 1 | 0 | 1 | | 0 | 0 | 1 | 1 | 1 | 0 | 1 | 0 | 0 | 1 0 |
| 1 | | | | | | | | | | 0 | 1 | | 0 | 0 1 |
| 0 | 0 | 1 | 1 | 0 | | 0 | 1 | 0 | 0 | 0 | 0 | 1 | 0 | 0 | 0 0 |
| 1 | | | | | | | | | | 0 | 1 | | 0 | 0 0 |
| 0 | 0 | 1 | 1 | 1 | | 0 | 1 | 0 | 0 | 1 | 0 | 1 | 0 | 0 | 0 0 |
| 1 | | | | | | | | | | 0 | 1 | | 0 | 0 0 |
| 0 | 1 | 0 | 0 | 0 | | 0 | 1 | 0 | 1 | 0 | 0 | 1 | 0 | 0 | 0 0 |
| 1 | | | | | | | | | | 0 | 1 | | 0 | 0 0 |
| 0 | 1 | 0 | 0 | 1 | | 0 | 1 | 0 | 1 | 1 | 0 | 1 | 1 | 0 | 0 1 |
| 1 | | | | | | | | | | 1 | 0 | | 1 | 0 1 |
| 0 | 1 | 0 | 1 | 0 | | 0 | 1 | 1 | 0 | 0 | 0 | 1 | 1 | 0 | 0 0 |
| 1 | | | | | | | | | | 1 | 0 | | 1 | 0 0 |
| 0 | 1 | 0 | 1 | 1 | | 0 | 1 | 1 | 0 | 1 | 0 | 1 | 1 | 0 | 0 0 |
| 1 | | | | | | | | | | 1 | 0 | | 1 | 0 0 |
| 0 | 1 | 1 | 0 | 0 | | 0 | 1 | 1 | 1 | 0 | 0 | 1 | 1 | 0 | 0 0 |
| 1 | | | | | | | | | | 1 | 0 | | 1 | 0 0 |
| 0 | 1 | 1 | 0 | 1 | | 0 | 1 | 1 | 1 | 1 | 1 | 0 | 0 | 1 | 0 0 |
| 1 | | | | | | | | | | 1 | 0 | | 1 | 0 0 |
| 0 | 1 | 1 | 1 | 0 | | 1 | 0 | 0 | 0 | 0 | 1 | 0 | 0 | 0 | 0 0 |
| 1 | | | | | | | | | | 1 | 0 | | 0 | 0 0 |
| 0 | 1 | 1 | 1 | 1 | | 1 | 0 | 0 | 0 | 1 | 1 | 0 | 0 | 0 | 0 0 |
| 1 | | | | | | | | | | 1 | 0 | | 0 | 0 0 |

# Fig. 4(c)

C --- carry to $2^{-22}$
S --- sticky bits

| real value | | value of adding 1 to $2^{-25}$ | value after real rounding | reround signal | correction signal |
|---|---|---|---|---|---|
| $2^0$ | $2^{-23}$ $2^{-24}$ $2^{-25}$ S | C $2^{-23}$ $2^{-24}$ $2^{-25}$ S | C $2^{-23}$ $2^{-24}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 1 | 0 | 0 1 |
| 1 | | | 0 1 | 0 | 0 1 |
| 0 | 0 0 1 0 | 0 0 1 0 0 | 0 0 1 | 0 | 0 0 |
| 1 | | | 0 1 | 0 | 0 1 |
| 0 | 0 0 1 1 | 0 0 1 0 1 | 0 0 1 | 0 | 0 0 |
| 1 | | | 0 1 | 0 | 0 1 |
| 0 | 0 1 0 0 | 0 0 1 1 0 | 0 0 1 | 0 | 0 0 |
| 1 | | | 0 1 | 0 | 0 1 |
| 0 | 0 1 0 1 | 0 0 1 1 1 | 0 1 0 | 0 | 1 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 1 | 0 | 0 1 |
| 1 | | | 1 0 | 1 | 0 1 |
| 0 | 1 0 1 0 | 0 1 1 0 0 | 0 1 1 | 0 | 0 0 |
| 1 | | | 1 0 | 1 | 0 0 |
| 0 | 1 0 1 1 | 0 1 1 0 1 | 0 1 1 | 0 | 0 0 |
| 1 | | | 1 0 | 1 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 1 0 0 | 1 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 1 | 1 0 0 | 0 | 0 0 |
| 1 | | | 1 0 | 0 | 0 0 |

# Fig. 4(d)

C --- carry to $2^{-51}$  
S --- sticky bits

| real value | | value of adding 1 to $2^{-54}$ | value after real rounding | reround signal | correction signal |
|---|---|---|---|---|---|
| $2^0$ | $2^{-52}\ 2^{-53}\ 2^{-54}\ S$ | $C\ 2^{-52}\ 2^{-53}\ 2^{-54}\ S$ | $C\ 2^{-52}\ 2^{-53}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 1 | 0 | 0 1 |
| 1 | | | 0 1 | 0 | 0 1 |
| 0 | 0 0 1 0 | 0 0 1 0 0 | 0 0 1 | 0 | 0 0 |
| 1 | | | 0 1 | 0 | 0 1 |
| 0 | 0 0 1 1 | 0 0 1 0 1 | 0 0 1 | 0 | 0 0 |
| 1 | | | 0 1 | 0 | 0 1 |
| 0 | 0 1 0 0 | 0 0 1 1 0 | 0 0 1 | 0 | 0 0 |
| 1 | | | 0 1 | 0 | 0 1 |
| 0 | 0 1 0 1 | 0 0 1 1 1 | 0 1 0 | 0 | 1 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 1 | 0 | 0 1 |
| 1 | | | 1 0 | 1 | 0 1 |
| 0 | 1 0 1 0 | 0 1 1 0 0 | 0 1 1 | 0 | 0 0 |
| 1 | | | 1 0 | 1 | 0 0 |
| 0 | 1 0 1 1 | 0 1 1 0 1 | 0 1 1 | 0 | 0 0 |
| 1 | | | 1 0 | 1 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 1 0 0 | 1 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 1 | 1 0 0 | 0 | 0 0 |
| 1 | | | 1 0 | 0 | 0 0 |

# Fig. 5(a)

C --- carry to $2^{-21}$

S --- sticky bits

| real value | | value of adding 1 to $2^{-23}$ | | value after real rounding | | reround signal | correction signal |
|---|---|---|---|---|---|---|---|
| $2^1$ | $2^{-22}\ 2^{-23}\ 2^{-24}$ S | C | $2^{-22}\ 2^{-23}\ 2^{-24}$ S | C | $2^{-22}\ 2^{-23}$ | | |
| 0 | 0 0 0 0 | | 0 0 1 0\|0 | 0 | 0 0 | 0 | 0 1 |
| 1 | | | | 0 | 0 0 | 0 | 0 0 |
| 0 | 0 0 0 1 | | 0 0 1 0\|1 | 0 | 0 1 | 0 | 0 0 |
| 1 | | | | 0 | 0 1 | 0 | 0 1 |
| 0 | 0 0 1 0 | | 0 0 1 1\|0 | 0 | 0 1 | 0 | 0 0 |
| 1 | | | | 0 | 0 1 | 0 | 0 1 |
| 0 | 0 0 1 1 | | 0 0 1 1\|1 | 0 | 0 1 | 0 | 0 0 |
| 1 | | | | 0 | 0 1 | 0 | 0 1 |
| 0 | 0 1 0 0 | | 0 1 0 0\|0 | 0 | 0 1 | 0 | 1 0 |
| 1 | | | | 0 | 0 1 | 0 | 0 0 |
| 0 | 0 1 0 1 | | 0 1 0 0\|1 | 0 | 1 0 | 0 | 0 0 |
| 1 | | | | 0 | 0 1 | 0 | 0 0 |
| 0 | 0 1 1 0 | | 0 1 0 1\|0 | 0 | 1 0 | 0 | 0 0 |
| 1 | | | | 0 | 0 1 | 0 | 0 0 |
| 0 | 0 1 1 1 | | 0 1 0 1\|1 | 0 | 1 0 | 0 | 0 0 |
| 1 | | | | 0 | 0 1 | 0 | 0 0 |
| 0 | 1 0 0 0 | | 0 1 1 0\|0 | 0 | 1 0 | 0 | 0 1 |
| 1 | | | | 0 | 0 1 | 0 | 0 0 |
| 0 | 1 0 0 1 | | 0 1 1 0\|1 | 0 | 1 1 | 0 | 0 0 |
| 1 | | | | 1 | 0 0 | 1 | 0 0 |
| 0 | 1 0 1 0 | | 0 1 1 1\|0 | 0 | 1 1 | 0 | 0 0 |
| 1 | | | | 1 | 0 0 | 1 | 0 0 |
| 0 | 1 0 1 1 | | 0 1 1 1\|1 | 0 | 1 1 | 0 | 0 0 |
| 1 | | | | 1 | 0 0 | 1 | 0 0 |
| 0 | 1 1 0 0 | | 1 0 0 0\|0 | 0 | 1 1 | 1 | 1 1 |
| 1 | | | | 1 | 0 0 | 0 | 0 0 |
| 0 | 1 1 0 1 | | 1 0 0 0\|1 | 1 | 0 0 | 0 | 0 0 |
| 1 | | | | 1 | 0 0 | 0 | 0 0 |
| 0 | 1 1 1 0 | | 1 0 0 1\|0 | 1 | 0 0 | 0 | 0 0 |
| 1 | | | | 1 | 0 0 | 0 | 0 0 |
| 0 | 1 1 1 1 | | 1 0 0 1\|1 | 1 | 0 0 | 0 | 0 0 |
| 1 | | | | 1 | 0 0 | 0 | 0 0 |

# Fig. 5(b)

C --- carry to $2^{-50}$

S --- sticky bits

| real value | | value of adding 1 to $2^{-52}$ | value after real rounding | reround signal | correction signal |
|---|---|---|---|---|---|
| $2^1$ | $2^{-51}\ 2^{-52}\ 2^{-53}\ S$ | $c\ 2^{-51}\ 2^{-52}\ 2^{-53}\ S$ | $c\ 2^{-51}\ 2^{-52}$ | | |
| 0 | 0 0 0 0 | 0 0 1  0 0 | 0 0 0 | 0 | 0 1 |
| 1 | | | 0 0 | 0 | 0 0 |
| 0 | 0 0 0 1 | 0 0 1  0 1 | 0 0 1 | 0 | 0 0 |
| 1 | | | 0 1 | 0 | 0 1 |
| 0 | 0 0 1 0 | 0 0 1  1 0 | 0 0 1 | 0 | 0 0 |
| 1 | | | 0 1 | 0 | 0 1 |
| 0 | 0 0 1 1 | 0 0 1  1 1 | 0 0 1 | 0 | 0 0 |
| 1 | | | 0 1 | 0 | 0 1 |
| 0 | 0 1 0 0 | 0 1 0  0 0 | 0 0 1 | 0 | 1 0 |
| 1 | | | 0 1 | 0 | 0 0 |
| 0 | 0 1 0 1 | 0 1 0  0 1 | 0 1 0 | 0 | 0 0 |
| 1 | | | 0 1 | 0 | 0 0 |
| 0 | 0 1 1 0 | 0 1 0  1 0 | 0 1 0 | 0 | 0 0 |
| 1 | | | 0 1 | 0 | 0 0 |
| 0 | 0 1 1 1 | 0 1 0  1 1 | 0 1 0 | 0 | 0 0 |
| 1 | | | 0 1 | 0 | 0 0 |
| 0 | 1 0 0 0 | 0 1 1  0 0 | 0 1 0 | 0 | 0 1 |
| 1 | | | 0 1 | 0 | 0 0 |
| 0 | 1 0 0 1 | 0 1 1  0 1 | 0 1 1 | 0 | 0 0 |
| 1 | | | 1 0 | 1 | 0 0 |
| 0 | 1 0 1 0 | 0 1 1  1 0 | 0 1 1 | 0 | 0 0 |
| 1 | | | 1 0 | 1 | 0 0 |
| 0 | 1 0 1 1 | 0 1 1  1 1 | 0 1 1 | 0 | 0 0 |
| 1 | | | 1 0 | 1 | 0 0 |
| 0 | 1 1 0 0 | 1 0 0  0 0 | 0 1 1 | 1 | 1 1 |
| 1 | | | 1 0 | 0 | 0 0 |
| 0 | 1 1 0 1 | 1 0 0  0 1 | 1 0 0 | 0 | 0 0 |
| 1 | | | 1 0 | 0 | 0 0 |
| 0 | 1 1 1 0 | 1 0 0  1 0 | 1 0 0 | 0 | 0 0 |
| 1 | | | 1 0 | 0 | 0 0 |
| 0 | 1 1 1 1 | 1 0 0  1 1 | 1 0 0 | 0 | 0 0 |
| 1 | | | 1 0 | 0 | 0 0 |

## Fig. 5(c)

C---carry to $2^{-22}$
S---sticky bits

| real value | | value of adding 1 to $2^{-24}$ | | value after real rounding | | reround signal | correction signal |
|---|---|---|---|---|---|---|---|
| $2^0$ | $2^{-23} 2^{-24} 2^{-25}$ S | C | $2^{-23} 2^{-24} 2^{-25}$ S | C | $2^{-23} 2^{-24}$ | | |
| 0 | 0 0 0 0 | 0 0 1 | 010 | 0 0 0 | | 0 | 0 1 |
| 1 | | | | 0 0 | | 0 | 0 0 |
| 0 | 0 0 0 1 | 0 0 1 | 0 1 1 | 0 0 1 | | 0 | 0 0 |
| 1 | | | | 0 1 | | 0 | 0 1 |
| 0 | 0 0 1 0 | 0 0 1 | 1 0 | 0 0 1 | | 0 | 0 0 |
| 1 | | | | 0 1 | | 0 | 0 1 |
| 0 | 0 0 1 1 | 0 0 1 | 1 1 1 | 0 0 1 | | 0 | 0 0 |
| 1 | | | | 0 1 | | 0 | 0 1 |
| 0 | 0 1 0 0 | 0 1 0 | 0 0 | 0 0 1 | | 0 | 1 0 |
| 1 | | | | 0 1 | | 0 | 0 0 |
| 0 | 0 1 0 1 | 0 1 0 | 0 1 | 0 1 0 | | 0 | 0 0 |
| 1 | | | | 0 1 | | 0 | 0 0 |
| 0 | 0 1 1 0 | 0 1 0 | 1 0 | 0 1 0 | | 0 | 0 0 |
| 1 | | | | 0 1 | | 0 | 0 0 |
| 0 | 0 1 1 1 | 0 1 0 | 1 1 1 | 0 1 0 | | 0 | 0 0 |
| 1 | | | | 0 1 | | 0 | 0 0 |
| 0 | 1 0 0 0 | 0 1 1 | 0 0 | 0 1 0 | | 0 | 0 1 |
| 1 | | | | 0 1 | | 0 | 0 0 |
| 0 | 1 0 0 1 | 0 1 1 | 0 1 | 0 1 1 | | 0 | 0 0 |
| 1 | | | | 1 0 | | 1 | 0 0 |
| 0 | 1 0 1 0 | 0 1 1 | 1 0 | 0 1 1 | | 0 | 0 0 |
| 1 | | | | 1 0 | | 1 | 0 0 |
| 0 | 1 0 1 1 | 0 1 1 | 1 1 1 | 0 1 1 | | 0 | 0 0 |
| 1 | | | | 1 0 | | 1 | 0 0 |
| 0 | 1 1 0 0 | 1 0 0 | 0 0 | 0 1 1 | | 1 | 1 1 |
| 1 | | | | 1 0 | | 0 | 0 0 |
| 0 | 1 1 0 1 | 1 0 0 | 0 1 | 1 0 0 | | 0 | 0 0 |
| 1 | | | | 1 0 | | 0 | 0 0 |
| 0 | 1 1 1 0 | 1 0 0 | 1 0 | 1 0 0 | | 0 | 0 0 |
| 1 | | | | 1 0 | | 0 | 0 0 |
| 0 | 1 1 1 1 | 1 0 0 | 1 1 | 1 0 0 | | 0 | 0 0 |
| 1 | | | | 1 0 | | 0 | 0 0 |

46

EP 0 820 005 B1

# Fig. 5(d)

C --- carry to $2^{-51}$
S --- sticky bits

| real value | | value of adding 1 to $2^{-53}$ | | value after real rounding | | reround signal | correction signal |
|---|---|---|---|---|---|---|---|
| $2^0$ | $2^{-52}\,2^{-53}\,2^{-54}\,$S | C | $2^{-52}\,2^{-53}\,2^{-54}\,$S | C | $2^{-52}\,2^{-53}$ | | |
| 0 | 0 0 0 0 | 0 0 1 | 0 0 | 0 0 0 | | 0 | 0 1 |
| 1 | | | | 0 0 | | 0 | 0 0 |
| 0 | 0 0 0 1 | 0 0 1 | 0 1 | 0 0 1 | | 0 | 0 0 |
| 1 | | | | 0 1 | | 0 | 0 1 |
| 0 | 0 0 1 0 | 0 0 1 | 1 0 | 0 0 1 | | 0 | 0 0 |
| 1 | | | | 0 1 | | 0 | 0 1 |
| 0 | 0 0 1 1 | 0 0 1 | 1 1 | 0 0 1 | | 0 | 0 0 |
| 1 | | | | 0 1 | | 0 | 0 1 |
| 0 | 0 1 0 0 | 0 1 0 | 0 0 | 0 0 1 | | 0 | 1 0 |
| 1 | | | | 0 1 | | 0 | 0 0 |
| 0 | 0 1 0 1 | 0 1 0 | 0 1 | 0 1 0 | | 0 | 0 0 |
| 1 | | | | 0 1 | | 0 | 0 0 |
| 0 | 0 1 1 0 | 0 1 0 | 1 0 | 0 1 0 | | 0 | 0 0 |
| 1 | | | | 0 1 | | 0 | 0 0 |
| 0 | 0 1 1 1 | 0 1 0 | 1 1 | 0 1 0 | | 0 | 0 0 |
| 1 | | | | 0 1 | | 0 | 0 0 |
| 0 | 1 0 0 0 | 0 1 1 | 0 0 | 0 1 0 | | 0 | 0 1 |
| 1 | | | | 0 1 | | 0 | 0 0 |
| 0 | 1 0 0 1 | 0 1 1 | 0 1 | 0 1 1 | | 0 | 0 0 |
| 1 | | | | 1 0 | | 1 | 0 0 |
| 0 | 1 0 1 0 | 0 1 1 | 1 0 | 0 1 1 | | 0 | 0 0 |
| 1 | | | | 1 0 | | 1 | 0 0 |
| 0 | 1 0 1 1 | 0 1 1 | 1 1 | 0 1 1 | | 0 | 0 0 |
| 1 | | | | 1 0 | | 1 | 0 0 |
| 0 | 1 1 0 0 | 1 0 0 | 0 0 | 0 1 1 | | 1 | 1 1 |
| 1 | | | | 1 0 | | 0 | 0 0 |
| 0 | 1 1 0 1 | 1 0 0 | 0 1 | 1 0 0 | | 0 | 0 0 |
| 1 | | | | 1 0 | | 0 | 0 0 |
| 0 | 1 1 1 0 | 1 0 0 | 1 0 | 1 0 0 | | 0 | 0 0 |
| 1 | | | | 1 0 | | 0 | 0 0 |
| 0 | 1 1 1 1 | 1 0 0 | 1 1 | 1 0 0 | | 0 | 0 0 |
| 1 | | | | 1 0 | | 0 | 0 0 |

47

# Fig. 6(a)

C --- carry to $2^{-21}$
S --- sticky bits

| real value | | value of adding 1 to $2^{-24}$ | | value after real rounding | | reround signal | correction signal |
|---|---|---|---|---|---|---|---|
| $2^1$ | $2^{-22}\,2^{-23}\,2^{-24}$ S | C | $2^{-22}\,2^{-23}\,2^{-24}$ S | C | $2^{-22}\,2^{-23}$ | | |
| 0 | 0 0 0 0 | | 0 0 0 | 1 1 1 | 0 0 0 | 0 | 0 0 |
| 1 | | | | | 0 0 | 0 | 0 0 |
| 0 | 0 0 0 1 | | 0 0 1 | 0 0 | 0 0 1 | 0 | 0 0 |
| 1 | | | | | 0 1 | 0 | 0 1 |
| 0 | 0 0 1 0 | | 0 0 1 | 0 1 | 0 0 1 | 0 | 0 0 |
| 1 | | | | | 0 1 | 0 | 0 1 |
| 0 | 0 0 1 1 | | 0 0 1 | 1 1 0 | 0 0 1 | 0 | 0 0 |
| 1 | | | | | 0 1 | 0 | 0 1 |
| 0 | 0 1 0 0 | | 0 0 1 | 1 1 1 | 0 0 1 | 0 | 0 0 |
| 1 | | | | | 0 1 | 0 | 0 1 |
| 0 | 0 1 0 1 | | 0 1 0 | 0 0 | 0 1 0 | 0 | 0 0 |
| 1 | | | | | 0 1 | 0 | 0 0 |
| 0 | 0 1 1 0 | | 0 1 0 | 0 1 | 0 1 0 | 0 | 0 0 |
| 1 | | | | | 0 1 | 0 | 0 0 |
| 0 | 0 1 1 1 | | 0 1 0 | 1 1 0 | 0 1 0 | 0 | 0 0 |
| 1 | | | | | 0 1 | 0 | 0 0 |
| 0 | 1 0 0 0 | | 0 1 0 | 1 1 1 | 0 1 0 | 0 | 0 0 |
| 1 | | | | | 0 1 | 0 | 0 0 |
| 0 | 1 0 0 1 | | 0 1 1 | 0 0 | 0 1 1 | 0 | 0 0 |
| 1 | | | | | 1 0 | 1 | 0 0 |
| 0 | 1 0 1 0 | | 0 1 1 | 0 1 | 0 1 1 | 0 | 0 0 |
| 1 | | | | | 1 0 | 1 | 0 0 |
| 0 | 1 0 1 1 | | 0 1 1 | 1 0 | 0 1 1 | 0 | 0 0 |
| 1 | | | | | 1 0 | 1 | 0 0 |
| 0 | 1 1 0 0 | | 0 1 1 | 1 1 1 | 0 1 1 | 0 | 0 0 |
| 1 | | | | | 1 0 | 1 | 0 0 |
| 0 | 1 1 0 1 | | 1 0 0 | 0 0 | 1 0 0 | 0 | 0 0 |
| 1 | | | | | 1 0 | 0 | 0 0 |
| 0 | 1 1 1 0 | | 1 0 0 | 0 1 | 1 0 0 | 0 | 0 0 |
| 1 | | | | | 1 0 | 0 | 0 0 |
| 0 | 1 1 1 1 | | 1 0 0 | 1 0 | 1 0 0 | 0 | 0 0 |
| 1 | | | | | 1 0 | 0 | 0 0 |

48

# Fig. 6(b)

C --- carry to $2^{-50}$
S --- sticky bits

| real value | | value of adding 1 to $2^{-53}$ | | value after real rounding | | reround signal | correction signal |
|---|---|---|---|---|---|---|---|
| $2^1$ | $2^{-51} 2^{-52} 2^{-53} S$ | C | $2^{-51} 2^{-52} 2^{-53} S$ | C | $2^{-51} 2^{-52} S$ | signal | signal |
| 0 | 0 0 0 0 | | 0 0 0   1\|1 | | 0 0 0 | 0 | 0 0 |
| 1 | | | | | 0 0 | 0 | 0 0 |
| 0 | 0 0 0 1 | | 0 0 1   0\|0 | | 0 0 1 | 0 | 0 0 |
| 1 | | | | | 0 1 | 0 | 0 1 |
| 0 | 0 0 1 0 | | 0 0 1   0\|1 | | 0 0 1 | 0 | 0 0 |
| 1 | | | | | 0 1 | 0 | 0 1 |
| 0 | 0 0 1 1 | | 0 0 1   1\|0 | | 0 0 1 | 0 | 0 0 |
| 1 | | | | | 0 1 | 0 | 0 1 |
| 0 | 0 1 0 0 | | 0 0 1   1\|1 | | 0 0 1 | 0 | 0 0 |
| 1 | | | | | 0 1 | 0 | 0 1 |
| 0 | 0 1 0 1 | | 0 1 0   0\|0 | | 0 1 0 | 0 | 0 0 |
| 1 | | | | | 0 1 | 0 | 0 0 |
| 0 | 0 1 1 0 | | 0 1 0   0\|1 | | 0 1 0 | 0 | 0 0 |
| 1 | | | | | 0 1 | 0 | 0 0 |
| 0 | 0 1 1 1 | | 0 1 0   1\|0 | | 0 1 0 | 0 | 0 0 |
| 1 | | | | | 0 1 | 0 | 0 0 |
| 0 | 1 0 0 0 | | 0 1 0   1\|1 | | 0 1 0 | 0 | 0 0 |
| 1 | | | | | 0 1 | 0 | 0 0 |
| 0 | 1 0 0 1 | | 0 1 1   0\|0 | | 0 1 1 | 0 | 0 0 |
| 1 | | | | | 1 0 | 1 | 0 0 |
| 0 | 1 0 1 0 | | 0 1 1   0\|1 | | 0 1 1 | 0 | 0 0 |
| 1 | | | | | 1 0 | 1 | 0 0 |
| 0 | 1 0 1 1 | | 0 1 1   1\|0 | | 0 1 1 | 0 | 0 0 |
| 1 | | | | | 1 0 | 1 | 0 0 |
| 0 | 1 1 0 0 | | 0 1 1   1\|1 | | 0 1 1 | 0 | 0 0 |
| 1 | | | | | 1 0 | 1 | 0 0 |
| 0 | 1 1 0 1 | | 1 0 0   0\|0 | | 1 0 0 | 0 | 0 0 |
| 1 | | | | | 1 0 | 0 | 0 0 |
| 0 | 1 1 1 0 | | 1 0 0   0\|1 | | 1 0 0 | 0 | 0 0 |
| 1 | | | | | 1 0 | 0 | 0 0 |
| 0 | 1 1 1 1 | | 1 0 0   1\|0 | | 1 0 0 | 0 | 0 0 |
| 1 | | | | | 1 0 | 0 | 0 0 |

# Fig. 6(c)

C --- carry to $2^{-22}$
S --- sticky bits

| real value | | value of adding 1 to $2^{-25}$ | | value after real rounding | | reround signal | correction signal |
|---|---|---|---|---|---|---|---|
| $2^0$ | $2^{-23}\,2^{-24}\,2^{-25}$ S | C $2^{-23}\,2^{-24}\,2^{-25}$ S | | C $2^{-23}\,2^{-24}$ | | signal | signal |
| 0 | .0  0  0  0 | 0  0  0 | 1 1 1 | 0  0  0 | | 0 | 0 0 |
| 1 | | | | 0  0 | | 0 | 0 0 |
| 0 | .0  0  0  1 | 0  0  1 | 0 0 | 0  0  1 | | 0 | 0 0 |
| 1 | | | | 0  1 | | 0 | 0 1 |
| 0 | 0  0  1  0 | 0  0  1 | 0 1 | 0  0  1 | | 0 | 0 0 |
| 1 | | | | 0  1 | | 0 | 0 1 |
| 0 | 0  0  1  1 | 0  0  1 | 1 0 | 0  0  1 | | 0 | 0 0 |
| 1 | | | | 0  1 | | 0 | 0 1 |
| 0 | 0  1  0  0 | 0  0  1 | 1 1 | 0  0  1 | | 0 | 0 0 |
| 1 | | | | 0  1 | | 0 | 0 1 |
| 0 | 0  1  0  1 | 0  1  0 | 0 0 | 0  1  0 | | 0 | 0 0 |
| 1 | | | | 0  1 | | 0 | 0 0 |
| 0 | 0  1  1  0 | 0  1  0 | 0 1 | 0  1  0 | | 0 | 0 0 |
| 1 | | | | 0  1 | | 0 | 0 0 |
| 0 | 0  1  1  1 | 0  1  0 | 1 0 | 0  1  0 | | 0 | 0 0 |
| 1 | | | | 0  1 | | 0 | 0 0 |
| 0 | 1  0  0  0 | 0  1  0 | 1 1 | 0  1  0 | | 0 | 0 0 |
| 1 | | | | 0  1 | | 0 | 0 0 |
| 0 | 1  0  0  1 | 0  1  1 | 0 0 | 0  1  1 | | 0 | 0 0 |
| 1 | | | | 1  0 | | 1 | 0 0 |
| 0 | 1  0  1  0 | 0  1  1 | 0 1 | 0  1  1 | | 0 | 0 0 |
| 1 | | | | 1  0 | | 1 | 0 0 |
| 0 | 1  0  1  1 | 0  1  1 | 1 0 | 0  1  1 | | 0 | 0 0 |
| 1 | | | | 1  0 | | 1 | 0 0 |
| 0 | 1  1  0  0 | 0  1  1 | 1 1 | 0  1  1 | | 0 | 0 0 |
| 1 | | | | 1  0 | | 1 | 0 0 |
| 0 | 1  1  0  1 | 1  0  0 | 0 0 | 1  0  0 | | 0 | 0 0 |
| 1 | | | | 1  0 | | 0 | 0 0 |
| 0 | 1  1  1  0 | 1  0  0 | 0 1 | 1  0  0 | | 0 | 0 0 |
| 1 | | | | 1  0 | | 0 | 0 0 |
| 0 | 1  1  1  1 | 1  0  0 | 1 0 | 1  0  0 | | 0 | 0 0 |
| 1 | | | | 1  0 | | 0 | 0 0 |

# Fig. 6(d)

C --- carry to $2^{-51}$
S --- sticky bits

| real value | | value of adding 1 to $2^{-54}$ | value after real rounding | reround signal | correction signal |
|---|---|---|---|---|---|
| $2^0$ | $2^{-52}\ 2^{-53}\ 2^{-54}\ S$ | $c\ 2^{-52}\ 2^{-53}\ 2^{-54}\ S$ | $c\ 2^{-53}\ 2^{-54}$ | signal | signal |
| 0 | 0 0 0 0 | 0 0 0 \|1\| | 0 0 0 | 0 | 0 0 |
| 1 | | | 0 0 | 0 | 0 0 |
| 0 | 0 0 0 1 | 0 0 1 0\|0 | 0 0 1 | 0 | 0 0 |
| 1 | | | 0 1 | 0 | 0 1 |
| 0 | 0 0 1 0 | 0 0 1 0\|1 | 0 0 1 | 0 | 0 0 |
| 1 | | | 0 1 | 0 | 0 1 |
| 0 | 0 0 1 1 | 0 0 1 1\|0 | 0 0 1 | 0 | 0 0 |
| 1 | | | 0 1 | 0 | 0 1 |
| 0 | 0 1 0 0 | 0 0 1 1\|1 | 0 0 1 | 0 | 0 0 |
| 1 | | | 0 1 | 0 | 0 1 |
| 0 | 0 1 0 1 | 0 1 0 0\|0 | 0 1 0 | 0 | 0 0 |
| 1 | | | 0 1 | 0 | 0 0 |
| 0 | 0 1 1 0 | 0 1 0 0\|1 | 0 1 0 | 0 | 0 0 |
| 1 | | | 0 1 | 0 | 0 0 |
| 0 | 0 1 1 1 | 0 1 0 1\|0 | 0 1 0 | 0 | 0 0 |
| 1 | | | 0 1 | 0 | 0 0 |
| 0 | 1 0 0 0 | 0 1 0 1\|1 | 0 1 0 | 0 | 0 0 |
| 1 | | | 0 1 | 0 | 0 0 |
| 0 | 1 0 0 1 | 0 1 1 0\|0 | 0 1 1 | 0 | 0 0 |
| 1 | | | 1 0 | 1 | 0 0 |
| 0 | 1 0 1 0 | 0 1 1 0\|1 | 0 1 1 | 0 | 0 0 |
| 1 | | | 1 0 | 1 | 0 0 |
| 0 | 1 0 1 1 | 0 1 1 1\|0 | 0 1 1 | 0 | 0 0 |
| 1 | | | 1 0 | 1 | 0 0 |
| 0 | 1 1 0 0 | 0 1 1 1\|1 | 0 1 1 | 0 | 0 0 |
| 1 | | | 1 0 | 1 | 0 0 |
| 0 | 1 1 0 1 | 1 0 0 0\|0 | 1 0 0 | 0 | 0 0 |
| 1 | | | 1 0 | 0 | 0 0 |
| 0 | 1 1 1 0 | 1 0 0 0\|1 | 1 0 0 | 0 | 0 0 |
| 1 | | | 1 0 | 0 | 0 0 |
| 0 | 1 1 1 1 | 1 0 0 1\|0 | 1 0 0 | 0 | 0 0 |
| 1 | | | 1 0 | 0 | 0 0 |

# Fig. 7(a)

| input $2^{-24}$ $2^{-25}$ S | complete of 2 to input $2^{-24}$ $2^{-25}$ S | complete of 1 to input $2^{-24}$ $2^{-25}$ S | RN, RP(+),RM(-) Cin | RP(-), RM(+),RZ Cin |
|---|---|---|---|---|
| 0 0 0 | 0 0 0 | 1 1 1 | 1 | 0 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 1 | 0 |
| 1 0 0 | 1 0 0 | 0 1 1 | 1 | 0 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 1 | 0 |

# Fig. 7(b)

| input $2^{53}$ $2^{54}$ S | complete of 2 to input $2^{53}$ $2^{54}$ S | complete of 1 to input $2^{53}$ $2^{54}$ S | RN, RP(+),RM(-) Cin | RP(-), RM(+),RZ Cin |
|---|---|---|---|---|
| 0 0 0 | 0 0 0 | 1 1 1 | 1 | 0 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 1 | 0 |
| 1 0 0 | 1 0 0 | 0 1 1 | 1 | 0 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 1 | 0 |

## Fig. 7(c)

| input $2^{-24}$ $2^{-25}$ S | complete of 2 to input $2^{-24}$ $2^{-25}$ S | complete of 1 to input $2^{-24}$ $2^{-25}$ S | RN, RP(+),RM(-) Cin | RP(-), RM(+),RZ Cin |
|---|---|---|---|---|
| 0 0 0 | 0 0 0 | 1 1 1 | 1 | 1 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 0 | 0 |
| 1 0 0 | 1 0 0 | 0 1 1 | 1 | 1 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 0 | 0 |

## Fig. 7(d)

| input $2^{-53}$ $2^{-54}$ S | complete of 2 to input $2^{-53}$ $2^{-54}$ S | complete of 1 to input $2^{-53}$ $2^{-54}$ S | RN, RP(+),RM(-) Cin | RP(-), RM(+),RZ Cin |
|---|---|---|---|---|
| 0 0 0 | 0 0 0 | 1 1 1 | 1 | 1 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 0 | 0 |
| 1 0 0 | 1 0 0 | 0 1 1 | 1 | 1 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 0 | 0 |

# Fig. 8

## (a)

```
┌─────────────────┐
│   alignment     │
└─────────────────┘
         │
         ▼
┌─────────────────┐
│  addition  and  │
│  substraction   │
└─────────────────┘
         │
         ▼
┌─────────────────┐
│   normalize     │
└─────────────────┘
         │
         ▼
┌─────────────────┐
│  round 1 bit    │
│     shift       │
└─────────────────┘
         │
         ▼
      ( end )
```

## (b)

```
┌─────────────────┐
│   alignment     │
└─────────────────┘
         │
         ▼
┌───────────────────────────────┐
│  addition  and  substraction  │
│  round, 1 bit  shift          │
└───────────────────────────────┘
         │
         ▼
      ( end )      ┌──────────┐   ┌──────────┐
                   │ re-round │   │ normalize│
                   └──────────┘   └──────────┘
                          │
                          ▼
                       ( end )
```

EP 0 820 005 B1

## Fig. 9(a)

$n$ ---no addition

$*$ ---don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add substract | $2^{-24}$ $n$ | $2^{-24}$ $2^{-25}$ |
| | RP | $+$ | add substract | $2^{-24}$ $n$ | $2^{-24}$ $2^{-25}$ |
| | | $-$ | $*$ | $n$ | $n$ |
| | RM | $+$ | $*$ | $n$ | $n$ |
| | | $-$ | add substract | $2^{-24}$ $n$ | $2^{-24}$ $2^{-25}$ |
| | RZ | $*$ | $*$ | $n$ | $n$ |
| 1 | $*$ | $*$ | add | $2^{-24}$ | $2^{-24}$ |

## Fig. 9(b)

$n$ --- no addition

$*$ --- don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add substract | $2^{-53}$ $n$ | $2^{-53}$ $2^{-54}$ |
| | RP | $+$ | add substract | $2^{-53}$ $n$ | $2^{-53}$ $2^{-54}$ |
| | | $-$ | $*$ | $n$ | $n$ |
| | RM | $+$ | $*$ | $n$ | $n$ |
| | | $-$ | add substract | $2^{-53}$ $n$ | $2^{-53}$ $2^{-54}$ |
| | RZ | $*$ | $*$ | $n$ | $n$ |
| 1 | $*$ | $*$ | add | $2^{-53}$ | $2^{-53}$ |

# Fig. 10

| order | exponential size | data 1 code | data 2 code | real operation | code of operation result | remarks |
|---|---|---|---|---|---|---|
| addition | $e_1 = e_2$ | + | + | add | + | $f_1 + f_2$ |
| | | + | − | substract | (x1) | $f_1 - f_2$ |
| | | − | + | substract | (x1) | $f_2 - f_1$ |
| | | − | − | add | − | $-(f_1 + f_2)$ |
| | $e_1 < e_2$ | + | + | add | + | $f'_1 + f_2$ |
| | | + | − | substract | − | $-(f_2 - f'_1)$ |
| | | − | + | substract | + | $f_2 - f'_1$ |
| | | − | − | add | − | $-(f'_1 + f_2)$ |
| | $e_1 > e_2$ | + | + | add | + | $f_1 + f'_2$ |
| | | + | − | substract | + | $f_1 - f'_2$ |
| | | − | + | substract | − | $-(f_1 - f'_2)$ |
| | | − | − | add | − | $-(f_1 + f'_2)$ |
| substraction | $e_1 = e_2$ | + | + | substract | (x1) | $f_2 - f_1$ |
| | | + | − | add | − | $-(f_2 + f_1)$ |
| | | − | + | add | + | $f_2 + f_1$ |
| | | − | − | substract | (x1) | $-(f_2 - f_1)$ |
| | $e_1 < e_2$ | + | + | substract | + | $f_2 - f'_1$ |
| | | + | − | add | − | $-(f_2 + f'_1)$ |
| | | − | + | add | + | $f_2 + f'_1$ |
| | | − | − | substract | − | $-(f_2 - f'_1)$ |
| | $e_1 > e_2$ | + | + | substract | − | $-(f_1 - f'_2)$ |
| | | + | − | add | − | $-(f_1 + f'_2)$ |
| | | − | + | add | + | $f_1 + f'_2$ |
| | | − | − | substract | + | $f_1 - f'_2$ |

$f_1$ : mantissa of data 1
$f_2$ : mantissa of data 2
$e_1$ : exponential of data 1
$e_2$ : exponential of data 2
$f_1'$ : data aligned $f_1$
$f_2'$ : data aligned $f_2$

(x) code of result after effective operation

*Fig. 11*

| ∠ R S | code of operation result | round addition signal | | | |
|---|---|---|---|---|---|
| | | RM | RP | RN | RΣ |
| 0 0 0 | + − | 0 | 0 | 0 | 0 |
| 0 0 1 | + − | 0 1 | 1 0 | 0 | 0 |
| 0 1 0 | + − | 0 1 | 1 0 | 0 | 0 |
| 0 1 1 | + − | 0 1 | 1 0 | 1 | 0 |
| 1 0 0 | + − | 0 | 0 | 0 | 0 |
| 1 0 1 | + − | 0 1 | 1 0 | 0 | 0 |
| 1 1 0 | + − | 0 1 | 1 0 | 1 | 0 |
| 1 1 1 | + − | 0 1 | 1 0 | 1 | 0 |

*Fig. 12*

(a)

```
  ∠ R
  1 1
+)  1
 ‾‾‾‾
  0 0
  carry 1
```

(b)

```
  ∠ R
  0 1
+)  1
 ‾‾‾‾
  1 0
  carry O
```

(c)

```
  R S
  0 0
+) 1 1
 ‾‾‾‾
  1 1
carry O
```

(d)

```
  R S
  0 1
+) 1 1
 ‾‾‾‾
  0 0
carry 1
```

(e)

```
  R S
  1 0
+) 1 1
 ‾‾‾‾
  0 1
carry 1
```

(f)

```
  R S
  1 1
+) 1 1
 ‾‾‾‾
  1 0
carry 1
```

$F\ i\ g.\quad 13(a)$

$$\begin{cases} L = D_1 \\ R = G' \\ S = R' + S' \end{cases} \quad (1)$$

$$\begin{cases} L = D_2 \\ R = D_1 \\ S = G' + R' + S' \end{cases} \quad (2)$$

$F\ i\ g.\quad 13(b)$

$$\begin{cases} L = G'' \\ R = R'' \\ S = S'' \end{cases} \quad (3)$$

$$\begin{cases} L = D_1 \\ R = G'' \\ S = R'' + S'' \end{cases} \quad (4)$$

wherein $G''R''S'' = \overline{G'R'S'} + 1$

Fig. 14

EP 0 820 005 B1

# Fig. 15

upper rank ——— 27

26 ——— lower rank

0

27

SEL

227

rank selection circuit

53

27

# Fig. 16

54 bits

| 0 — — — — 0 | 1 | 0 — — — — — — 0 |  round addition value A

24

| 0 | 1 | 0 — — — — — — — — — 0 |  round addition value B

| 0 — — — — — — — — — 0 | 1 |  round addition value C

Fig. 17(a)

| $Z_{22}$ | $Z_{23}$ | $Z_{24}$ | $Z_{51}$ | $Z_{52}$ | $Z_{53}$ | S | Cout | correction signal | round addition signal |
|---|---|---|---|---|---|---|---|---|---|
| 0 | 0 | 0 | * | * | * | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 0 | 0 | 1 | * | * | * | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 0 | 1 | 0 | * | * | * | 0 | 0 | 1 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 0 | 1 | 1 | * | * | * | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 1 | 0 |
| 1 | 0 | 0 | * | * | * | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 1 | 0 | 1 | * | * | * | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 1 | 1 | 0 | * | * | * | 0 | 0 | 1 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| 1 | 1 | 1 | * | * | * | 0 | 0 | 0 | 0 |
|   |   |   |   |   |   | 0 | 1 | 0 | 1 |
|   |   |   |   |   |   | 1 | 0 | 0 | 0 |
|   |   |   |   |   |   | 1 | 1 | 0 | 1 |

# Fig. 17(b)

| $Z_{22}$ | $Z_{23}$ | $Z_{24}$ | $Z_{51}$ | $Z_{52}$ | $Z_{53}$ | S | Cout | correction signal | round addition signal |
|---|---|---|---|---|---|---|---|---|---|
| * | * | * | 0 | 0 | 0 | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 0 | 0 | 1 | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 0 | 1 | 0 | 0 | 0 | 1 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 0 | 1 | 1 | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 1 | 0 |
| * | * | * | 1 | 0 | 0 | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 1 | 0 | 1 | 0 | 0 | 0 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 1 | 1 | 0 | 0 | 0 | 1 | 0 |
|   |   |   |   |   |   | 0 | 1 | 0 | 0 |
|   |   |   |   |   |   | 1 | 0 | 0 | 0 |
|   |   |   |   |   |   | 1 | 1 | 0 | 0 |
| * | * | * | 1 | 1 | 1 | 0 | 0 | 0 | 0 |
|   |   |   |   |   |   | 0 | 1 | 0 | 1 |
|   |   |   |   |   |   | 1 | 0 | 0 | 0 |
|   |   |   |   |   |   | 1 | 1 | 0 | 1 |

Fig. 18

step 1 | step 2 | insert step

exponential adder — addition bias correction → correction by normalize → detect

exception detector

multiplier — A · B — S.C

mantissa adder — S+C+round value A → addition of round value A — round addition (signal=1)

shift — 0 or 1 bit right (normalize)

mantissa correction — R23 correction

Fig. 19(a)

(A)

27 bits — 26 bits
| 1 | a₁ --- a₂₃ 0 0 0 | 0 ----- 0 |
| 1 | a₁ --- a₂₃ 0 0 0 |

(B)

27 bits — 26 bits
| 1 | b₁ --- b₂₃ 0 0 0 | 0 ----- 0 |
| 1 | b₁ --- b₂₃ 0 0 0 |

Fig. 19(b)

54 bits

S₁    | 0 ---- 0 |     sum output of A and B

C₁    | 0 ---- 0 |     carry output of A and B

+) Round-A    | 0 ---- 0 1 b ---- 0 |     round addition value A

Cout    | Z₋₁ Z₀ Z₁ --- Z₂₂ Z₂₃ Z₂₄ Z₂₅ --- Z₄₆ 0 --- 0 |

shift    correction control    S generation

{ Z₋₁ = 0    | Z₀ Z₁ ---- Z₂₃ Z₂₄ Z₂₅ --- Z₄₆ 0 --- 0 |

  Z₋₁ = 1    | Z₁ Z₀ --- Z₂₂ Z₂₃ Z₂₄ ---- Z₄₆ 0 --- 0 |
             R₀ R₁ --- R₂₃ R₂₄ R₂₅ ----
             = correction bits

( 1 bit right shift )

correction bits

(step 2)

## Fig. 20

| | step 1 | step 2 | step 3 | step 4 | step 5 | insertion step |
|---|---|---|---|---|---|---|
| exponential adder | addition bias correction | → | | | correction by normalize | |
| exception detector | | | | | detect | |
| multiplier | $A_L \cdot B_L$ | $A_L \cdot B_U$ | $A_U \cdot B_L$ | $A_U \cdot B_U$ | | |
| | | $S_1, C_2$ | $S_2, C_2$ | $S_3, C_3$ | $S_4, C_4$ | |
| mantissa adder | | $S_1 + C_1 =$ round value B | shift output $+ S_2 + C_2$ | shift output $+ S_3 + C_3$ | shift output $+ S_4 + C_4$ | addition of round value C |
| shift | | 26 bits right | 0 bit | 26 bits right | 0 or 1 bit right (normalize) | (round addition signal = 1) |
| mantissa correction | | | | | R52 correction | |

EP 0 820 005 B1

*Fig. 21 (a)*

| ←— 27 bits —→ | ←— 26 bits —→ |
|---|---|

| 1 | $a_1$ ---- $a_{26}$ | $a_{27}$ ---- $a_{52}$ |
|---|---|---|

| 1 | $a_1$ ---- $a_{26}$ | (Au) |
|---|---|---|

| ←— 27 bits —→ |
|---|

| o | $a_{27}$ ---- $a_{52}$ | (AL) |
|---|---|---|

| ←— 27 bits —→ | ←— 26 bits —→ |
|---|---|

| 1 | $b_1$ ---- $b_{26}$ | $b_{27}$ ---- $b_{52}$ |
|---|---|---|

| 1 | $b_1$ ---- $b_{26}$ | (BU) |
|---|---|---|

| ←— 27 bits —→ |
|---|

| o | $b_{27}$ ---- $b_{52}$ | (BL) |
|---|---|---|

## Fig. 21 (b)

## Fig. 22

# Fig. 23

|  | step 1 | step 2 |
|---|---|---|
| exponential substractor | substraction bias correction | correction by normalize |
| exception detector |  | detection |
| mantissa operation | divid, round normalize | |

*Fig. 24*

# Fig. 25

## Fig. 26

|← —— 54 bits —— →|

```
| 0 ----- 0 | 1 | 0 ------- 0 |     round addition value D
```
|← 23 →|

```
| 0 --------- 0 | 1 | 0 |         round addition value E
```

## Fig. 27

|                        | step 1 | step 2 | step 3 | step 4 |
|------------------------|--------|--------|--------|--------|
| exponential adder      | addition | bias correction | correction by normalize | correction by normalize |
| multiplier             | A — B  | | | |
| product generate adder | | S + C | | |
| mantissa adder         | | | (S + C) + O | addition of round value D |
| shift                  | | | O or I bit right (normalize) | O or bit right (normalize) |

S,C

(S+C)

EP 0 820 005 B1

EP 0 820 005 B1

# Fig. 28

|  | step 1 | step 2 | step 3 | step 4 | step 5 | step 6 | step 7 |
|---|---|---|---|---|---|---|---|
| exponential adder | adder | bias correction | → | | → | correction by normalize | correction by normalize |
| multiplier | $AL \cdot BL$ | $AL \cdot BU$ | $AU \cdot BL$ | $AU \cdot BU$ | | | |
| product generate adder |  | $S_1, C_1$ / $S_1 + C_1$ | $S_2, C_2$ / $S_2 + C_2$ | $S_3, C_3$ / $S_3 + C_3$ | $S_4, C_4$ / $S_4 + C_4$ | | |
| mantissa adder |  |  | $(S_1+C_1)$ / $(S_1+C_1)+0$ | $(S_2+C_2)$ / $(S_2+C_2)+$ shift output | $(S_3+C_3)$ / $(S_3+C_3)+$ shift output | $(S_4+C_4)$ / $(S_4+C_4)+$ shift output | addition of round value E |
| shift |  |  | 26 bits right | 0 bit | 26 bits right | 0 or 1 bit right (normalize) | 0 or 1 bit right (normalize) |